# EUROPEAN PATENT APPLICATION

(11) **EP 4 799 742 A1**
(43) Date of publication of application: **02.09.2026**
(21) Application number: 24882518.4
(22) Date of filing: 25.10.2024
(51) Int. Cl.: B06B 1/04, G06F 3/01, G06F 3/0354

(54) **VIBRATION ACTUATOR AND CONTACT-TYPE INPUT DEVICE**

(30) Priority: 27.10.2023 JP 2023184892; 14.06.2024 JP 2024096915
(71) Applicant: Minebea Mitsumi Inc., Kitasaku-gun, Nagano 3890293 (JP)
(72) Inventor: TAKAHASHI, Yuki, Tama-shi, Tokyo 206-8567 (JP); SAKAGUCHI, Kazutaka, Tama-shi, Tokyo 206-8567 (JP); ISHITANI, Tomoya, Tama-shi, Tokyo 206-8567 (JP); SATO, Soichi, Tama-shi, Tokyo 206-8567 (JP); KINOSHITA, Yosuke, Tama-shi, Tokyo 206-8567 (JP)
(74) Representative: Epping - Hermann - Fischer
(86) International application number: PCT/JP2024/038188
(87) International publication number: WO 2025/089410

(57) **Abstract**

A vibration actuator according to the present invention includes: an electromagnet formed by laminating a flat annular coil on a plate surface of a plate-shaped magnetic core; a magnetic member having a lower surface facing the coil from above; a spacer disposed on the lower surface at the outside of the coil and separating the magnetic member and the electromagnet in a vertical direction; and an elastic support part disposed outside the coil and connecting the magnetic core and the spacer. As a result of a magnetic force being generated by energization of the coil, one of the magnetic member and the electromagnet is displaced so as to approach the other to vibrate.

## Description

### Technical Field

The present invention relates to a vibration actuator and a contact-type input device including the vibration actuator.

### Background Art

In the related art, a configuration is known in which vibration is imparted, by a vibration actuator, as a tactile operational sensation (a sensation of operating by touch) to a finger pad or the like of an operator who touches a display screen displayed on a touch panel that is a sensing panel (see Patent Literature (hereinafter, referred to as "PTL") 1).

PTL 1 discloses a mobile terminal device in which a vibration actuator is attached to a back surface of a touch panel via a vibration transmission section. In the vibration actuator of the device, a mover is disposed to be movable back and forth along a guide shaft that is disposed perpendicular to the touch panel in a housing fixed to the vibration transmission section. In the vibration actuator, although an impact sound may be generated by causing the mover to collide with the housing in response to an operation on the touch panel, vibration is imparted, via the vibration transmission section, to a fingertip pad that is in contact with the touch panel.

### Citation List

### Patent Literature

PTL 1
Japanese Patent Application Laid-Open No. 2015-070729

### Summary of Invention

### Technical Problem

In the vibration actuator of PTL 1, the mover is moved back and forth along the guide shaft that is disposed perpendicular to the display surface of the touch panel, so that the device itself has a length perpendicular to the display surface, that is, a thickness.

In this configuration, a predetermined thickness of an arrangement space is required on the back surface side of the touch panel, and the mobile terminal device including the touch panel itself becomes large, which makes it difficult to achieve miniaturization and thinning. In recent years, with the miniaturization and thinning of devices, there is a demand for the miniaturization and thinning of vibration actuators mounted on the devices.

Objectives of the present invention include providing a vibration actuator and a contact-type input device that suitably vibrate while achieving thinning and higher output.

### Solution to Problem

A vibration actuator of the present invention is configured to include:
an electromagnet including a flat annular coil stacked on a plate surface of a plate-shaped magnetic core;
a magnetic member having a lower surface facing the flat annular coil from above;
a spacer disposed on the lower surface outside the flat annular coil, and configured to separate the magnetic member from the electromagnet in an up-down direction; and
an elastic supporting part disposed outside the flat annular coil and configured to connect the plate-shaped magnetic core to the spacer, in which
one of the magnetic member or the electromagnet is displaced to vibrate so as to approach the other by a magnetic force generated by energization of the flat annular coil.

A contact-type input device is configured to include:
the vibration actuator having the above configuration that is disposed on a back surface of an operation surface and is driven in response to an operation on the operation surface.

### Advantageous Effects of Invention

According to the present invention, suitable vibration is achieved while achieving thinning and higher output.

### Brief Description of Drawings

[FIG. 1] FIG. 1 is an external perspective view of a vibration actuator according to Embodiment 1 of the present invention.
[FIG. 2] FIG. 2 is a view of the vibration actuator in FIG. 1 with a magnetic yoke removed.
[FIG. 3] FIG. 3 is a sub-assembly view of the vibration actuator.
[FIG. 4] FIG. 4 is an exploded perspective view of the vibration actuator.
[FIG. 5] FIG. 5 is a partial sectional view of the vibration actuator.
[FIG. 6] FIG. 6 is a view showing an operation when a magnetic body is moved in the vibration actuator.
[FIG. 7] FIG. 7 is a view showing an operation when an electromagnet section side is moved in the vibration actuator.
[FIG. 8] FIG. 8 is a diagram showing an example of a drive circuit.
[FIG. 9] FIG. 9 is a diagram showing an example of an operation signal.
[FIG. 10A] FIG. 10A is a partial sectional view showing a flow of internal air in an excited state.
[FIG. 10B] FIG. 10B is a view showing a flow of internal air in an unexcited state.
[FIG. 11A] FIG. 11A is a view showing a displacement of a movable part of the present embodiment.
[FIG. 11B] FIG. 11B is a view showing a displacement of a movable part having a configuration without an air vent section.
[FIG. 12] FIG. 12 is an external perspective view showing a state in which a magnetic yoke is removed from a vibration actuator according to Embodiment 2 of the present invention.
[FIG. 13] FIG. 13 is a sub-assembly view of the vibration actuator.
[FIG. 14] FIG. 14 is an exploded perspective view of the vibration actuator.
[FIG. 15] FIG. 15 is a partial sectional view of the vibration actuator.
[FIG. 16] FIG. 16 is a view showing an operation when a magnetic body is moved in the vibration actuator.
[FIG. 17] FIG. 17 is a view showing an operation when an electromagnet section side is moved in the vibration actuator.
[FIG. 18] FIG. 18 is an external perspective view showing a state in which a magnetic yoke is removed from a vibration actuator according to Embodiment 3 of the present invention.
[FIG. 19] FIG. 19 is a sub-assembly view of the vibration actuator.
[FIG. 20] FIG. 20 is an exploded perspective view of the vibration actuator.
[FIG. 21] FIG. 21 is an external perspective view showing a state in which a magnetic yoke is removed from a vibration actuator according to Embodiment 4 of the present invention.
[FIG. 22] FIG. 22 is a sub-assembly view of the vibration actuator.
[FIG. 23] FIG. 23 is an exploded perspective view of the vibration actuator.
[FIG. 24] FIG. 24 is an external perspective view of a vibration actuator according to Embodiment 5 of the present invention.
[FIG. 25] FIG. 25 is a sub-assembly view of the vibration actuator.
[FIG. 26] FIG. 26 is an exploded perspective view of the vibration actuator.
[FIG. 27] FIG. 27 is a diagram illustrating a variation of a vibration actuator according to an embodiment of the present invention.
[FIG. 28] FIG. 28 is an external perspective view of a vibration actuator according to Embodiment 6 of the present invention.
[FIG. 29] FIG. 29 is a sub-assembly view of the vibration actuator.
[FIG. 30] FIG. 30 is an exploded perspective view of the vibration actuator.
[FIG. 31A] FIG. 31A is a partial sectional view showing a flow of internal air in an excited state.
[FIG. 31B] FIG. 31B is a view showing a flow of internal air in an unexcited state.
[FIG. 32] FIG. 32 is a sub-assembly view of the vibration actuator according to Embodiment 7 of the present invention.
[FIG. 33] FIG. 33 is an exploded perspective view of the vibration actuator.
[FIG. 34A] FIG. 34A is a partial sectional view showing a flow of internal air in an excited state.
[FIG. 34B] FIG. 34B is a view showing a flow of internal air in an unexcited state.
[FIG. 35] FIG. 35 is an external perspective view of a vibration actuator according to Embodiment 8 of the present invention.
[FIG. 36] FIG. 36 is a partial sectional view taken along line R-R of FIG. 35 in a direction of an arrow.
[FIG. 37] FIG. 37 is a sub-assembly view of the vibration actuator.
[FIG. 38] FIG. 38 is an exploded perspective view of the vibration actuator.
[FIG. 39A] FIG. 39A is a partial sectional view showing a flow of internal air in an excited state.
[FIG. 39B] FIG. 39B is a view showing a flow of internal air in an unexcited state.
[FIG. 40] FIG. 40 is a diagram illustrating an example of a contact-type input device including the vibration actuator.
[FIG. 41] FIG. 41 is an external perspective view of a vibration actuator according to Embodiment 9 of the present invention.
[FIG. 42] FIG. 42 is an exploded perspective view of the vibration actuator.
[FIG. 43] FIG. 43 is a plan view of the vibration actuator.
[FIG. 44] FIG. 44 is a plan view showing an internal configuration of the vibration actuator.
[FIG. 45] FIG. 45 is a bottom view of the vibration actuator.
[FIG. 46] FIG. 46 is an exploded perspective view showing a main part of a basic configuration of the vibration actuator.
[FIG. 47] FIG. 47 is a side sectional view showing wiring of an FPC of the vibration actuator.
[FIG. 48] FIG. 48 is an external perspective view of Variation 1 of a vibration actuator according to Embodiment 9 of the present invention.
[FIG. 49] FIG. 49 is an external perspective view of Variation 2 of a vibration actuator according to Embodiment 9 of the present invention.
[FIG. 50] FIG. 50A is an external perspective view of Variation 1 of a vibration actuator according to Embodiment 10 of the present invention, FIG. 50B is an external perspective view of Variation 2 of the vibration actuator according to Embodiment 10 of the present invention, and FIG. 50C is an external perspective view of Variation 3 of the vibration actuator according to Embodiment 10 of the present invention.
[FIG. 51] FIGS. 51A and 51B are schematic diagrams showing a flow of internal air during suction and when suction is released in the vibration actuator according to Embodiment 10 of the present invention.
[FIG. 52] FIGS. 52A and 52B are schematic diagrams showing a flow of internal air during suction and when suction is released in a configuration without an air hole in the vibration actuator.
[FIG. 53] FIG. 53 is an external perspective view of a vibration actuator according to Embodiment 11 of the present invention.
[FIG. 54] FIG. 54 is an exploded perspective view of the vibration actuator.
[FIG. 55] FIG. 55 is an exploded perspective view of the vibration actuator according to Embodiment 12 of the present invention.
[FIG. 56] FIG. 56 is an exploded perspective view of the vibration actuator according to Embodiment 13 of the present invention.
[FIG. 57] FIG. 57 is an external perspective view of a vibration actuator according to Embodiment 14 of the present invention.
[FIG. 58] FIG. 58 is an exploded perspective view of the vibration actuator.
[FIG. 59] FIG. 59 is a side view of an attachment structure of the vibration actuator.
[FIG. 60] FIG. 60 is an external perspective view of a vibration actuator according to Embodiment 15 of the present invention.
[FIG. 61] FIG. 61 is an exploded perspective view of the vibration actuator.
[FIG. 62] FIG. 62 is a side sectional view of the vibration actuator.
[FIG. 63] FIG. 63 is an exploded perspective view of the vibration actuator according to Embodiment 16 of the present invention.
[FIG. 64] FIG. 64 is an external perspective view showing an internal configuration of the vibration actuator.
[FIG. 65] FIG. 65 is an external perspective view of a vibration actuator according to Embodiment 17 of the present invention.
[FIG. 66] FIG. 66 is an external perspective view showing a mounting relationship between a coil and a core section in an electromagnet section.
[FIG. 67] FIG. 67 is an external perspective view showing a mounting relationship between a coil and a core section in an electromagnet section.
[FIG. 68] FIG. 68 is a plan view of a board section to which a coil is attached.
[FIG. 69] FIG. 69 is a diagram showing an example of a configuration of the board section shown in FIG. 68.

### Description of Embodiments

Hereinafter, each embodiment of the present invention will be described in detail with reference to the drawings.

In each embodiment, a Cartesian coordinate system (X, Y, Z) is used for description. The same orthogonal coordinate system (X, Y, Z) is also used for illustration of belowmentioned figures. Hereinafter, when a vibration actuator is applied to a contact-type input device (also referred to as a vibration presentation device or an operation input device) in which an operator inputs information by making contact, the vibration actuator has lengths in the X direction, the Y direction, and the Z direction corresponding to the width, depth, and height of the contact-type input device. Further, the positive side in the Z-direction is the direction in which vibration feedback is applied to the operator, and will be referred to as the "planar side" (or "upper side"), and the negative side in the Z-direction is the direction in which the operator presses when operating, and will be described as the "bottom surface side" (or "lower side"). In addition, the "radial direction" is synonymous with the XY direction centered on the central axis along the Z direction in the vibration actuator, and is also referred to as a direction along the plate surface. In each of the components constituting vibration actuator, a surface on a "planar side" (or an "upper side") is described as a "front surface" (or an "upper surface"), and a surface on a "back surface side" (or a "lower side") is described as a "back surface" (or a "lower surface"). When the posture of the vibration actuator or the contact-type input device is changed, the interpretation should be changed according to the change in posture.

### (Embodiment 1)

### < Overall Configuration of Vibration Actuator 10 >

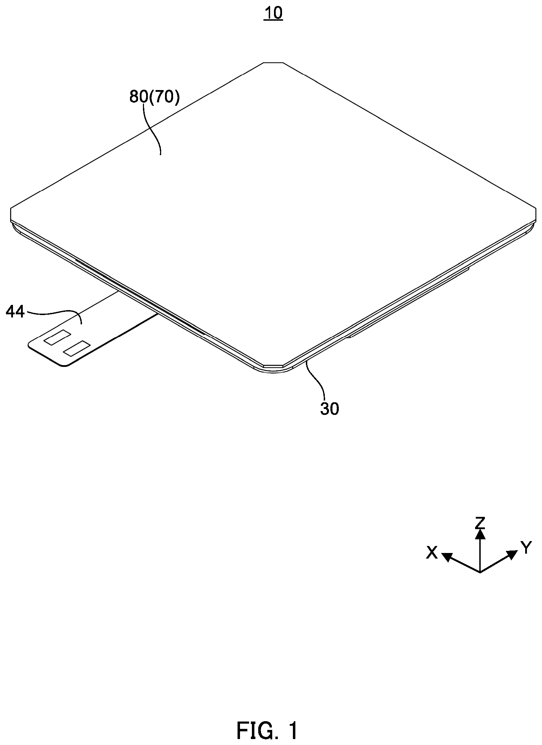

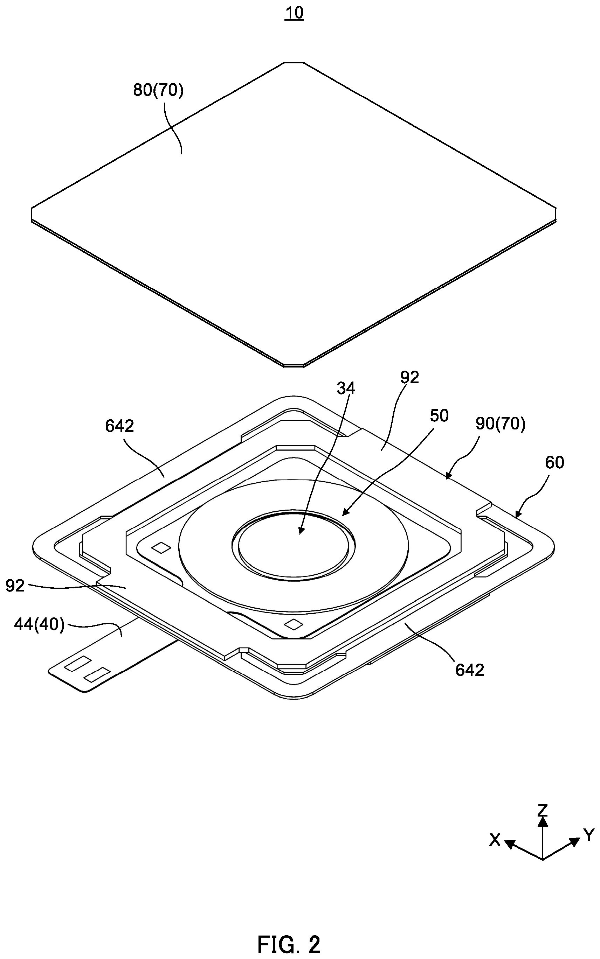

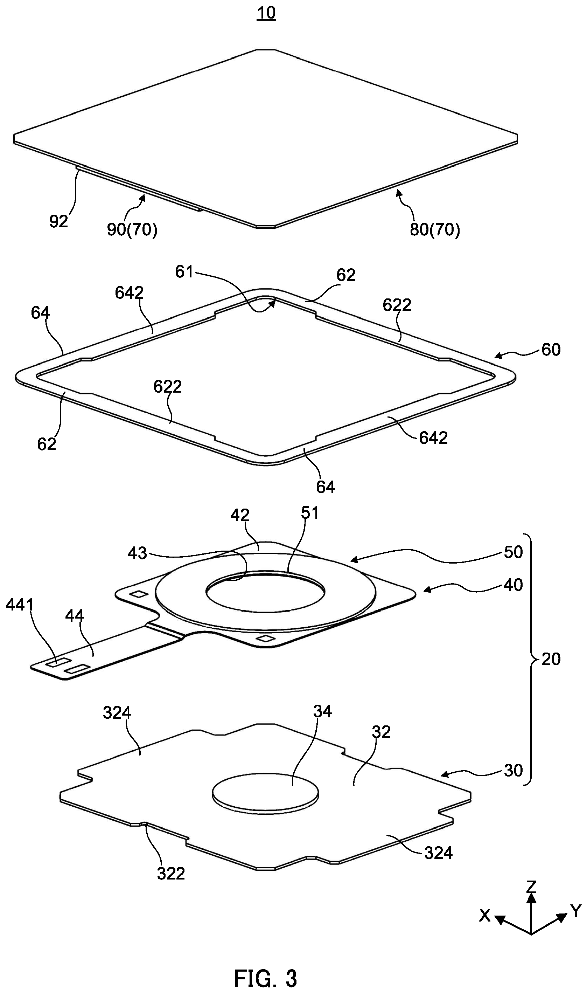

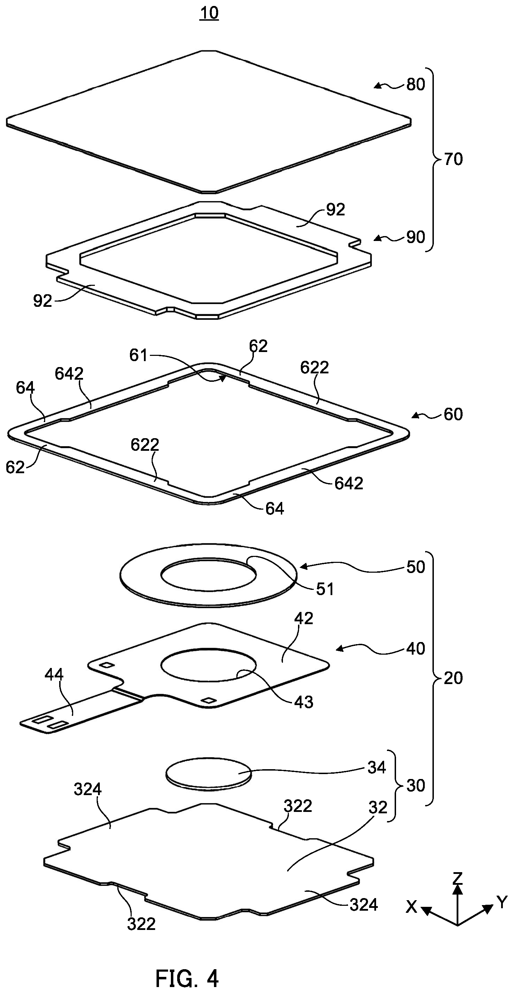

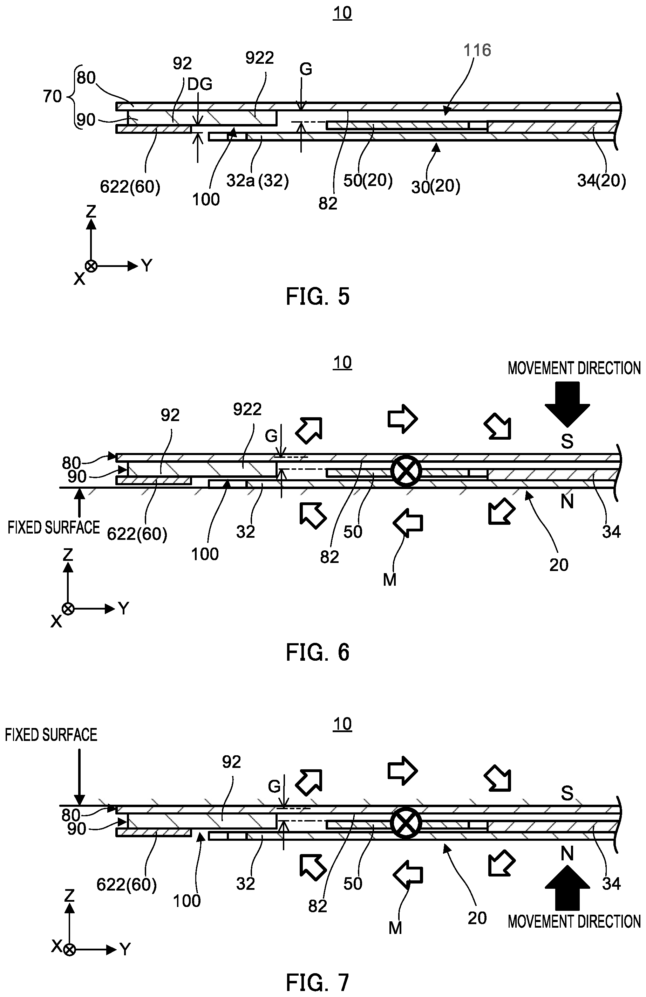

FIG. 1 is an external perspective view of vibration actuator 10 according to Embodiment 1 of the present invention. FIG. 2 is a view of vibration actuator 10 in FIG. 1 with the magnetic yoke removed. FIG. 3 is a sub-assembly view of the vibration actuator. FIG. 4 is an exploded perspective view of the vibration actuator 10. FIG. 5 is a partial sectional view of the vibration actuator 10.

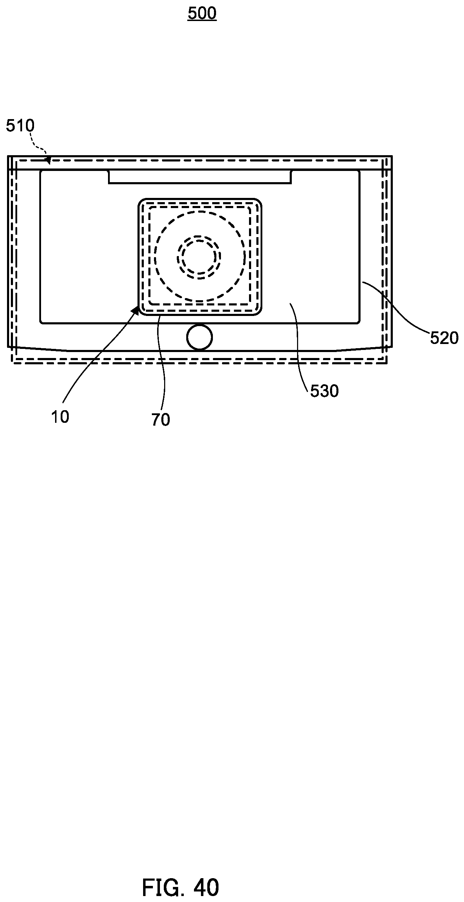

Vibration actuator 10 is used, for example, in vibration presentation device 500 (see trackpad shown in FIG. 40) as a contact-type input device having an operation device (see pad body 510 shown in FIG. 40 in the present embodiment) as a vibration presentation section (operation surface) on which an operator performs a touch operation.

Vibration actuator 10 can impart, by vibrating the operation device, a tactile operational sensation (also referred to as a "tactile sensation" or a "sense of force") to the operator who operates the operation device by contacting the operation device in accordance with applications or use cases of the operation device.

Vibration actuator 10 is a thin vibration actuator having a flat plate or a thin plate shape, and is disposed on a back surface side of the operation device in a thickness direction such that the operation device can be vibrated in the thickness direction when a Z direction and a -Z direction are set as the thickness direction.

Vibration actuator 10 includes electromagnet section 20 including magnetic core body 32, magnetic pole portion 34, and flat annular (annular plate-shaped) coil 50, magnetic body 70 including magnetic yoke 80, and elastic supporting part 60 that connects electromagnet section 20 and magnetic body 70. Electromagnet section 20 and magnetic body 70 generate a magnetic attraction force by energizing coil 50. Elastic supporting part 60 supports one of electromagnet section 20 and magnetic body 70 to be displaceable in the thickness direction such that the one approaches the other. That is, vibration actuator 10 vibrates by being displaced such that one of magnetic body 70 (magnetic yoke 80) and electromagnet section 20 approaches the other by a magnetic force generated by energizing coil 50.

In vibration actuator 10, coil 50 in electromagnet section 20 is provided in board section 40. Note that vibration actuator 10 can be connected to a vibration presentation section that receives a pressing operation of a user via one of electromagnet section 20 and magnetic body 70.

Vibration actuator 10 vibrates by moving one of electromagnet section 20 and magnetic body 70 in a Z direction, specifically in an approach direction and a separation direction relative to the other, and imparts the vibration to the operation device to which vibration actuator 10 is attached as an operation feeling.

As described above, vibration actuator 10 is formed in a flat plate shape, and one of electromagnet section 20 and magnetic body 70 functions as a movable part, and is caused to be moved and approach the other, which serves as a fixed part, in one direction in the stacking direction. In addition, the two members approaching each other are moved in opposite directions away from each other and separated by a reaction force of elastic supporting part 60, so that vibration actuator 10 generates vibration.

### < Electromagnet Section 20 >

Electromagnet section 20 includes core section 30 and coil 50 that are formed in a thin plate shape and are excited to be magnetized in the thickness direction (Z direction), and board section 40. Core section 30 is configured such that magnetic pole portion 34 is disposed on an upper surface of a central portion of magnetic core body 32, which is a plate of a magnetic body. That is, electromagnet section 20 is formed by stacking flat annular coil 50 on the plate surface of plate-shaped magnetic core body 32. In addition, magnetic core body 32 and magnetic pole portion 34 constitute a magnetic core.

Magnetic core body 32 is a flat plate-shaped magnetic body, and an outer edge portion thereof includes cutout portion 322 that releases a part of board section 40 and connection fixing portion 324 to which a part of elastic supporting part 60 is fixed. The outer edge portion of magnetic core body 32 is surrounded by elastic supporting part 60 fixed to connection fixing portion 324 on the outside thereof.

Magnetic core body 32 is formed of, for example, a magnetic body such as a silicon steel sheet or a Steel Electrolytic Cold Commercial (SECC) steel sheet.

Cutout portion 322 and connection fixing portion 324 in magnetic core body 32 are formed respectively in adjacent sides of an outer periphery in rectangular magnetic core body 32. In addition, cutout portion 322 may also be formed on a side of the outer periphery opposite to a side on which cutout portion 322 is provided. In addition, connection fixing portion 324 is formed on a side of the outer periphery opposite to a side on which connection fixing portion 324 is provided, and elastic supporting part 60 is symmetrically supported by the pair of connection fixing portions 324 with coil 50 as the center.

Magnetic core body 32 may be fixed as a fixed surface fixed to a housing of a mounting target object (for example, a product). On the other hand, when magnetic body 70 is fixed and magnetic core body 32 is movable, magnetic core body 32 also functions as a weight.

Magnetic pole portion 34 is a flat disk-shaped magnetic body having a length in the radial direction longer than a thickness. Magnetic pole portion 34 is connected to magnetic core body 32 on magnetic core body 32 and is surrounded by coil 50. Magnetic pole portion 34 is magnetized together with magnetic core body 32 by energizing coil 50, and front and back surfaces become magnetic pole surfaces through which magnetic flux flows in the up-down direction, that is, the thickness direction.

Coil 50 is formed in a flat annular shape having a length in the radial direction longer than a length of the thickness. Coil 50 is disposed on magnetic core body 32 via board section 40. Coil 50 is disposed to surround magnetic pole portion 34, and an axis of coil 50 coincides with an axis of magnetic pole portion 34. Coil 50 has an annular shape and does not have an edge portion in which variation is likely to occur, and thus has stable characteristics and high manufacturability.

Coil 50 may be configured in any manner as long as it is formed in a thin (flat) annular shape, and may be formed of, for example, polyUrethane Enameled copper Wire (UEW). Coil 50 is connected to the wiring of board section 40 by coil windings at both ends. The magnetic poles may be disposed on the outer side of coil 50 in the radial direction, that is, on the outer peripheral portion of coil 50, and when electromagnet section 20 is to be movable, a weight may be disposed on the outer peripheral portion of coil 50 in magnetic core body 32. Coil 50 may be a normal wound coil such as an air-core coil in which coil windings (UEW) at both ends are led out from the inside of an annular coil body, or may be configured with a so-called alpha winding in which coil windings at both ends protrude from the outer periphery of the coil body.

Board section 40 supplies power to coil 50. Board section 40 is formed in a film shape. Board section 40 is, for example, a Flexible Printed Circuit (FPC), and is formed by providing copper, which is a conductive foil, on a polyimide (PI) film, and is designed to have low elasticity to avoid an influence on the characteristics of the spring that serves as elastic supporting part 60. Board section 40 includes board body (insulation section, for example, insulating film) 42 provided with opening portion 43, and extending portion 44 that extends from a part of the outer periphery of board body 42.

Board section 40 includes an interconnection section connected to coil 50. The interconnection section is connected to land 441 disposed at a distal end portion of extending portion 44. Coil 50 is electrically connected to an external device via land 441. Board section 40 integrally forms an insulation section and an interconnection section, which is a conductive portion, using an FPC, and has the functions of both.

Board body 42 is entirely attached to magnetic core body 32 in a state in which magnetic pole portion 34 is disposed in opening portion 43. Coil 50 is disposed on board body 42 such that opening portion 51 of coil 50 is positioned corresponding to opening portion 43. Board body 42 is interposed between magnetic core body 32 and coil 50, and functions as an insulating film (insulator) that insulates magnetic core body 32 from coil 50.

Extending portion 44 is disposed in cutout portion 322 and extends outward within the thickness of magnetic core body 32 by being bent. By disposing extending portion 44 in cutout portion 322, the thickness of extending portion 44 can be absorbed by the plate thickness of magnetic core body 32, which contributes to the thinning of entire vibration actuator 10.

Board section 40 is disposed by being positioned on magnetic core body 32 such that opening portion 43 is positioned on the outer peripheral side of magnetic pole portion 34 already provided on magnetic core body 32, and extending portion 44 is disposed to extend below board body 42 via cutout portion 322.

Board section 40 is a Flexible Printed Circuit (FPC) and has an insulation function and a conduction function (by interconnection section) to coil 50, and thus it is possible to avoid dielectric breakdown, improve the routing of the wiring for supplying power to the coil, and suppress coil disconnection. In addition, when connection is made using a connector or the like, the connection can be easily made.

### < Elastic Supporting Part 60 >

Elastic supporting part 60 elastically supports electromagnet section 20 and magnetic body 70 by connecting electromagnet section 20 and magnetic body 70 to be relatively movable. Specifically, elastic supporting part 60 is disposed outside coil 50 and connects magnetic core body 32 to spacer 90.

Elastic supporting part 60 is a flat plate frame-shaped body formed of SUS or the like and elastically deformable, and is, for example, a leaf spring. Elastic supporting part 60 has a predetermined thickness (thickness in the Z direction) and is disposed in a layered shape between magnetic core body 32 and magnetic body 70 in the thickness direction (Z direction).

Elastic supporting part 60 has opening portion 61, is formed in a rectangular frame shape surrounding magnetic core body 32 and coil 50, is disposed outside magnetic core body 32, and is elastically deformed in the thickness direction (Z direction) on the outside. That is, a frame-shaped portion of elastic supporting part 60 formed by side portions 62 and 64 located outside magnetic core body 32 is elastically deformable in the Z direction, and electromagnet section 20 and magnetic body 70 are brought close to and separated from each other by the deformation, specifically, the deformation in which both are brought close to each other.

Elastic supporting part 60 has yoke-side connecting portion 622 on each of a pair of side portions 62 parallel to each other, and yoke-side connecting portions 622 are bonded to magnetic body 70 by stacking magnetic body 70 in the Z direction. Specifically, yoke-side connecting portions 622 of elastic supporting part 60 are connected to spacer joint portions 92 of spacer 90 of magnetic body 70. As a result, elastic supporting part 60 elastically supports the movable-part side at a pair of opposite side portions, and thus can support the movable-part side in a well-balanced manner and can allow the movable-part side to stably vibrate.

In addition, elastic supporting part 60 has core-side connecting portion 642 on each of the other pair of side portions 64 adjacent to each of the pair of side portions 62, and core-side connecting portions 642 are bonded to connection fixing portions 324 of magnetic core body 32 in a state of being stacked in the Z direction.

Yoke-side connecting portions 622 and core-side connecting portions 642 are planar bodies that protrude inward from side portions 62 and 64 constituting the frame-shaped portion of elastic supporting part 60. Yoke-side connecting portions 622 and core-side connecting portions 642 are connected to spacer joint portions 92 and connection fixing portions 324, respectively, in a state of making surface contact therewith in the Z direction at the side portions facing each other in elastic supporting part 60.

Yoke-side connecting portion 622 and core-side connecting portion 642 are disposed at positions rotated by 90 degrees with respect to each other in rectangular frame-shaped elastic supporting part 60, and are configured to have the same length and the same width. As a result, it is not necessary to determine the orientation of elastic supporting part 60 during assembly, and thus it is possible to improve the assemblability. In addition, since elastic supporting part 60 is a frame-shaped body, the spring length can be increased, and stable assemblability can be ensured. In addition, since elastic supporting part 60 is an integrated structure, the component accuracy can be improved.

Elastic supporting part 60 is disposed between the back surface of magnetic body 70, that is, the back surface of spacer 90, and the front surface of magnetic core body 32. This space, that is, the thickness of elastic supporting part 60, is a movable gap DG that defines the minimum distance between magnetic body 70 and electromagnet section 20 (hard stop portion gap that restricts the movement of magnetic body 70, that is, the maximum movable range of magnetic body 70).

In addition, the thickness of elastic supporting part 60 is set to set the distance between the magnetic poles (air gap G) of electromagnet section 20 and magnetic body 70, which is the vibration characteristic (amplitude), together with the thickness of spacer 90 and the thickness of magnetic pole portion 34 in vibration actuator 10. Note that each thickness means the "length in the Z direction". Since elastic supporting part 60, spacer 90, and magnetic pole portion 34 are disposed between magnetic core body 32 and magnetic yoke 80, which are flat plates, air gap G is set by the thickness of spacer 90 + the thickness of elastic supporting part 60 - the thickness of magnetic pole portion 34.

Elastic supporting part 60 is deformed in a region including the space between magnetic core body 32 and magnetic body 70 (specifically, spacer 90). Elastic supporting part 60 supports one of magnetic body 70 and electromagnet section 20 (specifically, magnetic core body 32) to be movable to approach the other from one to the other in a state of being balanced and perpendicular to the facing direction (vibration direction) with respect to the other.

In addition, as shown in FIG. 5, since elastic supporting part 60 is located in substantially the same layer as coil 50 and magnetic pole portion 34, the thickness of elastic supporting part 60 can be reduced compared to a configuration in which elastic supporting part 60 is stacked on coil 50 and magnetic pole portion 34, thereby achieving overall thinning. Elastic supporting part 60 is disposed at a position where it does not interfere with magnetic core body 32 on which coil 50 and magnetic pole portion 34 are disposed, and is deformed to be displaced in the Z direction.

In addition, for example, when magnetic body 70 is movable with respect to electromagnet section 20, the displacement amount and the natural frequency of magnetic body 70 can be determined by setting the spring constant Kₛₚ of elastic supporting part 60, and the resonance frequency can also be adjusted. In addition, when magnetic body 70 is driven (when movable), that is, when coil 50 is energized, displacement occurs, thereby generating a mechanical tactile sensation.

### < Magnetic Body 70 >

Magnetic body 70 includes magnetic yoke 80 and spacer 90 disposed on the lower surface of magnetic yoke 80.

### < Magnetic Yoke (Magnetic Member) 80 >

Magnetic yoke 80 is disposed to face electromagnet section 20 together with spacer 90, and is provided to be movable in a direction approaching electromagnet section 20, and the vibration actuator generates vibration by movement. Magnetic yoke 80 has lower surface 82 that faces coil 50 from above.

Magnetic yoke 80 is a flat plate-shaped magnetic body, and faces magnetic pole portion 34 in a surface-to-surface manner, and is attracted to magnetic pole portion 34 by a magnetic attraction force generated between magnetic pole portion 34 and magnetic yoke 80 by energizing coil 50. Magnetic yoke 80 is disposed to face magnetic core body 32, and is attracted to magnetic core body 32 by a magnetic attraction force generated between magnetic yoke 80 and an outer peripheral portion of magnetic pole portion 34 of magnetic core body 32.

Magnetic yoke 80 is composed of one plate-shaped magnetic body, and has a high planarity. Magnetic yoke 80 may be formed of, for example, a soft magnetic material such as a silicon steel sheet, a permalloy, or a ferrite. In addition, magnetic yoke 80 may be formed of electromagnetic stainless steel, a sintered material, a Metal Injection Molded (MIM) material, a laminated steel sheet, a Steel Electrolytic Cold Commercial (SECC) steel sheet, or the like. Magnetic yoke 80 is particularly preferably composed of a silicon steel sheet or SECC.

When magnetic core body 32 is fixed to a fixed surface or the like of a housing of a product, magnetic yoke 80 also functions as a weight on the movable-part side.

Since magnetic yoke 80 is a flat plate-shaped body with high planarity, magnetic yoke 80 can be disposed to face the entire magnetic pole surface of magnetic pole portion 34 with air gap G at equal intervals, the accuracy of air gap G surface can be improved, and the magnetic attraction force between magnetic yoke 80 and electromagnet section 20 can be effectively exhibited.

In addition, when magnetic yoke 80 is fixed to a housing or the like of a product, a flat surface functions as a mounting surface for the housing, and magnetic yoke 80 can be suitably fixed to the housing. When magnetic yoke 80 is provided in a movable target or a housing that movably supports the movable target, it is preferable that the vibration presentation section is attached to magnetic yoke 80 via a fixing material such as an adhesive, a fastening member, or a pressure-sensitive adhesive material. The shape of magnetic yoke 80 can be changed to adjust an airflow path flowing through air vent section 100, which will be described later.

Magnetic yoke 80 has a rectangular shape and is formed of, for example, a plate-shaped body having a square shape in plan view. Magnetic yoke 80 is joined to elastic supporting part 60 via spacer 90 (spacer joint portions 92) at the center of a pair of opposing side portions.

### < Spacer 90 >

Spacer 90 is for securing air gap G, which serves as a movable region of elastic supporting part 60. Spacer 90 is disposed on lower surface 82 of magnetic yoke 80 outside coil 50, and separates magnetic yoke 80 from electromagnet section 20 in the up-down direction. Spacer 90 is attached to, for example, lower surface 82 of magnetic yoke 80 and is interposed between magnetic yoke 80 and elastic supporting part 60. Spacer 90 protrudes from lower surface 82 and is provided to have a predetermined width in a direction orthogonal to the up-down direction. Spacer 90 is disposed to surround coil 50 on the entire circumference of the outer periphery of coil 50.

The thickness of spacer 90 separates magnetic yoke 80 from magnetic core body 32. The thickness of spacer 90 forms an interval, that is, air gap G, between, on one hand, magnetic yoke 80 and, on the other hand, coil 50 and magnetic pole portion 34 together with elastic supporting part 60 and magnetic pole portion 34. As a result, elastic supporting part 60 is movable within the same layer as magnetic core body 32, and the movable region is increased, so that the movable region of the movable part in vibration actuator 10 is sufficiently set, and suitable vibration characteristics can be obtained. Note that this air gap is formed in the same manner in each of the embodiments described below (excluding Embodiment 8).

Spacer 90 has a shape that avoids coil 50 when magnetic yoke 80 is displaced due to deformation of elastic supporting part 60, and is disposed at a portion (central portion of lower surface 82 facing magnetic pole portion 34) that is a magnetic pole surface of magnetic yoke 80, magnetic pole portion 34, and outside coil 50.

As shown in FIG. 4, spacer 90 is formed in a frame shape corresponding to, for example, the outer diameter of vibration actuator 10, and is formed in a rectangular frame shape corresponding to, for example, the outer shape of magnetic yoke 80. Spacer 90 is a square frame-shaped body corresponding to the shape of magnetic yoke 80.

Spacer 90 has a predetermined thickness that is a part of the deformation region of elastic supporting part 60, and separates elastic supporting part 60 and magnetic yoke 80 in the thickness direction (Z direction). In addition, spacer 90 separates electromagnet section 20, that is, magnetic core body 32, coil 50, and magnetic pole portion 34, from magnetic yoke 80 in the vibration direction (up-down direction, Z direction).

Spacer 90 is a non-magnetic body, but may be a magnetic body. Spacer 90 is formed of a high-precision steel sheet using, for example, an austenitic spring stainless steel strip manufactured by cold rolling. Spacer 90 may be formed of either a magnetic body or a non-magnetic body, and a magnetic circuit of vibration actuator 10 can be thus formed.

The degree of freedom of the elastic member such as the leaf spring used in elastic supporting part 60 can be increased according to the design of spacer 90.

Since spacer 90 is formed of a plate material, a plate material having a thickness that is easy to set an accurate dimension can be used, and thus the accuracy of air gap G can be improved. In addition, when magnetic core body 32 is fixed to the housing and used as a movable part together with magnetic yoke 80, spacer 90 also functions as a weight. By using a high specific gravity material for spacer 90, the movable weight is increased, and the generated vibration can be increased. In addition, when spacer 90 is used as a weight of the movable part, the weight can be adjusted to set the natural frequency of the movable part.

### < Magnetic Circuit of Vibration Actuator 10 >

FIGS. 6 and 7 are diagrams for describing the operation of the vibration actuator, and each corresponds to the partial sectional view of FIG. 5 and shows the flow M of the magnetic flux. FIG. 6 is a diagram showing an operation in a case where magnetic body 70 is moved in the vibration actuator, and shows an operation in which magnetic core body 32 is used as a fixed portion attached to a fixed surface of the housing. FIG. 7 is a diagram showing an operation in a case where electromagnet section 20 is moved in the vibration actuator, and shows an operation in which magnetic yoke 80 is used as a fixed portion attached to a fixed surface of the housing.

In vibration actuator 10, magnetic core body 32 is fixed as a fixed surface to the housing, electromagnet section 20 is used as a fixed part, and magnetic body 70 is used as a movable part. In vibration actuator 10 (see FIG. 5) in the non-movable state, that is, in the non-energized state, for example, a current is caused to flow through coil 50 to excite magnetic pole portion 34, as shown in FIG. 6. As a result, a magnetic field (flow of magnetic flux M) passing through magnetic body 70 is generated, in which the surface (top surface) of magnetic pole portion 34 becomes a S pole and the bonding surface with magnetic core body 32 becomes a N pole.

Due to the principle of the electromagnetic solenoid, magnetic body 70 is attracted to the surface of magnetic pole portion 34 and the surface of magnetic core body 32, and the magnetic circuit shown in the figure is formed. Since magnetic pole portion 34 and magnetic core body 32 are fixed, magnetic body 70 is movable in the direction of the arrow, that is, in the direction approaching core section 30.

Next, in a case where the energization of coil 50 is released, the magnetic field disappears, the magnetic attraction force of electromagnet section 20 disappears, and the biasing force of elastic supporting part 60 deformed to the magnetic core body 32 side is released. That is, a reaction force of the spring as elastic supporting part 60 is generated, and magnetic body 70 moves to the original position by the reaction force of elastic supporting part 60. At this time, magnetic body 70 moves to a position displaced in a direction away from magnetic pole portion 34 from the stationary position in the non-movable state due to the reaction force, and generates strong vibration.

This vibration is a free vibration in which the reciprocating movement in the Z direction is repeated while being damped as the biasing force is damped. In addition, the energization and release of coil 50 may be repeated so that magnetic body 70 reciprocates in the Z direction to generate vibration. In this way, in vibration actuator 10, magnetic body 70 supported in a state of being suspended by elastic supporting part 60 with respect to electromagnet section 20 is mechanically displaced by the magnetic attraction force generated between magnetic body 70 and electromagnet section 20 facing each other when energized, and then performs free vibration.

Next, an operation when magnetic yoke 80 is fixed as a fixed surface to the housing in vibration actuator 10 will be described.

As shown in FIG. 7, in a case where coil 50 is energized and a magnetic field is generated between electromagnet section 20 and magnetic body 70, electromagnet section 20 is attracted to magnetic body 70 including magnetic yoke 80. Electromagnet section 20 moves to approach magnetic body 70.

Next, by releasing the energization of coil 50, the magnetic field disappears, the magnetic attraction force of electromagnet section 20 disappears, and the biasing force of elastic supporting part 60 deformed to the magnetic yoke 80 side is released. As a result, a reaction force of elastic supporting part 60 is generated, and electromagnet section 20 moves to the original position, that is, in a direction away from magnetic body 70. In this case, electromagnet section 20 moves to a position farther away from magnetic pole portion 34 than the stationary position due to the reaction force of elastic supporting part 60, and generates strong vibration. Vibration is generated by repeating this while damping the vibration.

As described above, in vibration actuator 10, the magnetic attraction force is generated between core section 30 of magnetic core body 32 and magnetic pole portion 34 and magnetic yoke 80 facing core section 30 by energizing coil 50. Note that, in the magnetic attraction force, the central portion where magnetic pole portion 34 is disposed is larger than the outer peripheral portion between core section 30 and magnetic yoke 80.

Due to this magnetic attraction force, one of the electromagnet section and magnetic body 70 moves and is displaced to approach the other. This movement generates vibration of magnetic body 70 due to an elastic force (biasing force) generated in elastic supporting part 60, thereby imparting a tactile sensation to the user.

As described above, in vibration actuator 10, flat annular coil 50 and disk-shaped magnetic pole portion 34 disposed inside coil 50 are disposed on flat plate-shaped magnetic core body 32.

Magnetic core body 32, coil 50, and magnetic pole portion 34 are disposed to face flat plate-shaped magnetic body 70 having spacer 90 and magnetic yoke 80 via flat plate-shaped elastic supporting part 60, and are supported to be movable in an approaching/separating direction.

With this configuration, elastic supporting part 60 is disposed at a position surrounding coil 50 and magnetic pole portion 34 on plate-shaped magnetic core body 32, and magnetic yoke 80 is disposed in a layered manner on elastic supporting part 60 via spacer 90. That is, vibration actuator 10 is configured to have a height in which a layer of magnetic core body 32, a layer including coil 50, magnetic pole portion 34, and elastic supporting part 60, a layer of spacer 90, and a layer of magnetic yoke 80 are stacked in the thickness direction. As described above, since the assembly accuracy is determined by the overlapping of the components, high-precision assembly is possible.

In addition, vibration actuator 10 has a configuration in which the thickness is reduced (a flat plate shape thinner than a configuration in which coil 50, magnetic pole portion 34, and elastic supporting part 60 are stacked), and it is possible to achieve space saving in the arrangement space.

In addition, in vibration actuator 10, the movable region of elastic supporting part 60 can be secured as movable gap DG with the thickness of elastic supporting part 60. In addition, the thickness of spacer 90 sets air gap G between the magnetic pole surfaces to which electromagnet section 20 and magnetic body 70 are attracted, together with the thickness of elastic supporting part 60 and the thickness of magnetic pole portion 34. Air gap G secures the vibration characteristics of the vibration actuator by serving as a movable region of elastic supporting part 60 that brings core section 30 of electromagnet section 20 and magnetic yoke 80 close to and away from each other.

As described above, it is possible to have suitable vibration characteristics without individually providing members for forming each of movable gap DG and air gap G, and it is possible to achieve further thickness reduction, simplification of assembly, and cost reduction with a simple configuration.

Further, since elastic supporting part 60 is a leaf spring with high thickness accuracy in terms of manufacturing, the variation in the gap between magnetic core body 32 and spacer 90 is suppressed, and a stable gap is formed, which makes it possible to secure movable gap DG and set gap G. In addition, in vibration actuator 10, the direction of the current flowing through coil 50 in the circumferential direction may be either rightward or leftward.

In vibration actuator 10, elastic supporting part 60 elastically supports electromagnet section 20 and magnetic body 70 by connecting them to be relatively movable. That is, it is also possible to use a configuration in which one of magnetic body 70 and electromagnet section 20 is fixed and the other is moved with respect to the one. For example, vibration actuator 10 can be configured such that a second planar body (planar body including an electromagnet and a magnetic core) having electromagnet section 20 is disposed to face a corresponding first planar body of magnetic body 70 in the surface normal direction of both surfaces, and is relatively movable to approach or separate from each other via elastic supporting part 60.

### < Drive Principle of Vibration Actuator 10 >

Hereinafter, the driving principle of vibration actuator 10 will be briefly described. Vibration actuator 10 can also be driven by generating a resonance phenomenon using a pulse based on the following motion equation and circuit equation. Note that, the above-described operation is not a resonance drive, and represents the operational feel in the trackpad (see FIG. 40) as vibration presentation device 500, and may be driven, for example, by inputting a current pulse (one or more pulses may be used) via a control section(not illustrated). Vibration actuator 10 may be configured to input a sine wave or cosine wave voltage to coil 50 by being supplied with power from an AC power supply as energization of coil 50 via the control section, thereby vibrating the movable part. An AC voltage is preferably applied to vibration actuator 10, and vibration actuator 10 generates vibration by receiving an input of a sine wave drive signal.

Note that, in vibration actuator 10, when electromagnet section 20 is the fixed surface fixed to the housing and the movable part supported to be movable is magnetic body 70, magnetic body 70 performs reciprocating motion based on Equations 1 and 2. Note that, even when electromagnet section 20 is the movable part and magnetic body 70 has the fixed surface and is fixed to the housing at the fixed surface, the reciprocating motion is performed by satisfying the same Equations 1 and 2 by replacing the movable target.

[1] $m \frac{{d}^{2} x \left(t\right)}{{dt}^{2}} = {K}_{f} i \left(t\right) - {K}_{sp} x \left(t\right) - D \frac{dx \left(t\right)}{dt}$
   m: Mass [kg]
   x(t): Displacement [m]
   K_{f}: Thrust constant [N/A]
   i(t): Current [A]
   Kₛₚ: Spring constant [N/m]
   D: Damping coefficient [N/(m/s)]
[2] $e \left(t\right) = Ri \left(t\right) + L \frac{di \left(t\right)}{dt} + {K}_{e} \frac{dx \left(t\right)}{dt}$
   e(t): Voltage [V]
   R: Resistance [Ω]
   L: Inductance [H]
   Kₑ: Reverse electromotive force constant [V/(rad/s)]

That is, the mass m [Kg], the displacement x (t) [m], the thrust constant K_{f} [N/A], the current i (t) [A], the spring constant Kₛₚ [N/m], the damping coefficient D [N/ (m/s)], and the like in vibration actuator 10 can be appropriately changed within a range in which Equation 1 is satisfied. In addition, the voltage e (t) [V], the resistance R [Ω], the inductance L [H], and the reverse electromotive force constant Kₑ [V/ (rad/s)] can be appropriately changed within a range in which Equation (2) is satisfied.

As described above, the vibration in vibration actuator 10 is determined by mass m of magnetic body 70 (or electromagnet section 20) and spring constant Kₛₚ of metal spring (leaf spring in the present embodiment) as elastic supporting part 60. Further, the vibration generated by vibration actuator 10 can be set and changed by the input voltage (for example, a pulse, a sine waveform, or a cosine waveform voltage).

Further, in vibration actuator 10, the joining of magnetic core body 32 to elastic supporting part 60 and the joining of elastic supporting part 60 to magnetic body 70 (or electromagnet section 20) are fastened using an adhesive as a fastening member or welding, etc. A screw may be used as the fastening member.

### < Drive Circuit for Vibration Actuator 10 >

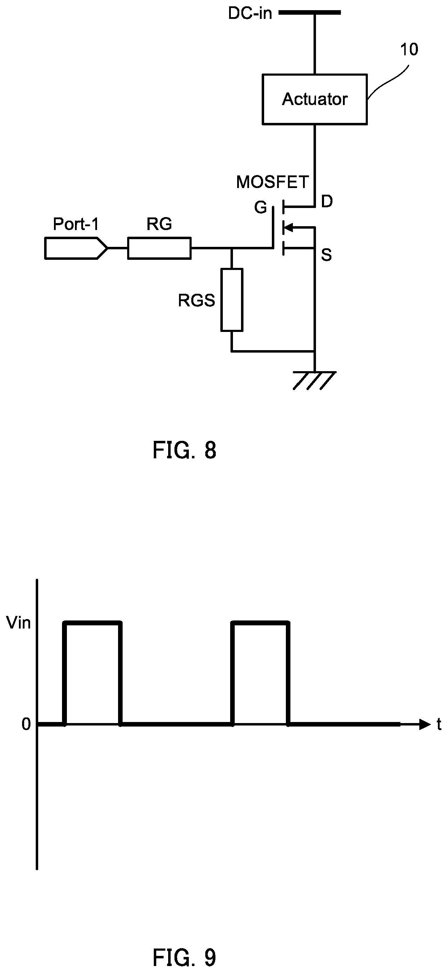

FIG. 8 illustrates an example of the drive circuit in the actuator body.

The drive circuit illustrated in FIG. 8 is included in, for example, the control section. The drive circuit connects a current pulse supply section (switching element) configured by a Metal-Oxide-Semiconductor Field-Effect Transistor (MOSFET) to actuator 10. In addition, the drive circuit includes port 1 (Port-1) such as a signal generation section that applies a voltage pulse, gate resistor RG, and gate-source resistor RGS, and is connected to the current pulse supply section.

In the control section, port 1 is connected to the gate of the MOSFET via gate resistor RG. The MOSFET is a discharge switching switch or the like, and is connected to vibration actuator 10 (indicated by [Actuator] in FIG. 8) to which a voltage is supplied from power supply section Vin and to gate-source resistor RGS. FIG. 9 illustrates an example of an input voltage as an actuator drive signal input to actuator 10.

In vibration actuator 10, the input of the actuator drive signal is stopped, so that vibration actuator 10 releases the biasing force, and magnetic body 70 (or electromagnet section 20) is moved to the other direction side (positive side in the Z direction) by the biasing force. Vibration actuator 10 vibrates magnetic body 70 (or electromagnet section 20) by inputting and stopping the actuator drive signal. Vibration actuator 10 vibrates magnetic body 70 (or electromagnet section 20) without using a magnet.

Note that, in the embodiment, the actuator drive signal corresponds to a drive current pulse (also referred to as a "current pulse") supplied to coil 50 to drive the movable part and the operation device. In vibration actuator 10, when a current pulse is supplied to coil 50, magnetic body 70 moves in one direction toward electromagnet section 20 due to the magnetic attraction force between electromagnet section 20 and magnetic body 70 and is mechanically displaced; after the supply is stopped, magnetic body 70 is then allowed to freely vibrate. Thus, the vibration thus generated is applied to the operation device. Elastic supporting part 60 can control the displacement and the free vibration period due to the magnetic attraction force.

Further, the actuator drive signal is generated by inputting a signal from a sensing section that detects an operator's operation. The sensing section may use, for example, a pressure sensor that senses pressing by the operator as a pressure signal , converts the pressure signal into an electrical signal, and outputs the electrical signal. Further, the sensing section may be, for example, a capacitive type sensor, or a proximity sensor that detects the position of a finger (a pressing object) of an operator pressing the vibration presentation section by detecting capacitive coupling with the operator's finger.

When vibration actuator 10 is used, for example, in a contact-type input device, it is desirable that, when an operator operates an operation device by touching it, vibration is generated to impart a tactile operational sensation and, at that time, a suitable crisp tactile sensation and force sensation are imparted. On the other hand, in vibration actuator 10, air vent section 100 is provided to improve the tactile sensation and the force sensation, thereby increasing the attenuation of the vibration after driving. Thereby, so-called vibration aftereffect (also referred to as "vibration aftereffect") after the vibration is generated subsides, the strength of the tactile sensation is clarified, and a crisp tactile sensation can be applied.

### < Flow of Internal Air During Driving by Air Vent Section 100 >

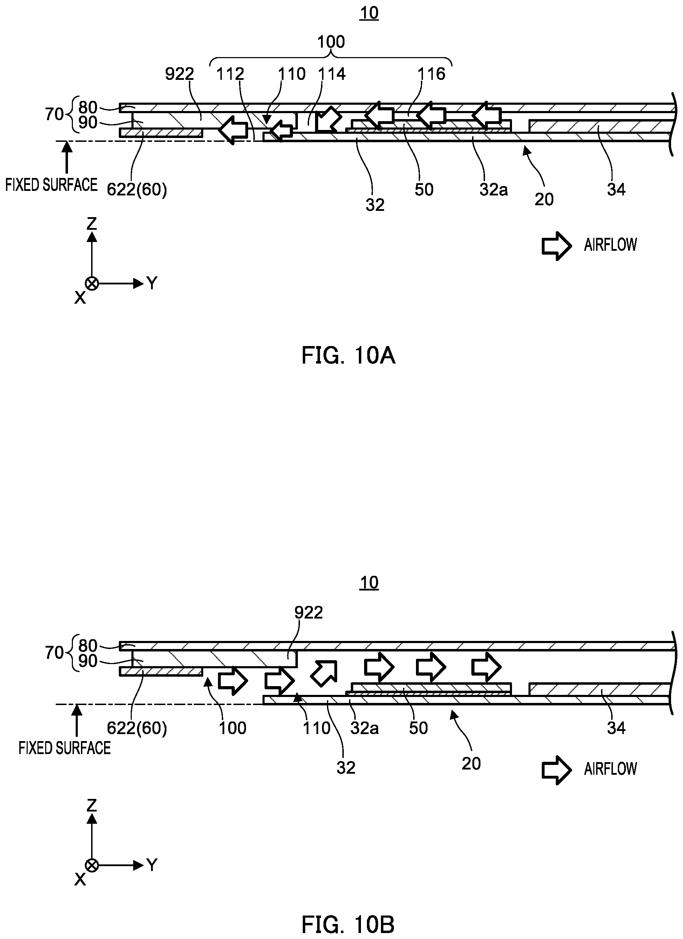

FIG. 10A is a partial sectional view showing the flow of internal air in the excited state, and FIG. 10B is a view showing the flow of internal air in the unexcited state. The unexcited state shown in FIG. 10B is a state in which magnetic body 70 operates by a spring reaction force after excitation, and is a state in which core section 30 and magnetic body 70 are moving away from each other. Further, as the unexcited state, FIG. 5 shows a state before coil 50 is excited.

Vibration actuator 10 includes electromagnet section 20 in which flat annular coil 50 is stacked on a plate surface of a plate-shaped magnetic core (magnetic core body 32 of the magnetic core), and magnetic yoke (magnetic member) 80. Magnetic yoke 80 has a lower surface facing coil 50 of electromagnet section 20 from above.

Further, a spacer that separates magnetic yoke 80 and electromagnet section 20 from each other in the up-down direction is disposed outside coil 50 between magnetic core body 32 and magnetic yoke 80. In addition, elastic supporting part 60 that connects magnetic core body 32 to spacer 90 or magnetic yoke 80 to spacer 90 is disposed outside coil 50.

Magnetic body 70 (magnetic yoke 80) and electromagnet section 20 (magnetic core body 32) close a space between both of them in the up-down direction and include air vent section 100 that forms an airflow (flow of air) in a direction along the plate surface in the space when the magnetic body and the electromagnet section approach each other. Air vent section 100 causes the airflow to flow from the outer peripheral portion of magnetic yoke 80 and electromagnet section 20 to the outside. Further, air vent section 100 causes the airflow to flow from the outer peripheral portion of magnetic yoke 80 and electromagnet section 20 to the inside. For example, air vent section 100 forms an airflow that causes internal air to flow to the outside through a space between spacer 90 and magnetic yoke 80 or electromagnet section 20, or an airflow that causes air to flow from the outside to the inside.

Air vent section 100 is formed between magnetic core body 32 and magnetic body 70 in a substantially closed manner so as to communicate with the outside only through venting adjustment portion 110. Air vent section 100 forms an airflow along the opposing surfaces of magnetic core body 32 and magnetic body 70 by the relative movement between magnetic core body 32 and magnetic body 70, and takes in air from the outside into the vibration actuator or causes air to flow out from the inside (internal space) of the vibration actuator to the outside.

Air vent section 100 hinders the airflow along the surface direction (horizontal direction) when the air moves inside and outside the vibration actuator, and causes a pressure fluctuation to occur at a portion where electromagnet section 20 and magnetic body 70 constituting air vent section 100 face each other, thereby applying a load. As a result, the vibration of moving magnetic body 70 (magnetic yoke 80) is attenuated, the residual vibration (vibration aftereffect) subsides, and a crisp tactile sensation with clearly distinguishable strength variation can be imparted.

As illustrated in FIG. 5, air vent section 100 is provided between outer peripheral portion 32a of magnetic core body 32 and magnetic body 70. Here, a description is given of vibration actuator 10 having a configuration in which magnetic body 70 is a first planar body, and a planar body including electromagnet section 20 and core section 30 is described as a second planar body, and in which the second planar body is movable toward and away from in a surface normal direction with respect to the surface of the first planar body.

Air vent section 100 is formed between magnetic core body 32 and magnetic body 70 along the respective opposing surfaces in an unexcited state illustrated in FIG. 5, that is, in a state before the coil is excited to drive the actuator. Air vent section 100 forms an airflow along the opposing surfaces of magnetic core body 32 and magnetic body 70 and flowing to the outside in an excited state, that is, when core section 30 is excited and attracts magnetic body 70 (magnetic yoke 80) and they approach each other (see FIG. 10A).

Further, when coil 50 is in an unexcited state from an excited state, air vent section 100 forms an airflow flowing from the outside to the inside as illustrated in FIG. 10B, in which core section 30 and magnetic body 70 are separated from the attracted state by the reaction force of elastic supporting part 60.

Air vent section 100 includes vent portion 112 formed between the outer side of magnetic core body 32 and movable part (spacer 90), venting adjustment portion 110 partitioned between outer peripheral portion 32a and end portion 922 of spacer 90, and airflow bending portion 114 and internal passage 116 on the inner side of venting adjustment portion 110.

Venting adjustment portion 110 adjusts the airflow by a gap between spacer 90 and the outer peripheral portion of magnetic core body 32 that approaches spacer 90 in the up-down direction. Specifically, venting adjustment portion 110 has a gap between the opposing surfaces of end portion 922 of spacer 90 and outer peripheral portion 32a of magnetic core body 32. By adjusting this gap, venting adjustment portion 110 adjusts the amount of air flowing from the inside to the outside of the vibration actuator.

Spacer 90 forms venting adjustment portion 110 together with outer peripheral portion 32a and also functions as a factor that hinders the airflow.

Airflow bending portion 114 is disposed above magnetic core body 32, inside spacer 90, and at the outer peripheral side of coil 50. Airflow bending portion 114 is an air passage continuous with internal passage 116. Airflow bending portion 114 is formed by the side surface of spacer 90 and the side surface of coil 50, and bends the airflow in air vent section 100.

Internal passage 116 is formed between, on one hand, the upper surface of coil 50 and the upper surface of magnetic pole portion 34 and, on the other hand, magnetic yoke 80.

In vibration actuator 10, air vent section 100 including venting adjustment portion 110, airflow bending portion 114, and internal passage 116 between magnetic core body 32 and magnetic yoke 80 is formed in a labyrinth shape on outer peripheral portion 32a of magnetic core body 32. The gap in the labyrinth shape is a gap with unevenness along the plate surface of magnetic core body 32, is a gap with a stepped bent shape, and is shaped to bend the airflow, which flows along the plate surface from magnetic core body 32, partway in the up-down direction. Air vent section 100 in the labyrinth shape is formed to be bent in the up-down direction and to extend in a direction orthogonal to the up-down direction between magnetic core body 32 and spacer 90, instead of being linear.

In venting adjustment portion 110, the gap dimension between spacer 90 and magnetic core body 32 is smaller than the gap dimension between magnetic core body 32 and magnetic yoke 80. Therefore, when magnetic yoke 80 and electromagnet 20 approach each other, air suitably flows from the center to the outer periphery.

In vibration actuator 10, when coil 50 is energized and excited in a default state (state shown in FIG. 5) that is an unexcited state before excitation, a magnetic attraction force is generated in electromagnet section 20. As a result, magnetic body 70, which is a movable part, approaches magnetic core body 32 in the up-down direction as shown in FIG. 6. In this case, the air in internal passage 116 is compressed, passes through airflow bending portion 114, flows on outer peripheral portion 32a of magnetic core body 32, and moves to the radially outer side of outer peripheral portion 32a. The air on venting adjustment portion 110 side is discharged to the outside of vibration actuator 10 from the outside of outer peripheral portion 32a, that is, from a space between the surface (fixed surface) to which magnetic core body 32 is fixed and spacer 90 (including a space formed by the thickness of elastic supporting part 60) via venting adjustment portion 110.

Spacer 90 protrudes from lower surface 82 of magnetic yoke 80 and is provided to have a predetermined width in a direction orthogonal to the up-down direction. Spacer 90 approaches outer peripheral portion 32a of magnetic core body 32 via a surface having a predetermined width. Spacer 90 is included in venting adjustment portion 110 together with outer peripheral portion 32a, at a surface that surrounds coil 50 around an entire circumference.

Venting adjustment portion 110 can adjust the length (length in the up-down direction, which is the vibration direction) between end portion 922 of spacer 90 and outer peripheral portion 32a when magnetic yoke 80 of magnetic body 70 is closest to electromagnet section 20 in a case where the air is discharged to the outside from airflow bending portion 114. By this adjustment, venting adjustment portion 110 hinders the flow of air from the inside to the outside. As a result, venting adjustment portion 110 applies a load to end portion 922 of spacer 90 and outer peripheral portion 32a to attenuate the vibration of magnetic body 70, which is the movable part.

Venting adjustment portion 110 is disposed outside the coil over the entire circumference on outer peripheral portion 32a of magnetic core body 32 to surround coil 50. That is, venting adjustment portion 110 is disposed around the entire circumference of the portion where magnetic pole portion 34 and magnetic yoke 80 attract each other.

As a result, in vibration actuator 10 during driving, air moves substantially uniformly from the central portion of vibration actuator 10 toward the outside on the radially outer side in a radiating direction, or in the reverse direction. As a result, while effectively attenuating vibration of the movable part (magnetic body 70) including magnetic yoke 80, the movable part is able to move in the up-down direction in a well-balanced manner with respect to electromagnet section 20.

For example, when magnetic body 70 is excited and approaches magnetic core body 32, the vibration of magnetic body 70, in other words, the biasing force of the spring due to the magnetic attraction force can be attenuated as the gap between end portion 922 and outer peripheral portion 32a is narrowed. In venting adjustment portion 110, the gap dimension between spacer 90 and outer peripheral portion 32a of magnetic core body 32 is smaller than the gap dimension between magnetic pole portion 34 of the magnetic core and magnetic yoke 80. As a result, the air can be effectively compressed and discharged from outer peripheral portion 32 to the outside in the radial direction.

When the air released from the inside to the outside in a case of being compressed in the up-down direction passes between spacer 90 and magnetic core body 32, the flow of the air is hindered by both of the spacer and the magnetic core body, and the vibration of the movable part is attenuated. As a result, venting adjustment portion 110 can adjust the attenuation of the vibration of magnetic body 70 to suitably reduce the vibration aftereffect and impart a suitable tactile sensation with clearly distinguishable strength variation.

Air vent section 100 moves the air along the plate surface and allows the air to flow in and out of vibration actuator 10 via the outer peripheral portion (outer peripheral portion 32a) of vibration actuator 10. Air vent section 100 communicates between inner and outer regions radially sandwiching the space (venting adjustment portion) between frame-shaped main body 91 (specifically, each side portion of frame-shaped main body 91) formed by spacer joint portions 92 of spacer 90 continuing to one another, and outer peripheral portion 32a of magnetic core body 32.

The region on the inner side in the radial direction is a region between magnetic core body 32 and magnetic yoke 80. The region on the outer side in the radial direction is formed on the outer side of outer peripheral portion 32a (a region between the lower surface of frame-shaped main body 91 of spacer 90 and the fixed surface, or a region formed by a thickness of elastic supporting part 60 between the fixed surface and spacer 90 (magnetic body 70 as the movable part)).

In this state, when the energization is stopped, the leaf spring, which is elastic supporting part 60, generates a reaction force, and the movable part (magnetic body 70) moves in a direction away from magnetic core body 32. The movable part (magnetic body 70) is displaced to a position beyond the default position by the reaction force of elastic supporting part 60, as shown in FIG. 10B. In this case, intake air flows from the outside to the inside between magnetic core body 32 and the spacer of the movable part, and air is accumulated in internal passage 116.

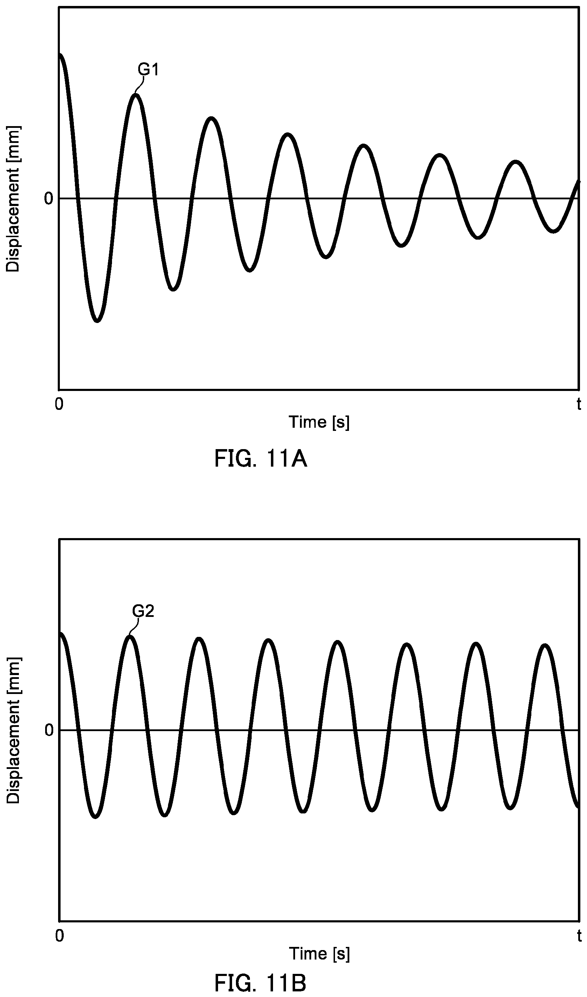

FIG. 11A is a diagram showing the displacement of the movable part of the present embodiment, and FIG. 11B is a diagram showing the displacement of the movable part of the configuration without the air vent section.

As shown in FIG. 11A, in vibration actuator 10, the displacement (graph G1) of the movable part (magnetic body 70) in the configuration including air vent section 100 is greatly attenuated with the elapse of time as compared with the displacement (graph G2) of the movable part in the configuration without air vent section 100.

As a result, as compared with the configuration without air vent section 100, vibration actuator 10 including air vent section 100 in the present embodiment can impart a tactile sensation (vibration) having a crisp end of vibration that does not cause the operator to feel the vibration aftereffect.

### (Embodiment 2)

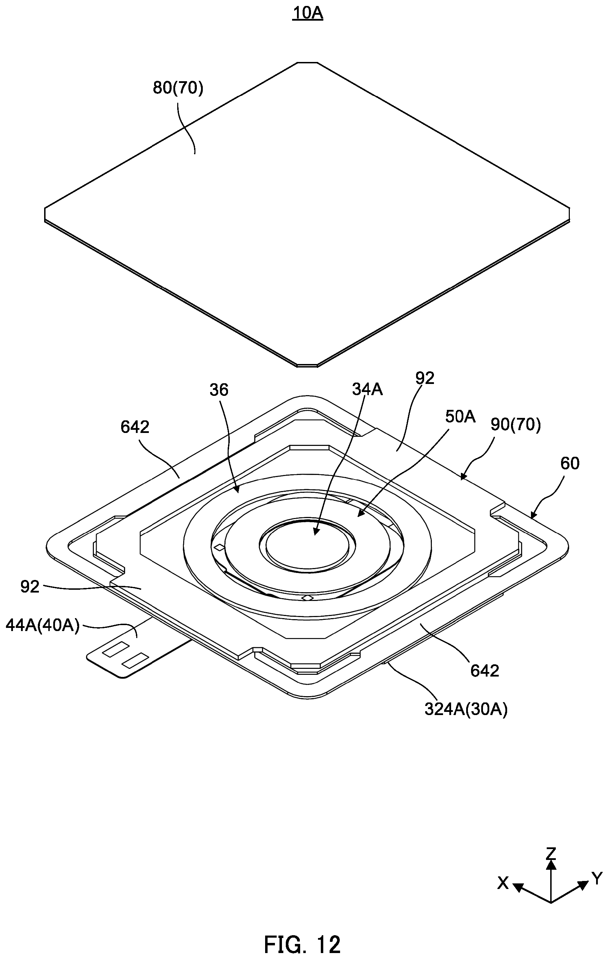

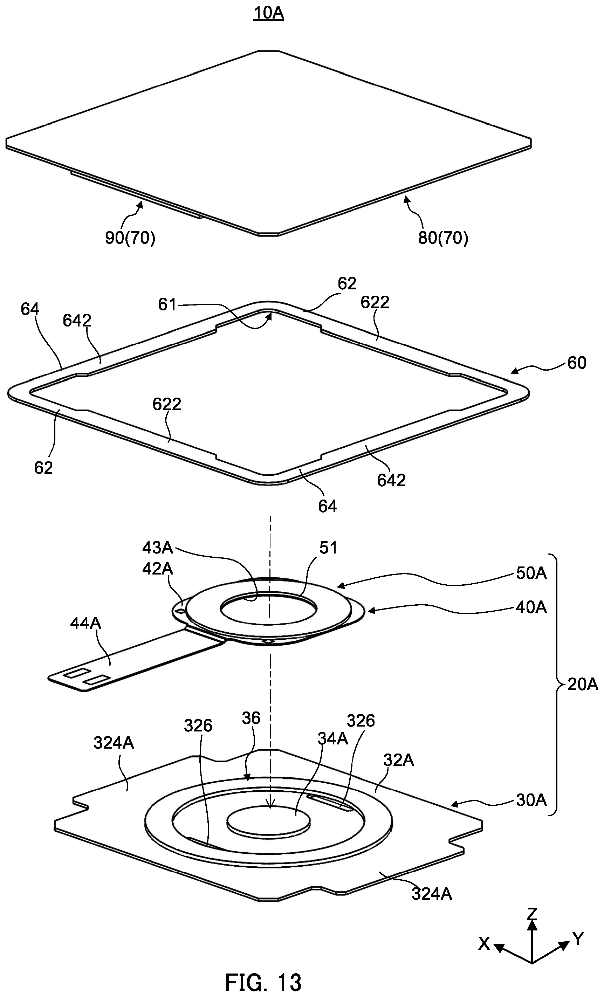

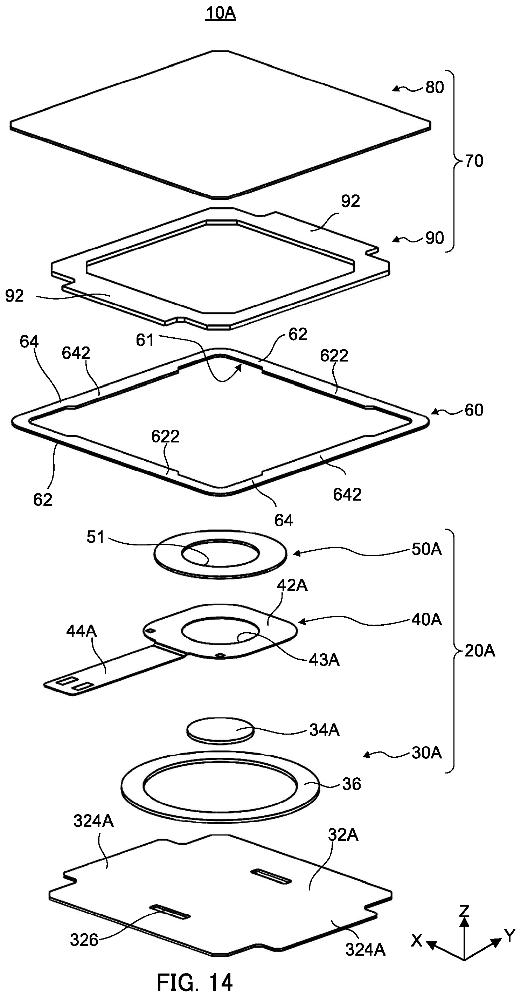

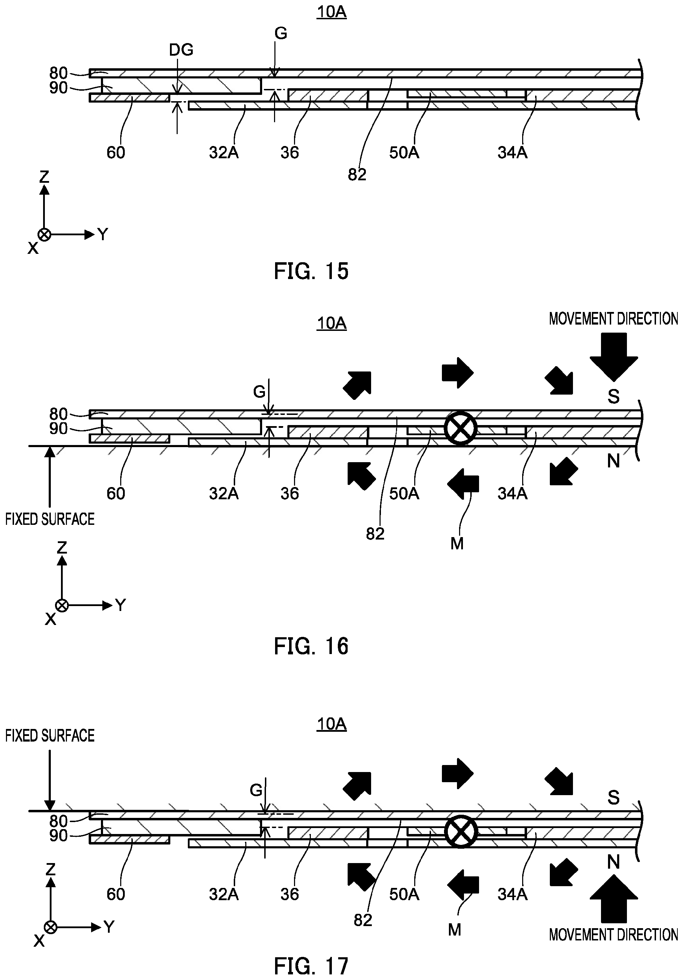

FIG. 12 is an external perspective view showing a state in which the magnetic yoke is removed from the vibration actuator according to Embodiment 2 of the present invention, FIG. 13 is a sub-assembly view of the vibration actuator, and FIG. 14 is an exploded perspective view of the vibration actuator. In addition, FIG. 15 is a partial sectional view of the vibration actuator.

Vibration actuator 10A according to Embodiment 2 is formed by making a modification, addition, or the like to a part of the configuration of vibration actuator 10 according to Embodiment 1, and, when components have the same functions as those of the above-described components, the same names and the same reference numerals are used and description thereof will be omitted. In addition, components having substantially the same functions will be described by adding "A" to the same name and the same reference numeral.

As shown in vibration actuator 10A according to Embodiment 2 shown in FIGS. 12 to 15, in vibration actuator 10 according to Embodiment 1, another magnetic pole portion (outer magnetic pole portion 36) may be provided on magnetic core body 32 on the outside (outside in the radial direction) of coil 50A.

Vibration actuator 10A includes electromagnet section 20A including outer magnetic pole portion 36, in addition to core section 30A having magnetic core body 32A and magnetic pole portion 34A, and annular plate-shaped coil 50A, and also includes magnetic body 70 including magnetic yoke 80 and spacer 90, and elastic supporting part 60. Elastic supporting part 60 supports one of magnetic body 70 and electromagnet section 20A (specifically, magnetic core body 32A) to be movable to approach the other from one side to the other side in a state of being balanced and perpendicular to the facing direction (vibration direction).

Electromagnet section 20A and magnetic body 70 generate a magnetic attraction force by energizing coil 50A. Elastic supporting part 60 supports one of electromagnet section 20A and magnetic body 70 to be displaceable in the thickness direction such that the one approaches the other.

Magnetic core body 32A is a rectangular flat plate-shaped magnetic body, similar to magnetic core body 32, and includes connection fixing portions 324A provided to protrude outward in the plane direction on a pair of opposite side portions. Connection fixing portions 324A are joined to core-side connecting portions 642 of frame-shaped elastic supporting part 60 on the outside of magnetic core body 32A in the radial direction.

Elastic supporting part 60 is disposed at a position surrounding magnetic core body 32A and is deformed in the Z direction.

Outer magnetic pole portion 36 is a flat annular magnetic body, is made of the same material as magnetic pole portion 34A, and is disposed to surround the outer periphery of coil 50A. Outer magnetic pole portion 36 is disposed on magnetic core body 32A to sandwich coil 50A between magnetic pole portion 34A and outer magnetic pole portion 36, and is similarly provided to be connected to magnetic core body 32A. Note that outer magnetic pole portion 36 may be integrally formed with magnetic core body 32A.

Coil 50A is provided on board body 42A of board section 40A that is disposed on magnetic core body 32A to avoid magnetic pole portion 34A and outer magnetic pole portion 36 and to expose these.

Board section 40A includes board body 42A formed of an insulating film and extending portion 44A. Board section 40A is an FPC, and board body 42A is formed of an annular insulating film disposed between magnetic pole portion 34A and outer magnetic pole portion 36. Extending portion 44A is led out from a part of the outer peripheral edge of board body 42A and extends outward.

Board section 40A is configured such that board body 42A is disposed on magnetic core body 32A, and extending portion 44A is inserted through slit 326 formed in magnetic core body 32A and is led out to the outside along the back surface of magnetic core body 32A. With this configuration, extending portion 44A does not interfere with outer magnetic pole portion 36 on magnetic core body 32A. Note that since board section 40A is a Flexible Printed Circuit (FPC), it is possible to reliably and easily provide both an insulating function and wiring to coil 50A.

According to this configuration, as shown in FIG. 15, magnetic pole portion 34A and outer magnetic pole portion 36 in core section 30A are disposed to face magnetic body 70 and are located on the magnetic circuit.

FIG. 16 is a diagram showing an operation when a magnetic body (magnetic yoke) is moved in the vibration actuator according to Embodiment 2, and FIG. 17 is a diagram showing an operation when an electromagnet section is moved in the vibration actuator according to Embodiment 2. As shown in FIGS. 16 and 17, in core section 30A, when annular plate-shaped coil 50A is energized, magnetic pole portion 34A and outer magnetic pole portion 36 are attracted to magnetic body 70 by a magnetic force (magnetic attraction force). That is, air gap G from magnetic body 70 is shortened by magnetic pole portion 34A having magneticity and a convex shape formed in opening portion 51 of annular plate-shaped coil 50A and outer magnetic pole portion 36 disposed on the outer periphery of coil 50A. As a result, the magnetic circuit can be further improved, and the electromagnetic conversion efficiency can be improved.

### (Embodiment 3)

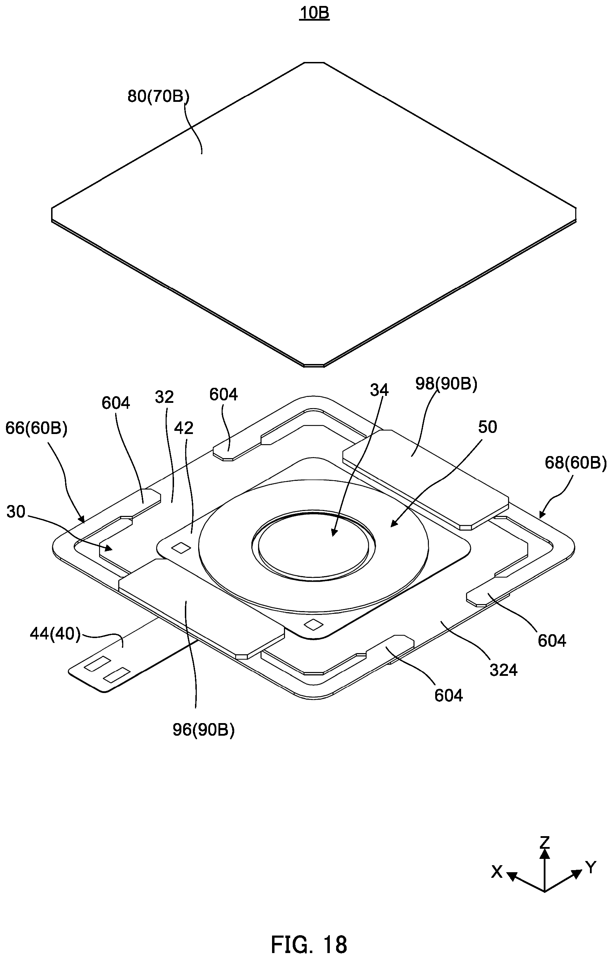

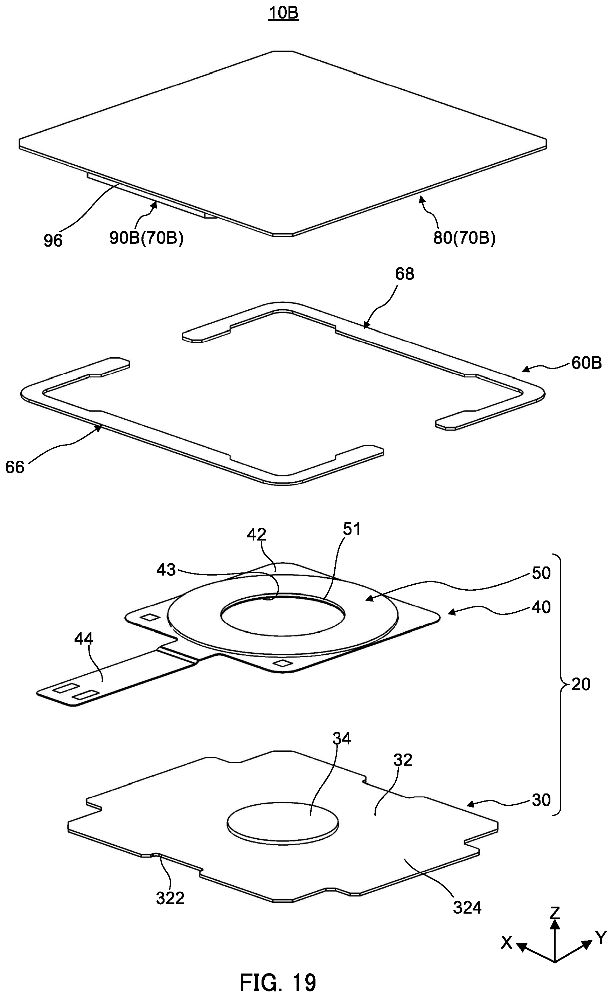

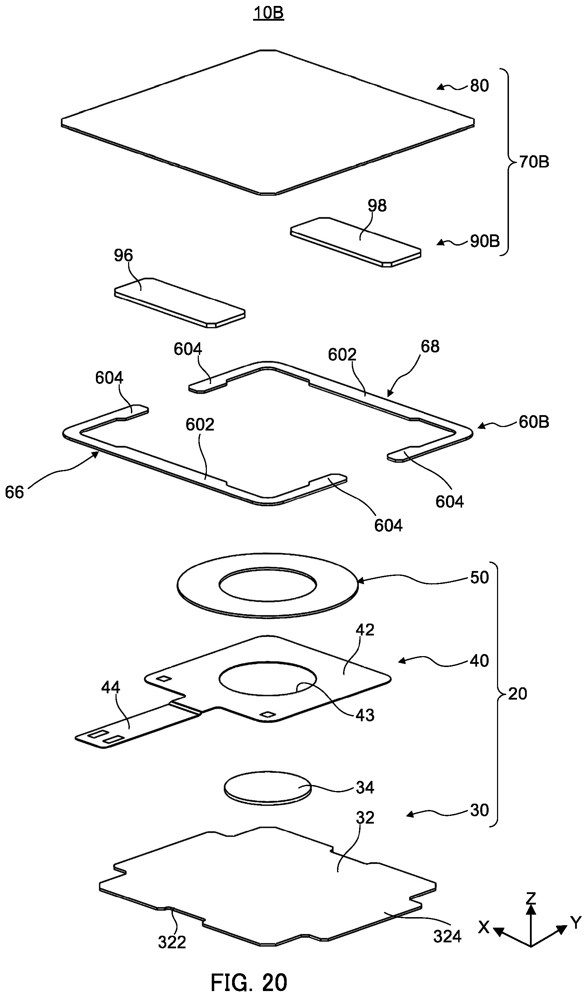

FIG. 18 is an external perspective view showing a state in which a magnetic yoke is removed from the vibration actuator according to Embodiment 3 of the present invention, and FIG. 19 is a sub-assembly view of the vibration actuator. In addition, FIG. 20 is an exploded perspective view of the vibration actuator.

When vibration actuator 10B according to Embodiment 3 has the same functions as components in vibration actuator 10 according to Embodiment 1, the same names and the same reference numerals are used, and description thereof will be omitted. Components having the same names are basically formed of similar materials. In addition, components having substantially the same functions will be described with the same reference numerals with a suffix "B".

In vibration actuator 10 according to Embodiment 1, elastic supporting part 60 or spacer 90 may each include a plurality of members.

Vibration actuator 10B according to Embodiment 3 shown in FIGS. 18 to 20 is configured such that each of the elastic supporting part and the spacer in vibration actuator 10 is formed of a plurality of members.

Vibration actuator 10B includes electromagnet section 20, elastic supporting part 60B including divided bodies of a plurality of elastic arm portions 66 and 68, magnetic yoke 80, and spacer 90B including spacer pieces 96 and 98.

Elastic arm portions 66 and 68 are disposed to be deformable on the outer side of magnetic core body 32 to surround magnetic core body 32.

Elastic arm portions 66 and 68 are formed in the same shape, are each a strip-shaped body bent in a U-shape, are joined to spacer pieces 96 and 98 at central portion 602, and are joined to connection fixing portion 324 of magnetic core body 32 at both end portions 604.

Elastic arm portions 66 and 68 are disposed between magnetic core body 32 and spacer pieces 96 and 98 in the thickness direction (Z direction) of vibration actuator 10B, and are in a state of being bridged between magnetic core body 32 and spacer pieces 96 and 98.

Spacer pieces 96 and 98 separate elastic arm portions 66 and 68 and magnetic yoke 80 from each other by the thickness thereof. In addition, the thickness of spacer pieces 96 and 98 sets an air gap (corresponding to air gap G in FIG. 5 and the like) between the magnetic pole surfaces to which electromagnet section 20 and magnetic body 70B are attracted, together with the thickness of elastic arm portions 66 and 68 (elastic supporting part 60B) and the thickness of magnetic pole portion 34. Spacer pieces 96 and 98 are provided respectively on a pair of side portions of magnetic yoke 80 that are separated from each other.

Since elastic arm portions 66 and 68 and spacer pieces 96 and 98 are divided bodies, the dimensions of the members themselves can be reduced as compared with a case where each of them is formed as a single member, and the manufacturing cost of elastic supporting part 60B and spacer 90B itself can be reduced. As a result, vibration actuator 10B is realized as a low-cost device.

### (Embodiment 4)

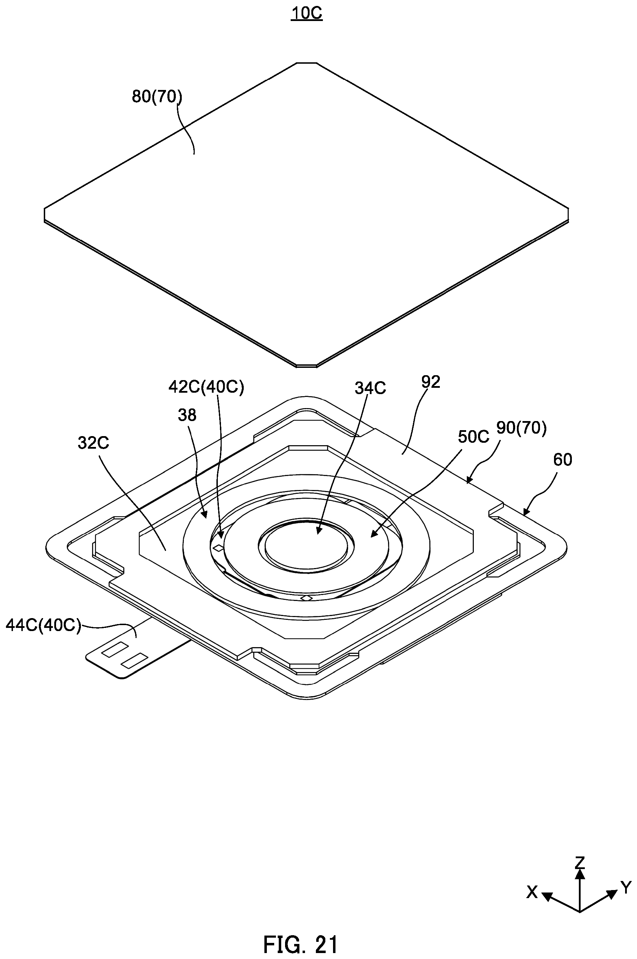

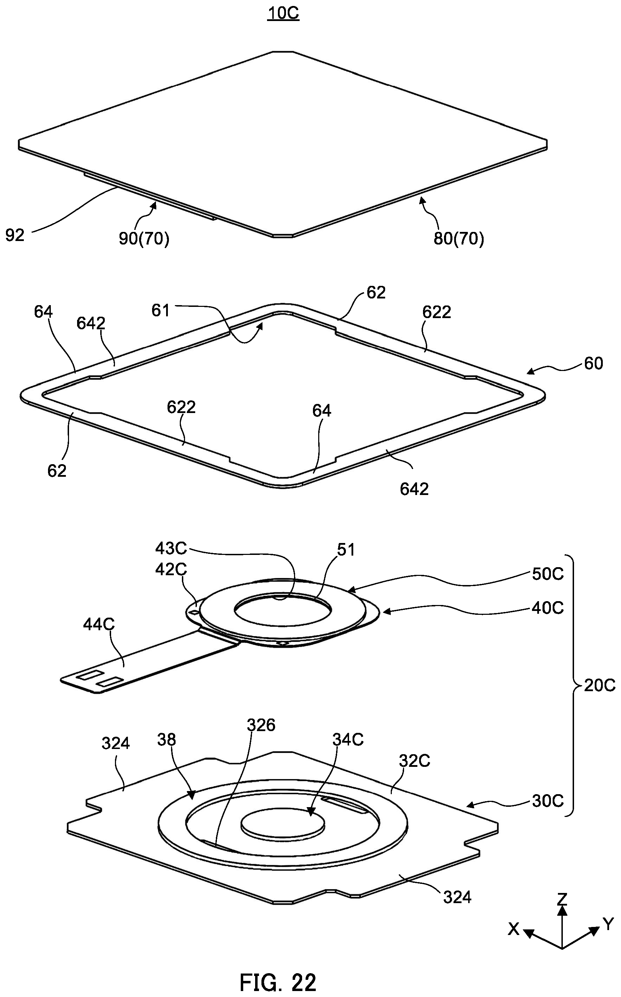

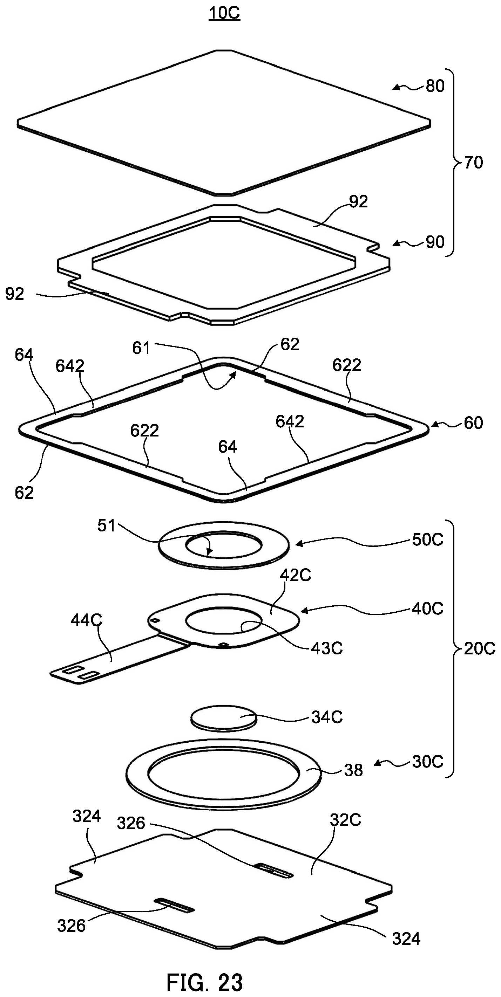

FIG. 21 is an external perspective view showing a state in which the magnetic yoke is removed from the vibration actuator according to Embodiment 4 of the present invention, and FIG. 22 is a sub-assembly view of the vibration actuator. In addition, FIG. 23 is an exploded perspective view of the vibration actuator.

When vibration actuator 10C according to Embodiment 4 has the same functions as the components in vibration actuator 10 according to Embodiment 1, the same names and the same reference numerals are given, the description thereof will be omitted, and the same names are basically configured with the same materials. In addition, components having substantially the same functions will be described with the same names and the same reference numerals with a suffix "C".

In vibration actuator 10 according to Embodiment 1, in a case where the electromagnet section is movable, electromagnet section 20 may be configured to further include a weight.

Vibration actuator 10C according to Embodiment 4 shown in FIGS. 21 to 23 includes external weight 38 surrounding coil 50C on magnetic core body 32C in the radial direction outward of coil 50C in the configuration of vibration actuator 10.

That is, vibration actuator 10C includes electromagnet section 20C, magnetic body 70, and elastic supporting part 60.

In core section 30C of electromagnet section 20C, magnetic pole portion 34C is disposed in a convex shape in the central portion on magnetic core body 32C, and coil 50C is disposed around magnetic pole portion 34C.

Coil 50C is disposed in a state of being insulated from magnetic core body 32C and magnetic pole portion 34C via board section 40C. Board section 40C includes planar board body 42C having opening portion 43C and extending portion 44C, and extending portion 44C is inserted into slit 326 of magnetic core body 32C and is led out from the back surface of magnetic core body 32C. Board body 42C is disposed between magnetic pole portion 34C and external weight 38, and insulates core section 30C and coil 50C.

External weight 38 is formed in an annular flat plate shape and is disposed outside coil 50C.

External weight 38 is formed of a high specific gravity material, phosphor bronze, SUS, tungsten, or the like. With this configuration, when coil 50C and core section 30C are used as the movable part, the weight of the movable part can be increased, and the vibration output can be increased, that is, higher output can be achieved.

### (Embodiment 5)

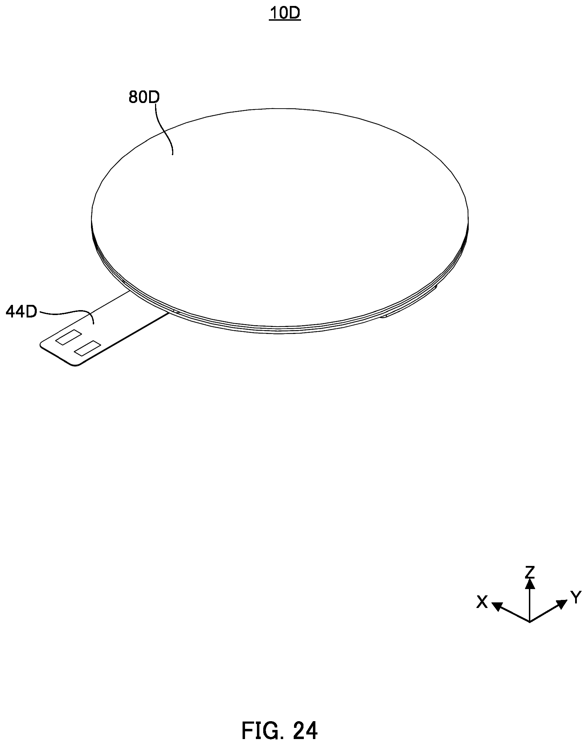

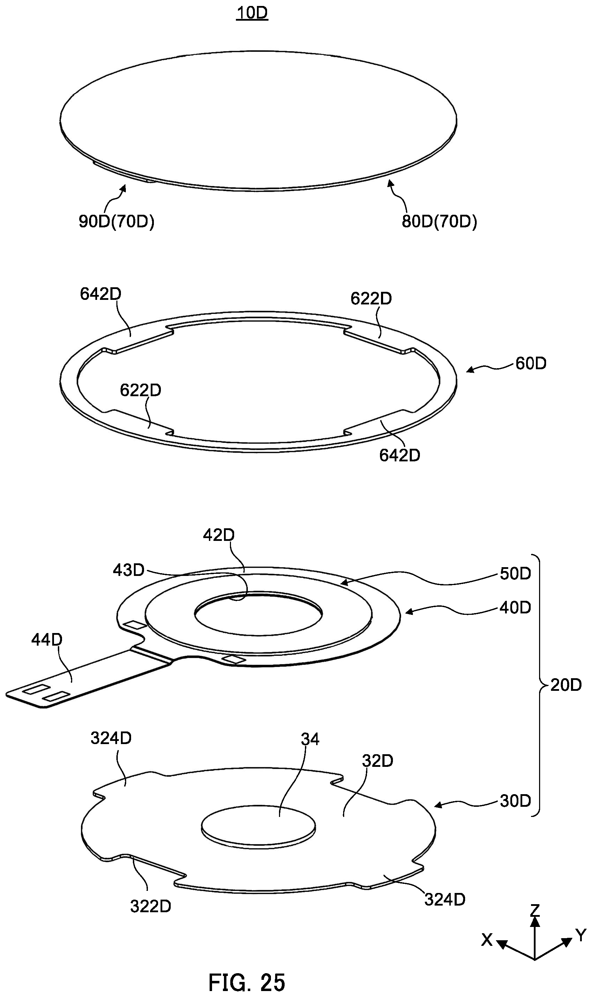

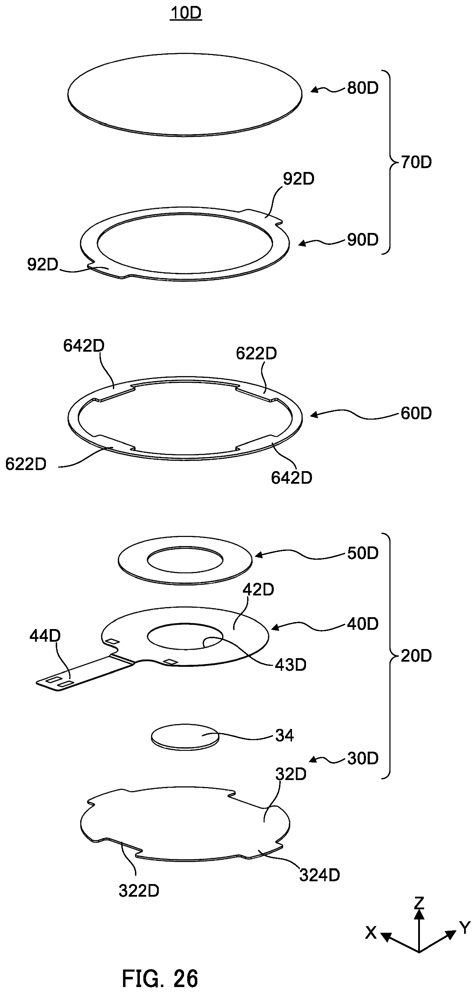

FIG. 24 is a perspective view of a vibration actuator according to Embodiment 5 of the present invention, and FIG. 25 is a sub-assembly view of the vibration actuator. FIG. 26 is an exploded perspective view of the vibration actuator.

Vibration actuator 10D according to Embodiment 5 is formed by making a modification, addition, or the like to a part of the configuration of vibration actuator 10 according to Embodiment 1, and is formed into a disk shape. Therefore, when the same functions as those of the above-described components are provided, the same names and the same reference numerals are given, and the description thereof will be omitted. In addition, components having substantially the same functions will be described with the same names and with a suffix "D" added to the same reference numerals.

Vibration actuator 10D according to Embodiment 5 illustrated in FIGS. 24 to 26 is formed in a disk shape, whereas vibration actuator 10 according to Embodiment 1 is formed in a rectangular flat plate shape. Vibration actuator 10D includes disk-shaped electromagnet section 20D, annular elastic supporting part 60D, and disk-shaped magnetic body 70D, and elastic supporting part 60D supports electromagnet section 20D and magnetic body 70D such that one of electromagnet section 20D and magnetic body 70D moves close to the other and vibrates by energizing coil 50D.

In vibration actuator 10D, in electromagnet section 20D, disk-shaped magnetic pole portion 34 protrudes and is provided on a surface of a central portion of disk-shaped magnetic core body 32D, and coil 50D is disposed around magnetic pole portion 34. On the outer peripheral portion of magnetic core body 32D, connection fixing portions 324D are provided at positions facing each other with the center interposed therebetween, and cutout portions 322D in which extending portion 44D of board section 40D is disposed are formed at positions 90° from the center with respect to connection fixing portions 324D. Cutout portions 322D absorb the thickness of extending portion 44D and contributes to thinning of the entire vibration actuator 10D.

Core-side connecting portions 642D are stacked and bonded to connection fixing portions 324D, and frame-shaped elastic supporting part 60D is disposed to surround magnetic core body 32D.

Elastic supporting part 60D is an annular frame body, and includes core-side connecting portions 642D that protrude inward and are disposed to face each other, and yoke-side connecting portions 622D that protrude inward at equal intervals from core-side connecting portions 642D.

Magnetic body 70D includes disk-shaped magnetic yoke 80D corresponding to elastic supporting part 60D, and an annular member that is disposed point-symmetrically about the center and has spacer joint portions 92D joined to yoke-side connecting portions 622D.

Spacer joint portions 92D are formed to protrude outward from an annular outer edge and are connected to yoke-side connecting portion 622D. As a result, when elastic supporting part 60D is displaced downward, yoke-side connecting portions 622D are also displaced downward, and further, spacer joint portions 92D connected to yoke-side connecting portions 622D are also displaced downward, and spacer 90D also follows and is displaced downward. As spacer 90D is displaced, magnetic yoke 80D on spacer 90D is also displaced downward, and magnetic body 70D is suitably displaced.

Vibration actuator 10D is formed in a disk shape as a whole, and thus the number of edges in the shape is reduced, and the accuracy can be improved.

Magnetic core body 32D and spacer 90D are alternately bonded to elastic supporting part 60D at equal intervals in the circumferential direction in a direction orthogonal to the vibration direction.

As a result, one of electromagnet section 20D (specifically, magnetic core body 32D) and magnetic body 70D is supported to be movable to approach the other in a state of being balanced and perpendicular to the facing direction (vibration direction).

Electromagnet section 20D and magnetic body 70D generate a magnetic attraction force by energizing annular coil 50D. Elastic supporting part 60D moves and vibrates in the thickness direction such that one of electromagnet section 20D and magnetic body 70 approaches the other.

In the above-described embodiments, different components, for example, the outer magnetic pole portion, the outer weight, the plurality of spacers, and the plurality of elastic supporting parts (elastic arms) may be appropriately applied to other embodiments.

In addition, in vibration actuators 10, 10A, 10B, 10C, and 10D of each embodiment, a capacitance detection section may be provided between electromagnet sections 20, 20A, 20B, 20C, and 20D and magnetic bodies 70, 70B, and 70D. In addition, a strain detection sensor including a strain gauge may be provided in elastic supporting parts 60 and 60D.

### < Variation >

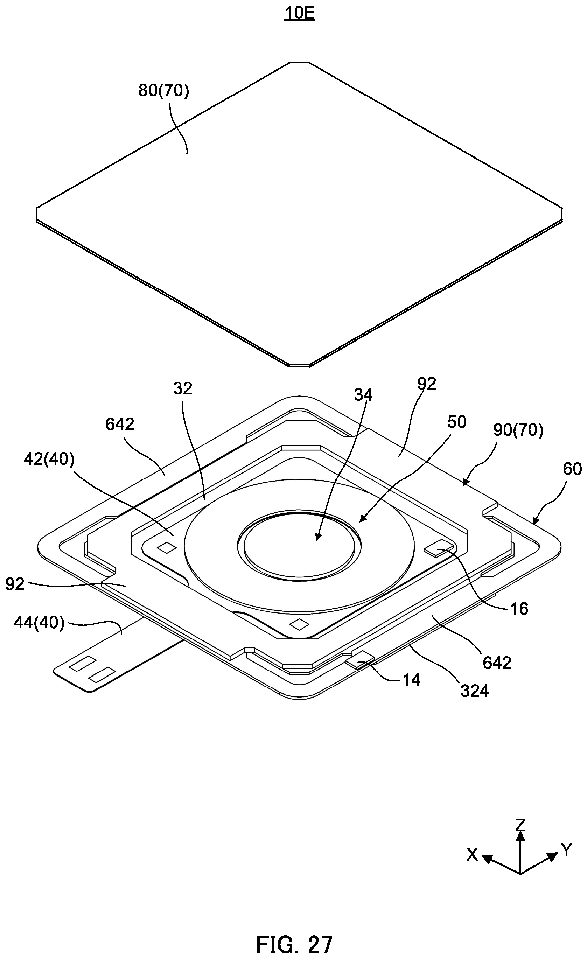

FIG. 27 is a diagram illustrating a variation of the vibration actuator according to the embodiment of the present invention. Vibration actuator 10E illustrated in FIG. 27 includes strain detection section (strain detection sensor) 14 and capacitance detection section (proximity sensor) 16 as a proximity detection section in vibration actuator 10. When the operating load is detected, the vibration actuator may have a configuration including one of strain detection section 14 and capacitance detection section 16.

Strain detection section 14 including a strain gauge is provided. Strain detection section 14 detects the strain of elastic supporting part 60 that is deformed when magnetic body 70 as a movable part is pushed into the bottom surface side (pressing operation direction) of the opening portion. The detected strain is output to a control section or the like, and coil 50 is energized to move magnetic yoke 80 by suction such that the amount of movement of the movable part (for example, magnetic body 70) corresponding to the strain is obtained.

In addition, when vibration actuator 10E is disposed in the device housing such that the strain is generated in a spring that is elastic supporting part 60 due to the operating load, the operating load can also be detected.

Specifically, the touch operation of the operator, that is, the amount of pushing of the movable part (for example, magnetic body 70) is detected using strain detection section 14.

The vibration period of the movable part (for example, magnetic body 70) when the drive current pulse is supplied by port 1 (current pulse supply section) may be adjusted based on the sensor detection result of strain detection section 14. That is, the vibration generated by the driving can be adjusted according to the strain detection result.

Capacitance detection section 16 is provided on magnetic core body 32 to detect a change in capacitance in magnetic core body 32 due to the movement of magnetic body 70. Capacitance detection section 16 may be provided in any manner as long as it detects the relative distance, that is, the proximity between magnetic body 70 (magnetic yoke 80, spacer 90, and the like) and a part of electromagnet section 20.

Thus, the movable part can detect the operator's pressing operation, and it is possible to cause the vibration actuator to generate vibration in accordance with the operation via the control section and to impart the vibration to the operator. As described above, the vibration can be adjusted according to the capacitance detection result, and when vibration actuator 10E is disposed such that the capacitance changes with the operation load, the operation load can also be detected.

Note that vibration actuator 10E may have a configuration in which strain detection section 14 (strain detection sensor) and capacitance detection section 16 (proximity sensor) as a proximity detection section are added to the configuration of vibration actuators 10A to 10H, instead of the configuration of vibration actuator 10. In vibration actuators 10A to 10H, the same functions as those of vibration actuator 10E and the same effects can be obtained. In addition, all of vibration actuators 10A to 10E have the same air vent section as air vent section 100 of vibration actuator 10, and have the same functions and effects.

### (Embodiment 6)

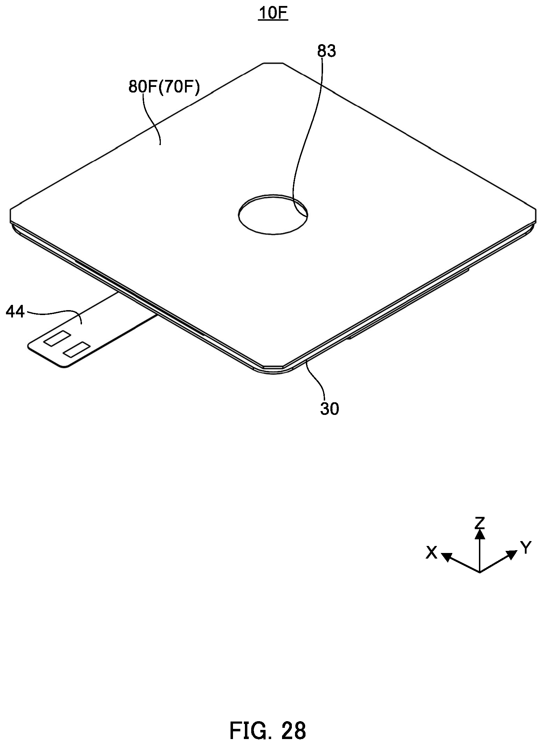

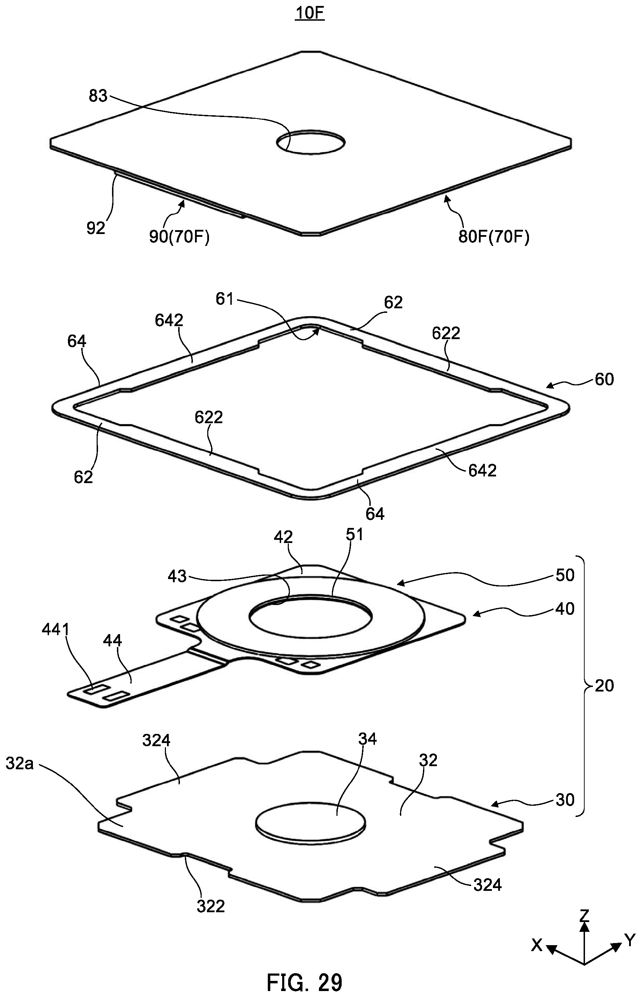

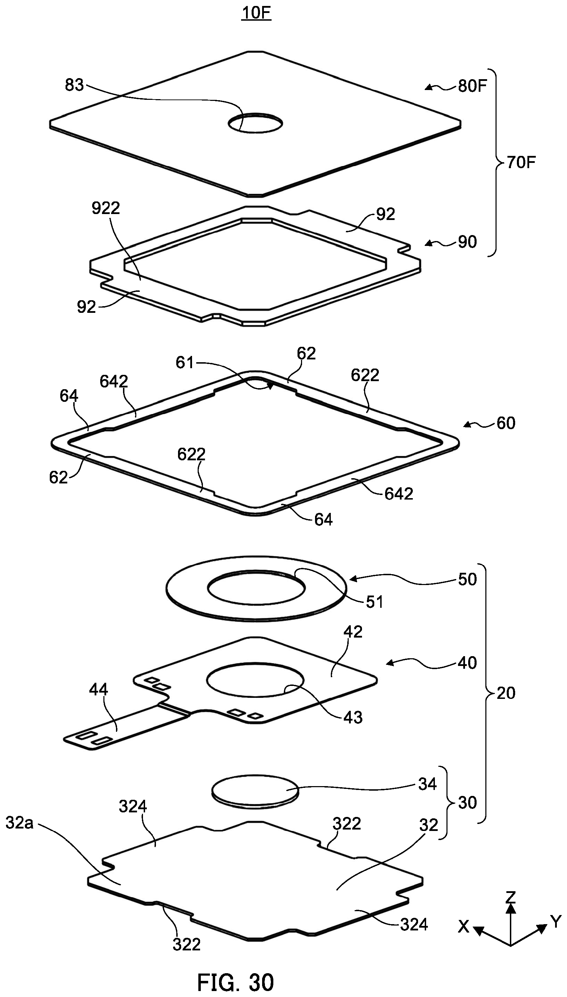

FIG. 28 is an external perspective view of vibration actuator 10 according to Embodiment 6 of the present invention, FIG. 29 is a sub-assembly view of the vibration actuator, and FIG. 30 is an exploded perspective view of the vibration actuator.

Vibration actuator 10F according to Embodiment 6 is formed by making a modification, addition, or the like to a part of the configuration of vibration actuator 10 according to Embodiment 1. Hereinafter, in a case of describing vibration actuator 10F, the same components as the components of vibration actuator 10 will be denoted by the same names and the same reference numerals, and the description thereof will be omitted. In addition, components having substantially the same functions will be described by adding "F" to the same reference numerals.

As shown in vibration actuator 10F according to Embodiment 6 shown in FIGS. 28 to 30, the configuration of vibration actuator 10 may be modified such that communication hole 83 that allows the internal passage and the outside to communicate with each other may be provided in the magnetic member (magnetic yoke 80).

Vibration actuator 10F includes core section 30 including magnetic core body 32 and magnetic pole portion 34, annular plate-shaped coil 50 surrounding magnetic pole portion 34, magnetic body 70F including magnetic yoke 80F having communication hole 83 and spacer 90, and elastic supporting part 60.

A magnetic attraction force is generated between electromagnet section 20 including core section 30 and coil 50 and magnetic body 70F (particularly, magnetic yoke 80F which is a magnetic member) by energizing coil 50. Elastic supporting part 60 supports one of electromagnet section 20 and magnetic body 70 to be displaceable in the thickness direction such that the one approaches the other, and here, supports magnetic yoke 80 as the movable part such that it is movable with respect to core section 30.

Communication hole 83, with the driving of vibration actuator 10F, allows the internal air to circulate between the inside and outside of the vibration actuator via the outer peripheral portion, thereby hindering a biasing force that would move magnetic body 70F and adjusting the amount of movement of magnetic body 70F.

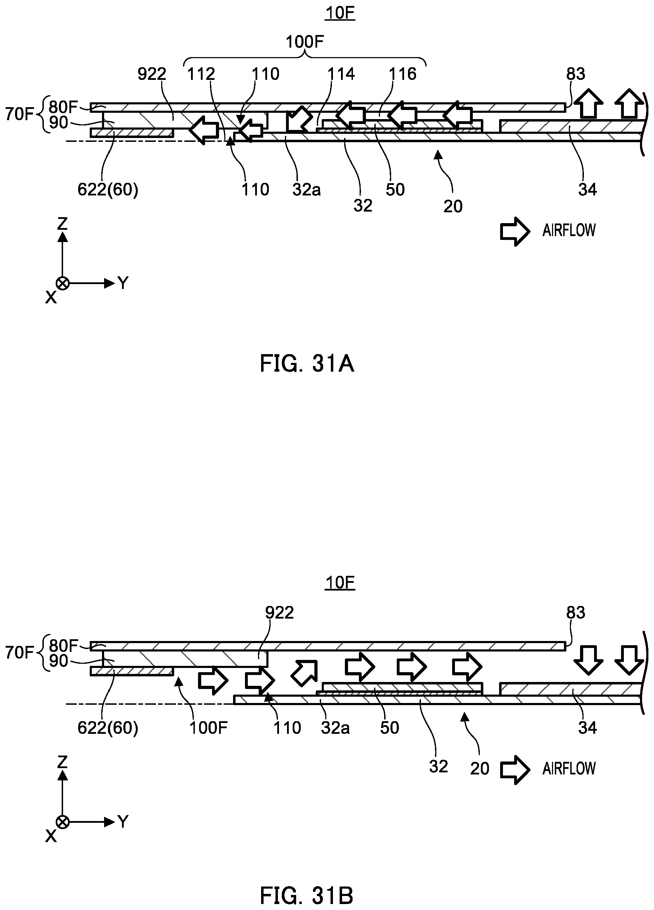

FIG. 31A is a partial sectional view showing the flow of the internal air in the excited state, and FIG. 31B is a view showing the flow of the internal air in the unexcited state. The excited state of the vibration actuator shown in FIG. 31A indicates the time when the thrust is generated, the unexcited state of the vibration actuator in FIG. 31B indicates the time when the spring reaction force is generated, and the state where magnetic body 70 is maximally separated from magnetic core body 32 by the reaction force of elastic supporting part 60 is shown. In addition, in FIGS. 31A and 31B, the extending portion 44 of the interconnection section is not shown for convenience of illustration.

Communication hole 83 is disposed at a position facing the second planar body when magnetic body 70F is the first planar body. Specifically, in magnetic body 70F (magnetic yoke 80F and spacer 90), communication hole 83 is disposed at a position facing magnetic pole portion 34 at the center of magnetic core body 32.

Communication hole 83 functions as a part of air vent section 100F formed in the same manner as air vent section 100.

In vibration actuator 10F, communication hole 83 is provided to communicate with vent portion 112, venting adjustment portion 110, airflow bending portion 114, and internal passage 116 in this order from the outside to the inside of magnetic core body 32. Vent portion 112, venting adjustment portion 110, airflow bending portion 114, and internal passage 116 are included in air vent section 100F.

As a result, air vent section 100F is formed so as to provide communication, within vibration actuator 10F, between the front-surface side of the central portion and the outer peripheral side.

Air vent section 100F is formed in a closed manner (to form a closed internal space) to communicate with the outside only through venting adjustment portion 110 between magnetic core body 32 and magnetic body 70F.

As shown in FIG. 31A, in air vent section 100F, magnetic yoke 80F and electromagnet section 20 close a space between the both in the up-down direction, and form an airflow in a direction along the plate surface in the space when the magnetic yoke and the electromagnet section approach each other. Air vent section 100F causes the airflow to flow to the outside from an outer peripheral portion of magnetic yoke 80F and from outer peripheral portion 32a of magnetic core body 32.

Air vent section 100F is formed in a labyrinth shape in the same manner as air vent section 100, and releases air to the outside through both communication hole 83 on the front-surface side of the central portion of magnetic yoke 80F and venting adjustment portion 110 formed by outer peripheral portion 32a of magnetic core body 32.

Air vent section 100F takes in air from the outside to the inside in a default state in which the magnetic yoke is in an unexcited state or in an unexcited state in which magnetic yoke 80F is separated from magnetic core body 32 or is separated by a maximum distance, as shown in FIG. 31B.

The internal air compressed in the up-down direction by the driving passes between spacer 90 and magnetic core body 32 (venting adjustment portion 110) and passes through communication hole 83 by the formed airflow. When the air passes through venting adjustment portion 110, the flow is hindered by spacer 90 and magnetic core body 32, pressure fluctuation occurs between the opposing surfaces of electromagnet section 20 and magnetic body 70F, and the vibration of magnetic body 70F is attenuated. In addition, when the air passes through communication hole 83, the vibration of magnetic body 70F is further attenuated.

In this way, air vent section 100F attenuates the vibration caused by reciprocating relative movement of magnetic core body 32 and magnetic body 70F in the approaching/separation direction in the surface-normal direction with respect to the surface of magnetic core body 32.

It is preferable that communication hole 83 is disposed symmetrically with respect to vibration actuator 10F or magnetic yoke 80F in plan view.

Communication hole 83 can perform more detailed attenuation adjustment in addition to the attenuation of the vibration by venting adjustment portion 110. As a result, vibration actuator 10F can adjust the attenuation amount of the vibration of magnetic body 70F.

In this way, vibration actuator 10F attenuates the vibration of moving magnetic body 70 (magnetic yoke 80), and can attenuate the vibration (vibration aftereffect) of the aftereffect when the touch operation is performed, similar to other vibration actuators 10 and 10A to 10E, and can impart a crisp tactile sensation with clearly distinguishable strength variation.

### (Embodiment 7)

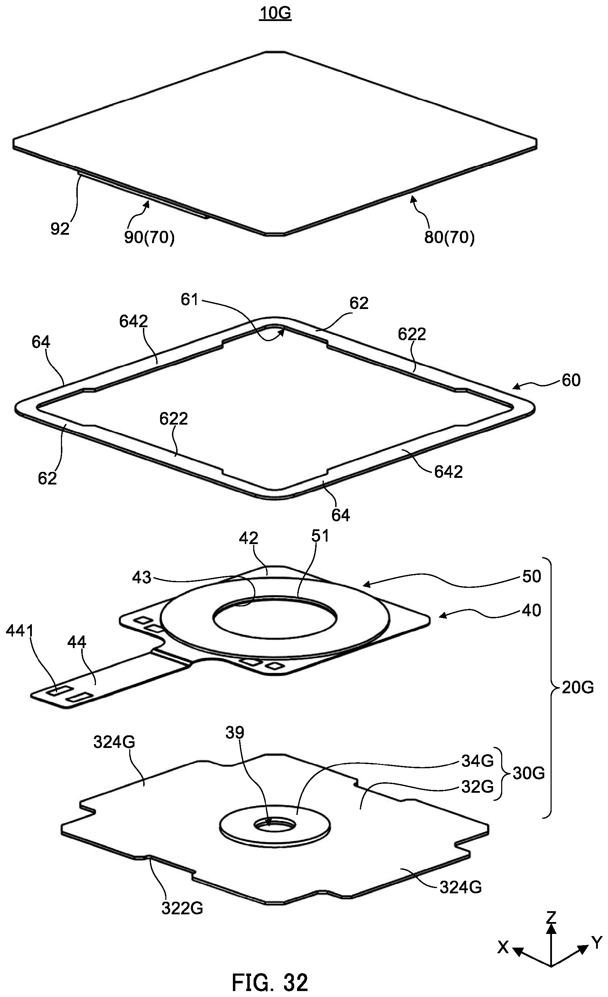

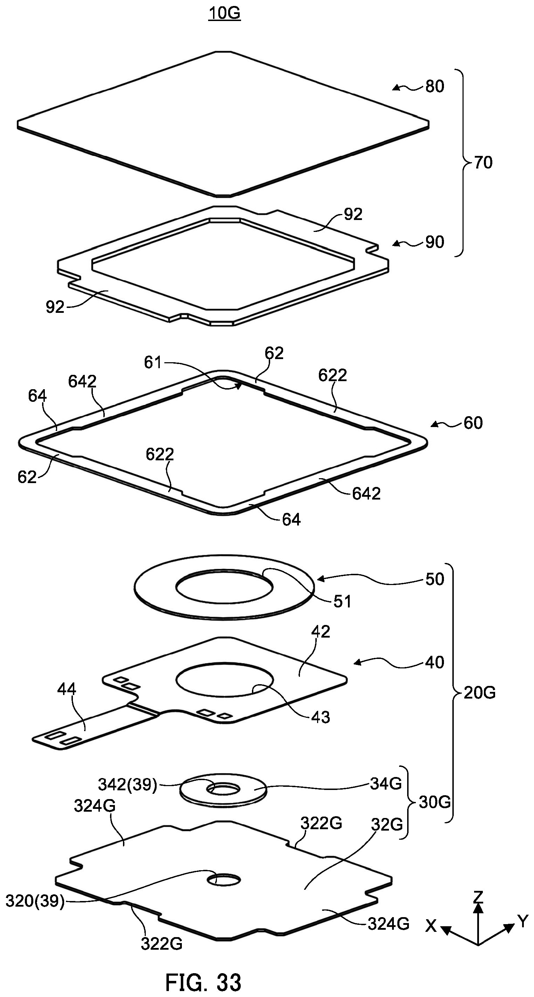

FIG. 32 is a sub-assembly view of a vibration actuator according to Embodiment 7 of the present invention, and FIG. 33 is an exploded perspective view of the vibration actuator.

Vibration actuator 10G according to Embodiment 7 is formed by making a modification, addition, or the like to a part of the configuration of vibration actuator 10 according to Embodiment 1. Hereinafter, in the description of vibration actuator 10G, the same components as the components of vibration actuator 10 are denoted by the same names and the same reference numerals, and the description thereof will be omitted. The components having substantially the same functions will be described by adding the suffix "G" to the same reference numeral.

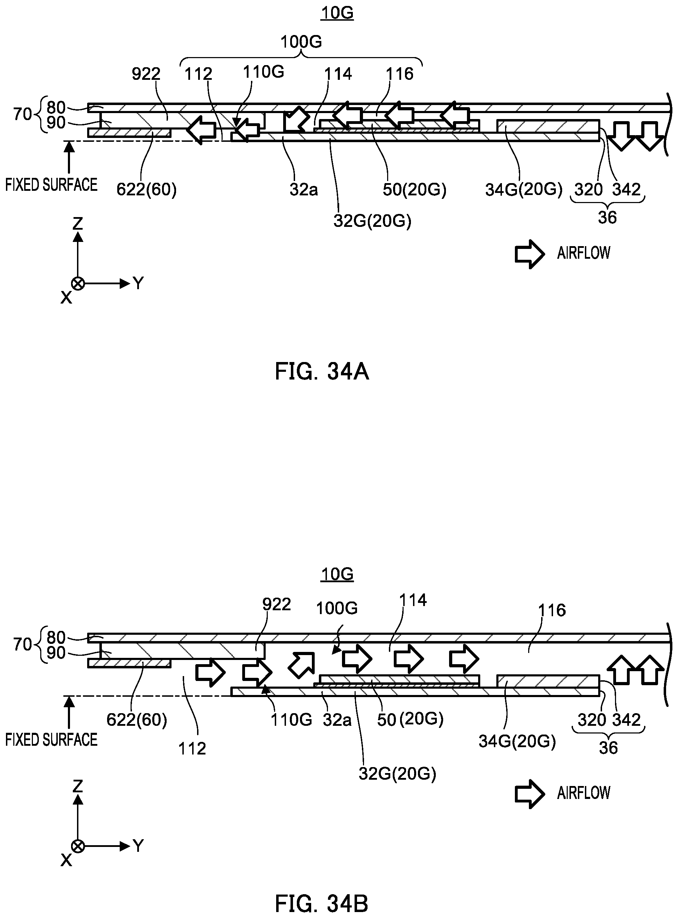

As shown in vibration actuator 10G according to Embodiment 7 shown in FIGS. 32 and 33, the configuration of vibration actuator 10 according to Embodiment 1 may be modified such that communication hole 39 that allows internal passage 116 (see FIG. 34) and the outside to communicate with each other may be provided in core section 30G.

Vibration actuator 10G has the same configuration as vibration actuator 10, except for the configuration of electromagnet section 20G, and the other configurations are the same. Electromagnet section 20G includes, in addition to coil 50 and board section 40, communication hole 39 in core section 30G that is formed in a thin plate shape and is excited to be magnetized in the thickness direction (Z direction).

Vibration actuator 10G includes electromagnet section 20G including coil 50 having an annular plate shape surrounding magnetic pole portion 34G and board section 40, in addition to core section 30G, similarly to vibration actuator 10. In addition, vibration actuator 10G includes magnetic body 70 including magnetic yoke 80 and spacer 90 that are movable with respect to electromagnet section 20G, and elastic supporting part 60 that movably connects magnetic body 70 to electromagnet section 20G.

Communication hole 39 of core section 30G is formed in the central portion of core section 30G. Core section 30G includes magnetic core body 32G that is a plate of a magnetic body, and magnetic pole portion 34G that is disposed on the upper surface of magnetic core body 32G.

Through-hole 320 is provided in the central portion of magnetic core body 32G, and through-hole 342 that communicates with through-hole 320 is provided in the central portion of magnetic pole portion 34G. Communication hole 39 of core section 30G is formed by through-holes 320 and 342, and communication hole 39 communicates with internal passage 116 (see FIGS. 34A and 34B) of vibration actuator 10G. Through-holes 320 and 342 are formed, for example, in a circular shape having the same diameter.

A magnetic attraction force is generated between electromagnet section 20G including core section 30G and coil 50 and magnetic body 70 (particularly, magnetic yoke 80 that is a magnetic member) by energization of coil 50. Elastic supporting part 60 supports one of electromagnet section 20G and magnetic body 70 to be displaceable in the thickness direction such that the one approaches the other. Elastic supporting part 60 supports, for example, magnetic yoke 80 as a movable part with respect to core section 30G to be movable.

Communication hole 39 adjusts the damping amount of vibration that moves magnetic body 70 by causing the internal air to flow inside and outside the vibration actuator via the outer peripheral portion in accordance with the driving of vibration actuator 10G.

FIG. 34A is a partial sectional view showing the flow of the internal air in the excited state, and FIG. 34B is a view showing the flow of the internal air in the unexcited state. The excited state in FIG. 34A indicates a time when thrust is generated, and the unexcited state of the vibration actuator in FIG. 34B indicates a time when a spring reaction force is generated after the coil is excited. FIG. 34B shows a state in which magnetic body 70 is maximally separated from magnetic core body 32 by the reaction force of elastic supporting part 60. In addition, in FIGS. 34A and 34B, extending portion 44 of the interconnection section is not shown for convenience of illustration.

Communication hole 39 is provided in electromagnet section 20G, and is disposed in the central portion of the second planar body facing the first planar body when magnetic body 70 is the first planar body. Specifically, communication hole 39 is provided at the center of the second planar body in vibration actuator 10 having a rectangular shape in plan view, and functions as a part of air vent section 100G formed in the same manner as air vent section 100.

In air vent section 100G, magnetic yoke 80 and electromagnet section 20G substantially close (open at the outer peripheral portion and communication hole 39 during separation) the space between the magnetic yoke and the electromagnet section in the up-down direction, and form an airflow in a direction along the plate surface in the space when the magnetic yoke and the electromagnet section approach each other. Air vent section 100G causes the airflow to flow from magnetic yoke 80 and outer peripheral portion 32 of electromagnet section 20G to the outside.

In vibration actuator 10G, communication hole 39 is provided to communicate with internal passage 116 in vent portion 112, venting adjustment portion 110G, airflow bending portion 114, and internal passage 116, which communicate with one another in order from the outside of magnetic core body 32G toward the center. Air vent section 100G includes vent portion 112, venting adjustment portion 110G, airflow bending portion 114, internal passage 116, and communication hole 39.

As a result, air vent section 100G is formed so as to provide communication, within vibration actuator 10G, between the back-surface side of the central portion and the outer peripheral side. When vibration actuator 10G is fixed to a fixed surface of a product or the like, it is preferable that vibration actuator 10G is fixed such that communication hole 39 at the center of magnetic core body 32G is not closed from the outside.

In a case where vibration actuator 10G is driven and magnetic yoke 80 approaches magnetic core body 32G, air vent section 100G releases the internal air to the outside while attenuating the vibration caused by the relative movement of magnetic yoke 80 with respect to magnetic core body 32G by the internal air, as shown in FIG. 34A. Air vent section 100G is formed in a labyrinth shape as in air vent section 100, and includes a gap having a labyrinth shape.

Air vent section 100G releases the internal air between magnetic core body 32G and magnetic yoke 80 to the outside through both communication hole 39 on the back surface side of the central portion of magnetic yoke 80 and venting adjustment portion 110G configured by outer peripheral portion 32a of magnetic core body 32G.

Communication hole 39 can adjust the amount of released air in addition to adjusting the flow rate (discharge amount) of air released by venting adjustment portion 110G.

In an unexcited state in which magnetic yoke 80 shown in FIG. 34B is separated from magnetic core body 32G or is separated from magnetic core body 32G by a maximum distance, air vent section 100G takes in air from the outside to the inside. In a default state that is an unexcited state before coil excitation, or an unexcited state after movement due to the reaction force of the spring after coil excitation, air vent section 100G is in a state in which air is taken in from the outside.

In vibration actuator 10G, the internal air compressed in the up-down direction by the driving passes through the gap between the spacer and magnetic core body 32G (venting adjustment portion 110G) and communication hole 39. When the air passes through venting adjustment portion 110G, the flow is hindered by spacer 90 and magnetic core body 32G, and the vibration of magnetic body 70 is attenuated. When the air passes through communication hole 39, the vibration can be further attenuated.

Air vent section 100G takes in and discharges the internal air by reciprocating movement of magnetic core body 32G and magnetic body 70G in the surface normal direction with respect to the surface of magnetic core body 32G in the approach and separation direction, thereby attenuating the vibration.

By attenuating the vibration in this way, as in other vibration actuators 10 and 10A to 10F, the vibration of the aftereffect when the touch operation is performed, in other words, the vibration aftereffect subsides, and a crisp tactile sensation with clearly distinguishable strength variation can be imparted.

Communication hole 39 can perform more detailed attenuation adjustment in addition to the attenuation adjustment of the vibration in venting adjustment portion 110G.

As a result, venting adjustment portion 110G can adjust the attenuation amount of the biasing force for moving the movable part (magnetic body 70).

Through-holes 342 and 320 may have any shape and dimension as long as they communicate with each other. Note that, it is preferable that communication hole 39 is disposed symmetrically in bottom view in vibration actuator 10G or magnetic core body 32G. In addition, a plurality of communication holes 39 may be provided in electromagnet section 20G.

### (Embodiment 8)

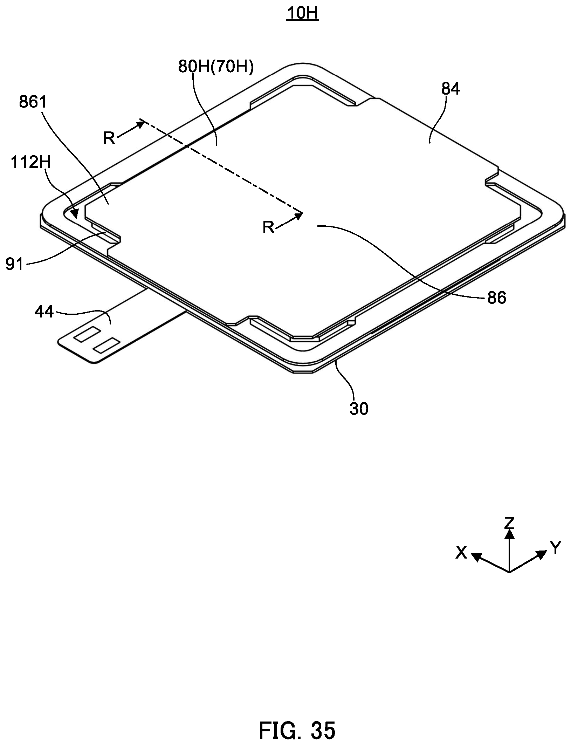

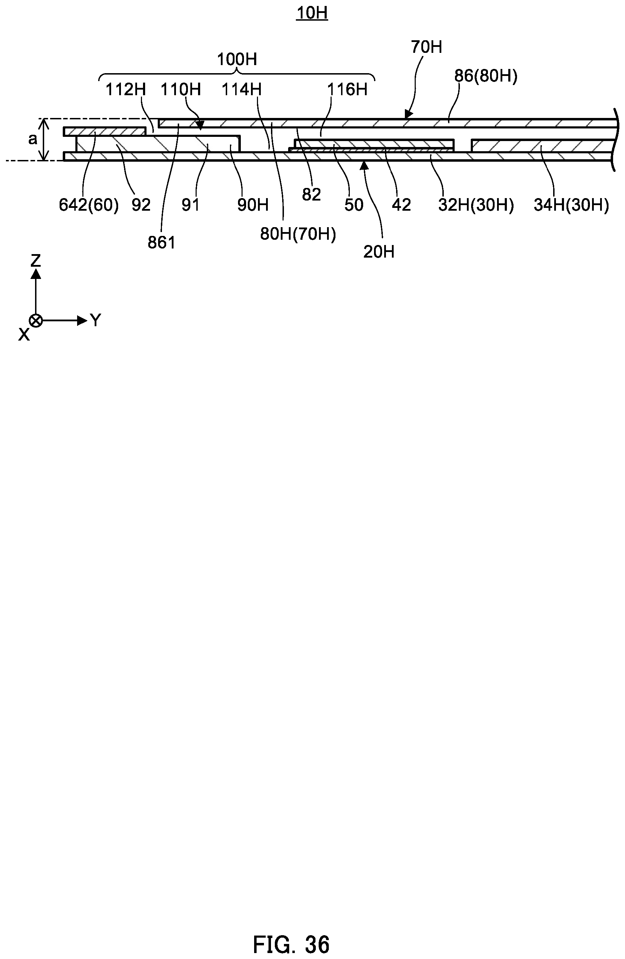

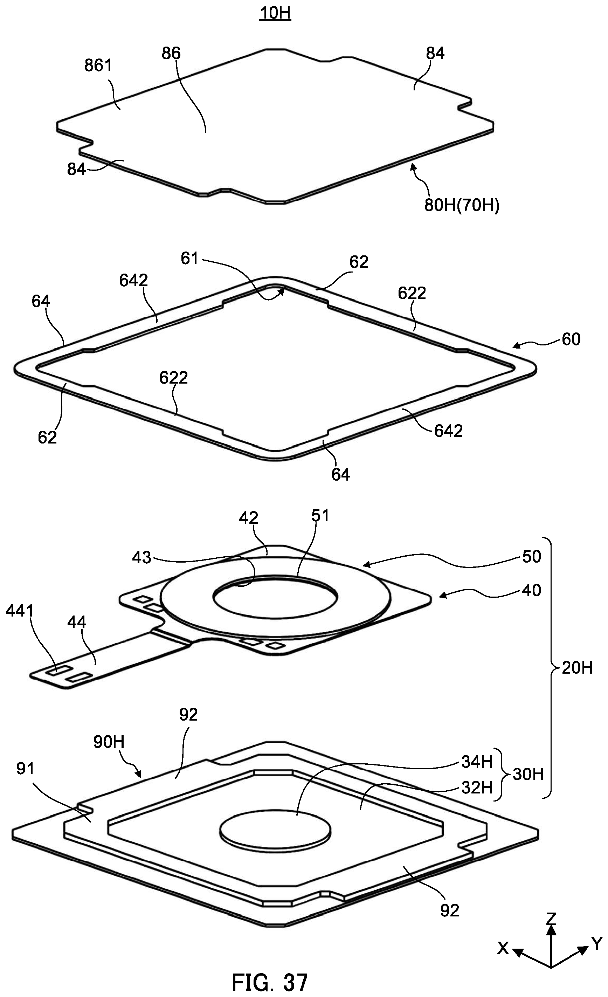

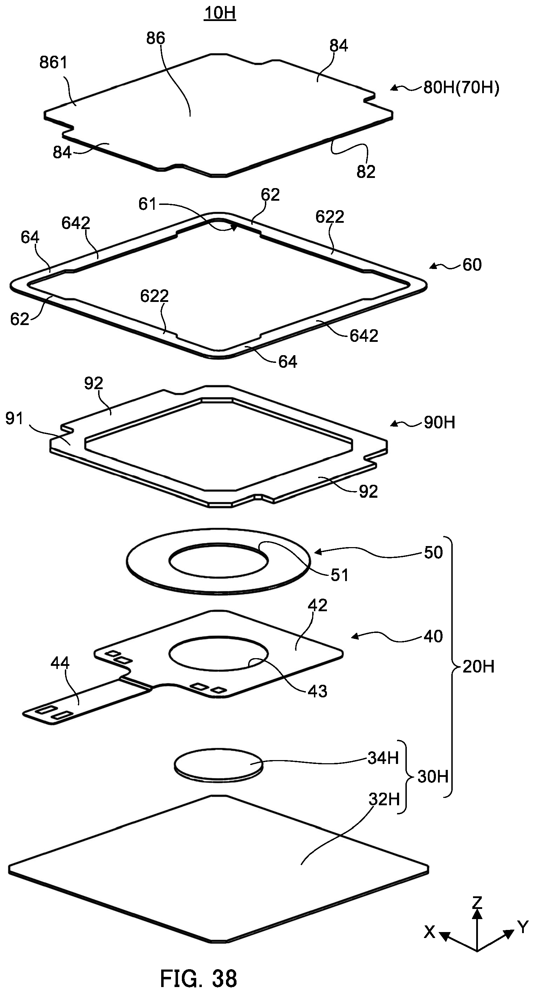

FIG. 35 is an external perspective view of vibration actuator 10H according to Embodiment 8 of the present invention, and FIG. 36 is a partial sectional view taken along line R-R of FIG. 35. In addition, FIG. 37 is a sub-assembly view of the vibration actuator, and FIG. 38 is an exploded perspective view of the vibration actuator.

Vibration actuator 10H according to Embodiment 8 is formed by changing a part of the configuration of vibration actuator 10 according to Embodiment 1. In vibration actuator 10H, components having the same functions as the above-described components are denoted by the same names and the same reference numerals, and the description thereof will be omitted. Note that, in the present embodiment and other embodiments, components having the same names as those in Embodiment 1 are basically formed of the same materials. In addition, components having substantially the same functions are described by adding the suffix "H" to the same reference numerals.

As shown in vibration actuator 10H according to Embodiment 8 shown in FIGS. 35 to 38, in vibration actuator 10 according to Embodiment 1, the configuration is such that the stacking order of elastic supporting part 60 and spacer 90 on magnetic core body 32H is reversed.

Vibration actuator 10H is configured by stacking spacer 90H, elastic supporting part 60, and magnetic yoke 80H in this order on magnetic core body 32H. Vibration actuator 10H includes air vent section 100H (see FIG. 36) inside.

Specifically, vibration actuator 10H includes electromagnet section 20H including spacer 90H in addition to core section 30H (magnetic core body 32H and magnetic pole portion 34H) and annular plate-shaped coil 50, magnetic yoke 80H (magnetic body 70H), and elastic supporting part 60.

Electromagnet section 20H and magnetic yoke 80H (magnetic body 70H) generate a magnetic attraction force by energizing coil 50. Elastic supporting part 60 supports one of magnetic yoke 80H and electromagnet section 20H such that it is movable to approach the other in a state of being balanced and perpendicular to the facing direction (vibration direction and thickness direction) with respect to the other. In vibration actuator 10H, for example, magnetic yoke 80H is fixed to a fixed surface of a product, and interval a is formed between magnetic yoke 80H and magnetic core body 32H.

Magnetic core body 32H is a rectangular flat plate-shaped magnetic body having basically the same function as magnetic core body 32. Magnetic core body 32H is a square plate-shaped body having a different planar shape from magnetic core body 32.

On the upper surface of magnetic core body 32H, magnetic pole portion 34H disposed at the central portion and frame-shaped spacer 90H disposed to surround electromagnet section 20H are provided.

Spacer 90H has spacer joint portions 92 that protrude outward from the side portions facing each other in frame-shaped main body 91 formed in a rectangular frame shape (square frame shape).

The upper surfaces of spacer joint portions 92 are fixed to core-side connecting portions 642 of elastic supporting part 60. Spacer 90H is interposed between magnetic core body 32H and elastic supporting part 60 at a position in a direction perpendicular to the plate surface of magnetic core body 32H. Spacer 90H separates magnetic yoke 80H from electromagnet section 20H in the up-down direction such that magnetic yoke 80H is movable.

Spacer 90H supports frame-shaped elastic supporting part 60 such that it is deformable on the outer side of spacer 90H. With this configuration, spacer 90H has a thickness for securing a deformation region of elastic supporting part 60 and a movement region of magnetic yoke 80H that moves via elastic supporting part 60.

The thickness of spacer 90H, together with the gap between elastic supporting part 60 and magnetic core body 32H, forms a gap between magnetic yoke 80 and coil 50 and magnetic pole portion 34, that is, an air gap. As a result, the movable region of magnetic yoke 80H in vibration actuator 10H is sufficiently set, and suitable vibration characteristics can be obtained.

Spacer 90H has an effect that a plate material having a thickness that facilitates setting of accurate dimensions can be used, and is a non-magnetic body, but may be a magnetic material. Spacer 90H is formed of, for example, a high-precision steel sheet made of an austenitic stainless steel strip for a spring manufactured by cold rolling. Note that, similar to spacer 90, the degree of freedom of an elastic member such as a leaf spring used for elastic supporting part 60 can be increased according to the design of spacer 90H.

Further, spacer 90H may be formed using a high specific gravity material. Note that spacer 90H is disposed inside the outer periphery of magnetic core body 32H. The maximum outer shape dimension (dimension in plan view) of vibration actuator 10H is set by the outer shape dimension of magnetic core body 32H.

Elastic supporting part 60 elastically supports electromagnet section 20H and magnetic yoke 80H, which is magnetic body 70H, by connecting them such that they are relatively movable. Specifically, elastic supporting part 60 is disposed outside coil 50 and connects spacer 90H to magnetic yoke 80H.

Elastic supporting part 60 has a predetermined thickness (thickness in the Z direction) and is disposed in a layered manner between spacer 90H and magnetic yoke 80H in the thickness direction (Z direction).

Elastic supporting part 60 is joined to spacer joint portions 92 at core-side connecting portions 642 and is disposed such that frame-shaped main body 91 of spacer 90H, coil 50, and magnetic pole portion 34 are located inside opening portion 61.

Elastic supporting part 60 has a pair of yoke-side connecting portions 622 at a pair of side portions 62 adjacent to a pair of facing side portions 64. Yoke connecting portions 84 of magnetic yoke 80H are connected to yoke-side connecting portions 622. Magnetic yoke 80H is disposed to face magnetic pole portion 34H and coil 50 at the central portion thereof.

Yoke-side connecting portions 622 position magnetic yoke 80H (magnetic body 70H) in a state stacked in the Z direction.

As shown in FIG. 36, elastic supporting part 60 elastically supports yoke main body 86 disposed inside the frame-shaped portion of elastic supporting part 60 at a pair of portions (yoke-side connecting portions 622) of opposite sides of the frame-shaped portion. Thus, elastic supporting part 60 can support magnetic yoke 80H in a well-balanced manner and can cause the magnetic yoke to stably vibrate.

Yoke-side connecting portions 622 and core-side connecting portions 642 are planar members formed to protrude inward from side portions 62 and 64 constituting the frame-shaped portion of elastic supporting part 60. Yoke-side connecting portions 622 and core-side connecting portions 642 are connected to yoke connecting portions 84 and spacer joint portions 92 in a state of being in surface contact with yoke connecting portions 84 and spacer joint portions 92 in the Z direction at the respective facing side portions of elastic supporting part 60.

Yoke-side connecting portions 622 and core-side connecting portions 642 are disposed at positions rotated by 90 degrees with respect to each other in rectangular frame-shaped elastic supporting part 60, and are configured to have the same length and the same width. As a result, it is not necessary to determine the orientation of elastic supporting part 60 during assembly, and thus it is possible to improve the assemblability. In addition, since elastic supporting part 60 is a frame-shaped body, the spring length can be increased, and stable assemblability can be ensured. In addition, since elastic supporting part 60 is an integrated structure, the component accuracy can be improved.

Magnetic yoke 80H has the same function as magnetic yoke 80, and is attracted to magnetic pole portion 34H in an excited state by a magnetic attraction force generated between the magnetic yoke and magnetic pole portion 34 due to energization of coil 50, and is separated from magnetic pole portion 34H in an unexcited state.

Magnetic yoke 80H is a flat plate-shaped magnetic body that is disposed to face magnetic pole portion 34H and coil 50 to cover magnetic pole portion 34H and coil 50. Magnetic yoke 80H faces magnetic pole portion 34H and coil 50 from above on lower surface 82.

Magnetic yoke 80H includes yoke main body 86 that is a rectangular plate disposed in the frame-shaped portion of elastic supporting part 60, and yoke connecting portions 84 that protrude in the Y direction from a pair of parallel side portions of yoke main body 86 that are separated from each other in the Y direction. Magnetic yoke 80H is fixed in a state in which the pair of yoke connecting portions 84 are joined to the pair of yoke-side connecting portions 622 and suspended from elastic supporting part 60.

As shown in FIG. 36, air vent section 100H is provided between electromagnet section 20H and magnetic yoke 80H as magnetic body 70H to communicate between the magnetic yoke 80H side and the inside of vibration actuator 10H. In FIG. 36, the length from the fixed surface to the surface of magnetic yoke 80H in a state in which vibration actuator 10H attached to the fixed surface is in an unexcited state and magnetic yoke 80H and electromagnet section 20H are at the initial positions is indicated by length a.

Air vent section 100H releases air generated inside to the outside when magnetic yoke 80H and electromagnet section 20H move relative to each other in the surface normal direction with respect to the surface of magnetic core body 32H in the approach and separation direction.

Specifically, air vent section 100H includes vent portion 112H, venting adjustment portion 110H, airflow bending portion 114H and internal passage 116H on the inner side of the venting adjustment portion. Air vent section 100H is formed in a closed manner to communicate with the outside only through venting adjustment portion 110H between magnetic core body 32H and magnetic yoke 80H. Airflow bending portion 114H and internal passage 116H are the same as airflow bending portion 114 and internal passage 116 described above, and thus the description thereof will be omitted.

Vent portion 112H is formed between the outside of magnetic yoke 80H and the inside of elastic supporting part 60. Vent portion 112H is disposed on the fixed surface side when vibration actuator 10H is attached to the fixed surface.

Venting adjustment portion 110H is defined by the gap between outer peripheral portion 861 of magnetic yoke 80H (yoke main body 86) and frame-shaped main body 91 of spacer 90H. Specifically, venting adjustment portion 110H is formed by the gap between the opposing surfaces of outer peripheral portion 861 of magnetic yoke 80H and frame-shaped main body 91 of spacer 90H. By adjusting this gap, venting adjustment portion 110H adjusts the amount of air that is obstructed when flowing from the inside to the outside of the vibration actuator. Thus, the attenuation of the vibration of the movable part can be adjusted.

In vibration actuator 10H, air vent section 100H is configured as a gap in a step shape bent up and down by the thickness of outer peripheral portion 861 of magnetic yoke 80H, a layer in which venting adjustment portion 110H is located on outer peripheral portion 861, airflow bending portion 114H, and internal passage 116H. Note that, when magnetic yoke 80H is attached to the fixed surface, air vent section 100H constitutes a gap in a labyrinth shape together with the fixed surface.

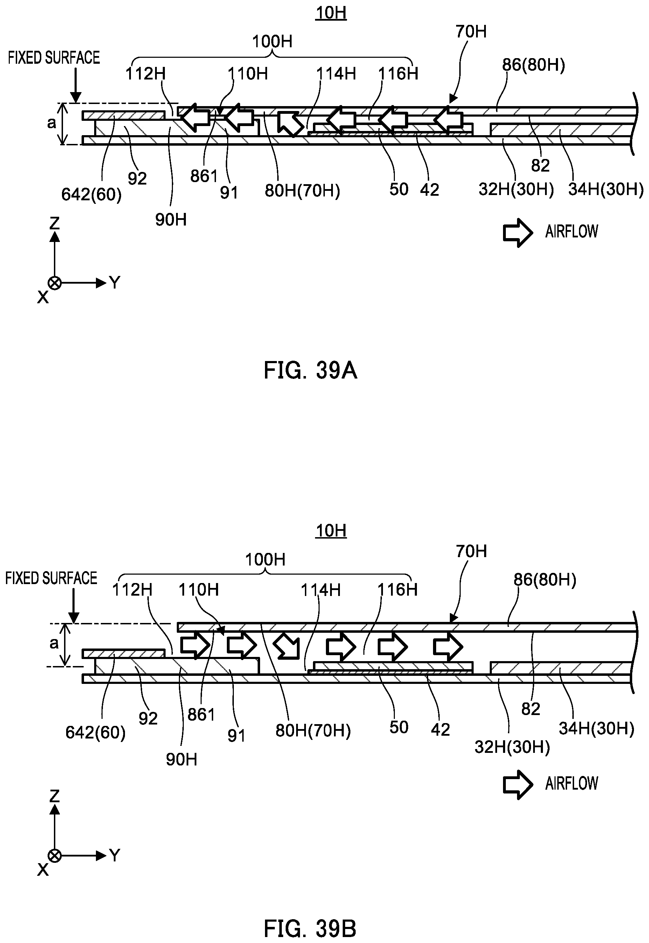

FIG. 39A is a partial sectional view illustrating the flow of internal air in the excited state, and FIG. 39B is a view illustrating the flow of internal air in the unexcited state. Note that the excited state of the vibration actuator illustrated in FIG. 39A indicates the time of thrust generation, the unexcited state of the vibration actuator in FIG. 39B indicates the time of spring reaction force generation, and the state in which magnetic body 70H is maximally separated from magnetic core body 32H by the reaction force of the elastic supporting part.

Air vent section 100H releases air to the outside (outer vent portion 112H) via venting adjustment portion 110H when vibration actuator 10H is driven and magnetic yoke 80H approaches magnetic pole portion 34H or magnetic core body 32H. Venting adjustment portion 110H includes a space between outer peripheral portion 861 of magnetic yoke 80H and frame-shaped main body 91 of spacer 90H.

Air vent section 100H configured as a gap in a step shape bent up and down forms an airflow in a direction along both surfaces due to the proximity of electromagnet section 20H and magnetic body 70H, and pressure fluctuation occurs between the opposing surfaces of electromagnet section 20H and magnetic body 70H, thereby applying a load. Due to this load, the flow of air is hindered, and the vibration caused by the relative movement between electromagnet section 20H and magnetic body 70H is attenuated.

Air vent section 100H can hinder and discharge the internal air that is compressed when the air moves inside and outside vibration actuator 10H, and can suppress the vibration (vibration aftereffect) of the electromagnet section 20H that is relatively moved, thereby imparting a crisp tactile sensation.

Air vent section 100H releases the internal air present between the both opposing surfaces of magnetic body 70H, which is the movable part, and the fixed part to the outside in the excited state, that is, when core section 30H that is excited attracts and pulls magnetic body 70H, specifically, magnetic yoke 80H.

In addition, air vent section 100H takes in air from the outside to the inside in an unexcited state (see FIG. 39B) in which magnetic yoke 80H is separated from magnetic core body 32H at a maximum distance.

In vibration actuator 10H, in a default state, which is an unexcited state shown in FIG. 36, air is taken into vibration actuator 10H. In vibration actuator 10H, when coil 50 is energized and excited in the default state (state shown in FIG. 36), a magnetic attraction force is generated in electromagnet section 20H. As a result, as shown in FIG. 39A, magnetic yoke 80H, which is the movable part, approaches magnetic core body 32H or magnetic pole portion 34H. In this case, the air in internal passage 116H is compressed, passes through airflow bending portion 114H, flows to outer peripheral portion 861 side of yoke main body 86 of magnetic yoke 80H, and moves to the radially outer side from between outer peripheral portion 861 and frame-shaped main body 91 of spacer 90H.

That is, the internal air is discharged to the radially outer side of outer peripheral portion 861, that is, to the outside of vibration actuator 10H that is above spacer 90 and outside outer peripheral portion 861 (including a space formed by the thickness of elastic supporting part 60) via venting adjustment portion 110H.

Venting adjustment portion 110H adjusts the length (length in the Z direction, which is the vibration direction) between frame-shaped main body 91 of spacer 90H and outer peripheral portion 861 in a case where magnetic yoke 80H is closest to core section 30H when the air is discharged from airflow bending portion 114H to the outside. For example, when magnetic yoke 80H is excited and approaches core section 30H, as the gap between outer peripheral portion 861 and frame-shaped main body 91 is narrowed, the air is hindered, and pressure fluctuation occurs in venting adjustment portion 110H, and the vibration on the electromagnet side including magnetic core body 32H is greatly attenuated.

As described above, in vibration actuator 10H, the internal air compressed in the up-down direction by the driving passes between spacer 90H and magnetic yoke 80H (venting adjustment portion 110H). When the internal air passes through venting adjustment portion 110H, the internal air is hindered, and the vibration of magnetic yoke 80H can be attenuated. By attenuating the vibration in this way, as in other vibration actuators 10 and 10A to 10G, the vibration of the aftereffect in a case of the touch operation, in other words, the vibration aftereffect subsides, and a clear tactile sensation of strong and weak can be imparted.

### < Vibration Presentation Device (Contact-Type Input Device) 500 >

FIG. 40 is a plan view illustrating an example of a vibration presentation device including a vibration actuator. In FIG. 40, for convenience, a planar trackpad body that is pressed by the operator with a finger is shown in a transparent manner.

Vibration presentation device 500 is, for example, a trackpad as a pointing device used instead of a mouse in a laptop computer or the like.

The trackpad as vibration presentation device 500 is disposed in a rectangular opening portion provided in a housing of a laptop computer or the like. The trackpad includes pad body 510 that is a plate-shaped body to be traced with a finger as a touch operation, vibration actuator 10 that is disposed on a back surface of pad body 510, and frame portion 520 that partitions an opening portion surrounding vibration actuator 10.

When pad body 510 is touched or tapped with a finger, vibration actuator 10 imparts vibration that is a tactile sensation. Vibration actuator 10 may be changed to any of vibration actuators 10A to 10H.

In vibration actuator 10 in the trackpad, magnetic body 70 is attached to the back surface of pad body 510, and pad body 510 is directly driven to apply vibration to the operator. Specifically, as shown in FIG. 40, the back surface of magnetic core body 32 is fixed to bottom portion 530 of an opening portion of the housing as a fixed surface, magnetic body 70 is fixed to the back surface of pad body 510, and pad body 510 above the opening portion is disposed to close the opening portion.

Pad body 510 is bonded to magnetic body 70 via a double-sided tape or the like as an adhesive material. In addition, in the configuration of vibration presentation device 500, vibration actuator 10 may be attached to indirectly drive pad body 510 via magnetic body 70 to apply vibration.

In a case where a touch operation such as tracing or tapping pad body 510 with a finger is performed, a pressure sensor (which may be strain detection sensor (strain detection section 14) or proximity sensor 16, not shown) may sense this operation, and vibration actuator 10 may be driven based on a signal from the pressure sensor.

For example, a configuration in which vibration actuator 10 having a pressure sensor (or vibration actuator 10E having proximity sensor 16 shown in FIG. 27) is used is adopted. According to this configuration, when the operator operates pad body 510, pad body 510 is pressed and displaced, and magnetic body 70 is displaced accordingly, and the pressure sensor (or proximity sensor 16 or the like) detects this displacement. That is, immediately after the start of the operation, an input signal (actuator drive signal) is input to the vibration actuator based on the pressure sensing, and magnetic body 70 moves in the pushing direction (Z direction) and is displaced downward. In a case where magnetic body 70 is displaced downward, magnetic body 70 moves to a position equal to or higher than the operation reference position, which is the initial position, due to the reaction force of elastic supporting part 60. Accordingly, pad body 510 is also displaced.

As described above, vibration presentation device 500 is vibrated specifically by vibration actuator 10 driven accordingly when pad body 510 is operated by an operator's finger or the like, which is a pushing object, coming into contact with pad body 510 of the trackpad. This vibration gives the operator a tactile sensation. For example, in the case of an operation of pressing a switch, it is possible to provide a feeling of pressing the switch.

In addition, since vibration actuator 10 is disposed on the back surface of pad body 510, vibration can be directly applied to present an excellent tactile sensation. In addition, since vibration actuator 10 has a thin flat plate shape, it does not occupy a large arrangement space in vibration presentation device (contact-type input device) 500 on which the vibration actuator is mounted, and it is possible to improve the design of the contact-type input device.

For example, when a display section such as a liquid crystal display is provided in electronic equipment including the trackpad, vibration actuator 10 may be configured to impart various types of tactile sensations to the trackpad in correspondence with a display image operated by the operator. For example, vibration actuator 10 may generate vibration so as to impart a tactile sensation of a mechanical switch corresponding to an image that is the target operated by contact. The mechanical switch is, for example, a tactile switch, an alternate switch, a momentary switch, a toggle switch, a slide switch, a rotary switch, a DIP switch, a rocker switch, or the like. Further, in a push-type switch, a tactile sensation of pushing the switch with a different degree of pushing can also be imparted.

As described above, vibration presentation device 500 of the present embodiment realizes a realistic tactile sensation expression, such as the tactile sensation of a switch, as a realistic tactile sensation expression based on load detection. Note that, vibration actuators 10A to 10H are driven by the same magnetic circuit (see FIGS. 8 and 9) and the same driving principle as vibration actuator 10.

In addition, the vibration actuator in each embodiment and variation includes a magnetic body as a magnetic member and an electromagnet. In addition, magnetic bodies 70, 70B, 70D, 70F, 70G, and 70H, and magnetic bodies (magnetic members) described later may be configured to include a magnetic material. For example, when the magnetic body is a first planar body, a configuration in which the first planar body and a second planar body including an electromagnet section are driven in a surface normal direction (a direction orthogonal to both surfaces) may be adopted.

Further, each of the following embodiments is formed by making a modification, addition, or the like to a part of the configuration of vibration actuator 10 described above, and when the same functions as those of the above-described components are provided, the same names and the same reference numerals are given, and the description thereof will be omitted.

In addition, in the following, the above-described components may be represented by different names for convenience. Note that, these different names may be given to the above-described components. Specifically, the configuration in which coil 50 is disposed in magnetic pole portion 34 may be referred to, based on its function, as an electromagnet section, and the plate-shaped elastic part (elastic supporting part) may be referred to as an elastic body. In addition, specifically, plate-shaped magnetic core body 32 of the core section (magnetic core) may be referred to as a second planar body, a second magnetic body, and more specifically, a base. Spacer 90 may be configured with a magnetic body as a yoke, or may be integrated with a magnetic yoke as a magnetic member.

In addition, as a material of each component of the following embodiments, the coil is highly conductive and is made of, for example, copper. The core is preferably formed of a material having a high magnetic permeability (which is a ferromagnetic material and is simply referred to as a magnetic material), and is formed of SECC, a silicon steel plate, SUS, or the like. It is preferable that the plate-shaped elastic part and the elastic body are non-magnetic bodies, and SUS, phosphor bronze, resin, rubber, or the like may be applied as a non-magnetic material that constitutes the plate-shaped elastic part and the elastic body. In addition, the core section (magnetic core) and the base are preferably made of a material having a high magnetic permeability, for example, SECC, a silicon steel sheet, SUS (ferromagnetic SUS), or the like. The spacer weight section, the weight, and the weight plate are formed of a high specific gravity material, phosphor bronze, SUS, tungsten, or the like. Note that, each of the above-described components may include the components of Embodiments 1 to 8.

Each of the following vibration actuators has a basic configuration similar to that of vibration actuator 10. Each vibration actuator basically includes a plate-shaped core section (magnetic core body, second planar body), a coil on the magnetic core, an elastic supporting part that connects the core section and a magnetic member, and the magnetic member (first planar body, magnetic yoke) having a lower surface facing the core from above.

Note that, the magnetic member facing the coil from above may be composed of a magnetic yoke alone or a magnetic yoke and a spacer (magnetic yoke). The magnetic member and the electromagnet section close a space between the magnetic member and the electromagnet section in the up-down direction and include an air vent section that forms an airflow in a direction along the plate surface in the space when the magnetic member and the electromagnet section approach each other.

That is, each of vibration actuators 10J to 10M and 10P to 10S described below basically includes a first planar body and a second planar body that are disposed to face each other, and an elastic supporting part that supports the first planar body and the second planar body movably in a facing direction, that is, perpendicularly to the surface. An air vent section having the same function as the above-described air vent section is provided between the first planar body and the second planar body. The air vent section includes a vent portion formed between the first planar body (for example, the magnetic yoke, the spacer) and the outside of the second planar body (for example, the magnetic core body), a venting adjustment portion between the outer peripheral portion of the second planar body and the end portion (outer peripheral portion) of the first planar body, and an airflow bending portion and an internal passage on the inner side of the vent adjustment portion. Each of vibration actuators 10J to 10M and 10P to 10S has the same function as each of the vibration actuators having air vent sections 100, 100F, 100G, and 100H described above, since each of vibration actuators 10J to 10M and 10P to 10S includes the air vent section.

In addition, each of vibration actuators 10J to 10M and 10P to 10S defines the vibration amplitude of the magnetic member or the core section (first planar body or second planar body) by the electromagnet section in the space formed between the electromagnet section and the magnetic member or the core section by the spring constant of the elastic supporting part. The vibration amplitude of the magnetic member or the core section in the space formed between the electromagnet section and the magnetic member or the core section is defined by the thickness of the elastic body.

In addition, in each of the vibration actuators, when the elastic body (plate-shaped elastic part) is a rectangular frame-shaped elastic body (frame body) as shown in vibration actuator 10 of the embodiment, the elastic body may support the core section on one pair of opposite sides and may be connected to the magnetic yoke on the other pair of opposite sides. That is, the first planar body and the second planar body may be connected to each other at positions shifted by 90° via the elastic supporting part.

Vibration actuators 10J to 10M and 10P to 10S described below are formed by making a modification, addition, or the like to a part of the configuration of vibration actuator 10 of Embodiment 1. In the following, in a case of describing vibration actuators 10J to 10M and 10P to 10S, the same components as the components of vibration actuator 10 are denoted by the same names and the same reference numerals, and the description thereof will be omitted. In addition, components having substantially the same functions are denoted by the same names, and the suffixes "J to M and P to S" are added to the reference numerals for description.

### (Embodiment 9)

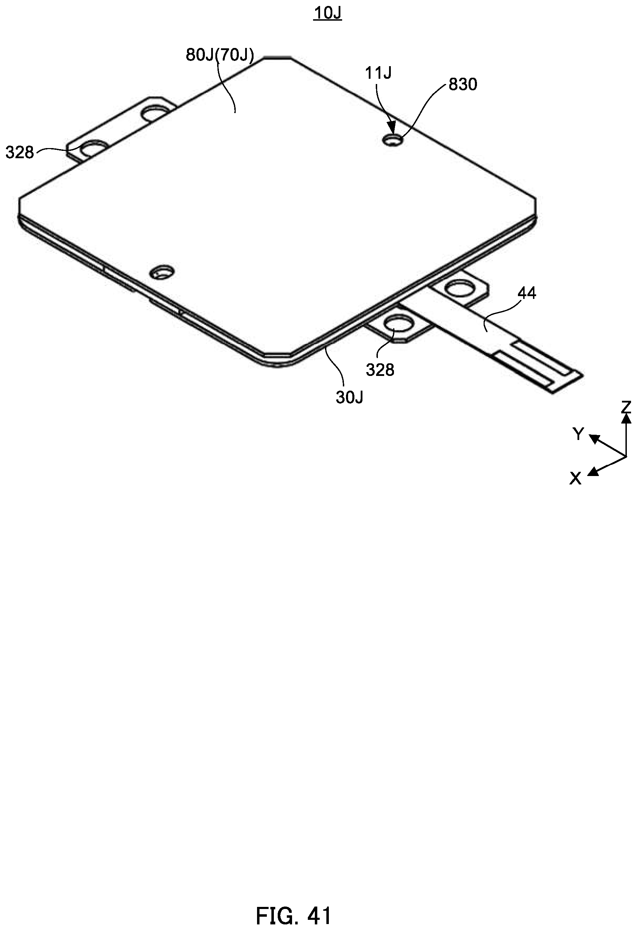

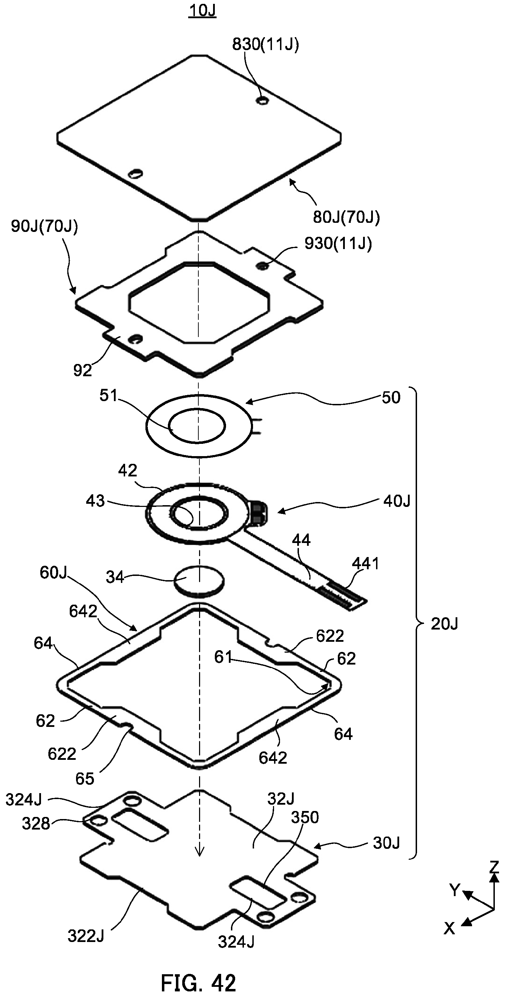

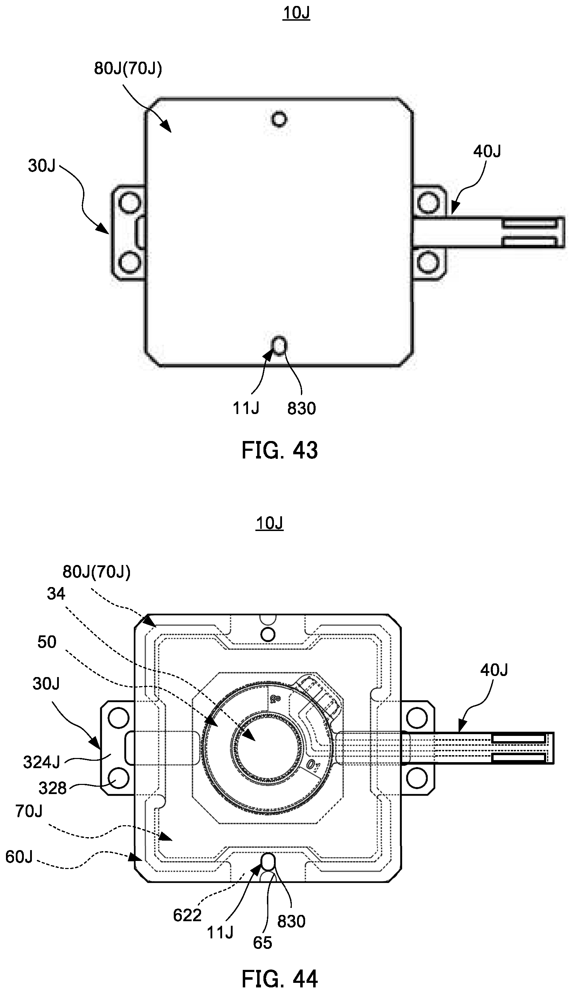

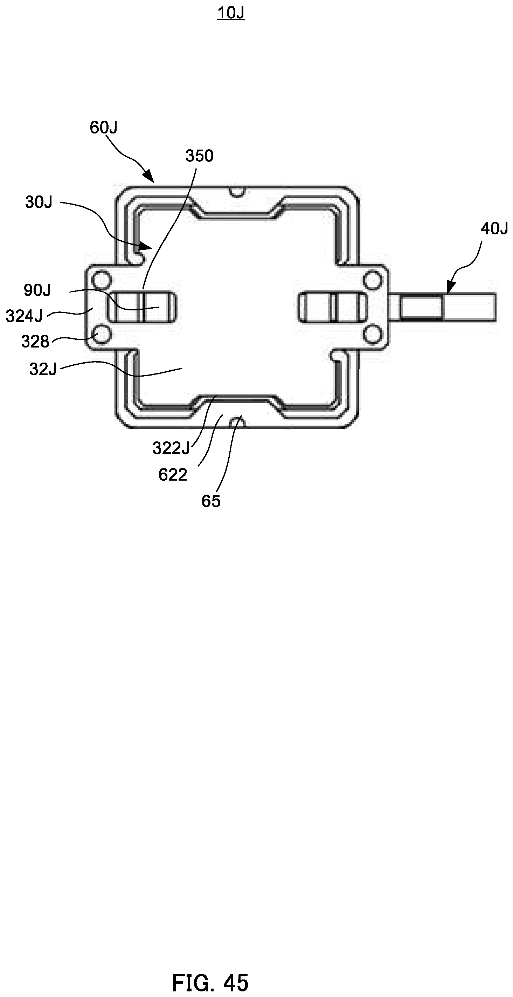

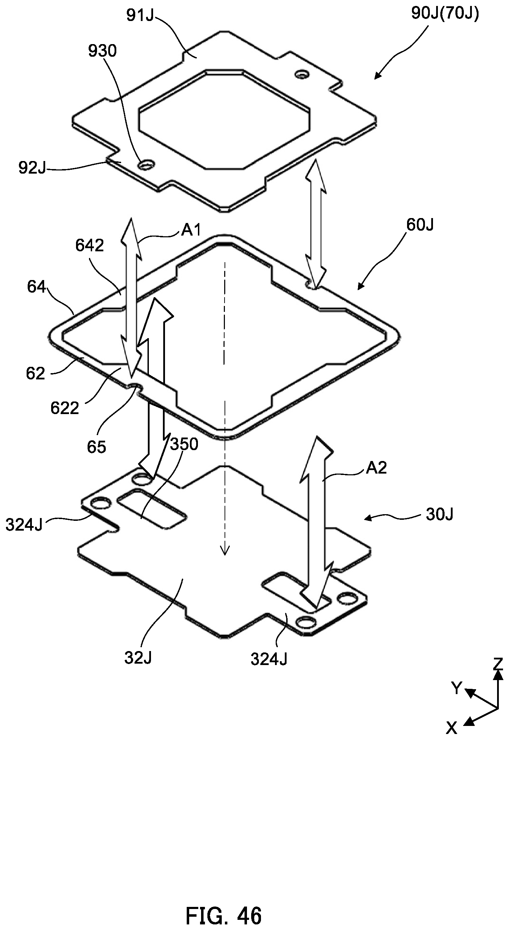

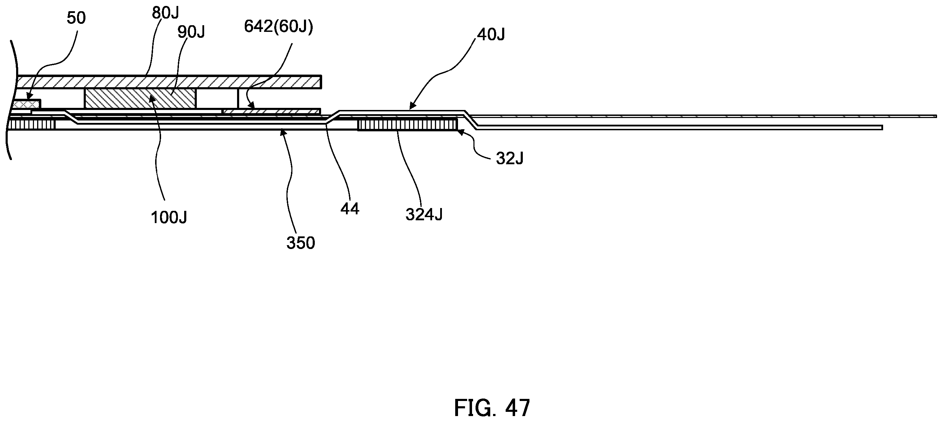

FIG. 41 is an external perspective view of a vibration actuator according to Embodiment 9 of the present invention, and FIG. 42 is an exploded perspective view of the vibration actuator. In addition, FIG. 43 is a plan view of the vibration actuator, FIG. 44 is a plan view showing an internal configuration of the vibration actuator, FIG. 45 is a bottom view of the vibration actuator, and FIG. 46 is an exploded perspective view showing a main part of the basic configuration of the vibration actuator. In addition, FIG. 47 is a side sectional view showing the wiring of the FPC of the vibration actuator.

Vibration actuator 10J shown in FIGS. 41 to 47 is different from vibration actuator 10 in the configurations of magnetic core body 32J, board section 40J, elastic supporting part 60J, magnetic yoke 80J, and spacer 90J, and the other configurations are the same.

Magnetic core body 32J, board section 40J, elastic supporting part 60J, magnetic yoke 80J, and spacer 90J have the same basic configurations as the members having the same names in vibration actuator 10, respectively, and have the same operation and effect.

A magnetic attraction force (magnetic force) is generated between electromagnet section 20J including core section 30J and coil 50 and magnetic body 70J (particularly magnetic yoke 80J though both magnetic yoke 80J and spacer 90J are magnetic members) by energizing coil 50. Magnetic body (magnetic member) 70J and core section 30J including magnetic pole portion 34 are displaced and vibrate such that one of core section 30J and magnetic body 70J approaches the other by the magnetic attraction force.

In vibration actuator 10J shown in FIGS. 41 to 47, communication hole 11J is provided not at the center of magnetic yoke 80J but in the vicinity of a pair of opposite sides of the outer peripheral portion of magnetic yoke 80J and outside the electromagnet section (coil 50) as compared with vibration actuator 10F.

Communication hole 11J is provided in magnetic body (magnetic member) 70J including magnetic yoke 80J and spacer 90J in the configuration of vibration actuator 10J, and communicates between the internal passage of vibration actuator 10J and the outside.

Communication hole 11J is configured such that through-hole 830 of magnetic yoke 80J and through-hole 930 of spacer 90J, which is a magnetic body, communicate with each other.

As shown in FIG. 44, communication hole 11J is provided at a position that overlaps yoke-side connecting portion 622 of elastic supporting part 60J in plan view.

Communication hole 11J discharges the internal air to the outside via the outer peripheral portion and takes in air from the outside as vibration actuator 10J is driven. In this case, the biasing force for moving magnetic body 70J by circulating the air inside and outside vibration actuator 10J is hindered, and the amount of movement of magnetic body 70J is adjusted.

In vibration actuator 10J, plate-shaped extending portions 324J that extend outward are formed in magnetic core body 32J at the central portions of a pair of opposite sides of the outer peripheral portion of the rectangular plate shape.

Window portion 350 that allows extending portion 44 of board section 40J to be inserted and avoid interference with elastic supporting part 60J is provided in plate-shaped extending portion 324J. Plate-shaped extending portion 324J is provided with fixing hole 328 for fixing vibration actuator 10J to the product housing.

Elastic supporting part 60J supports one of electromagnet section 20J and magnetic body 70J to be displaceable in the thickness direction such that one approaches the other. Here, electromagnet section 20J is configured by attaching board section 40J and magnetic pole portion 34 to magnetic core body 32J. Vibration actuator 10J supports magnetic body 70J (magnetic yoke 80J and spacer 90J) movably with respect to electromagnet section 20J via elastic supporting part 60J.

Elastic supporting part 60J has a rectangular frame shape, and as shown in FIGS. 45 to 47, yoke-side connecting portions 622 are formed to protrude to the inside of a pair of opposite side portions 62 facing each other. Positioning portions (semicircular portions) 65 are formed in yoke-side connecting portions 622.

Positioning portions 65 position magnetic core body 32J inside elastic supporting part 60J, and position magnetic core body 32J and spacer 90J such that they are connectable at positions rotated by 90° with respect to each other in the respective pairs of opposite sides of elastic supporting part 60J.

Positioning portions 65 are formed at positions shifted from communication hole 11J in plan view. Accordingly, since vibration actuator 10J has no through path that penetrates vibration actuator 10J itself, it is possible to maximize the action surface during air compression and efficiently perform air damping of air vent section 100J during movement by efficient compression.

As shown in FIG. 46, in vibration actuator 10J, rectangular frame-shaped elastic supporting part 60J is joined to spacer joint portions 92J of spacer 90J on the outside of magnetic core body 32J at yoke-side connecting portions 622 of a pair of opposite side portions 62 (shown by arrow A1). On the other hand, core-side connecting portions 642 of the other pair of opposite side portions 64 are joined to plate-shaped extending portions 324J of magnetic core body 32J on window portions 350 (in direction of arrow A2).

Window portions 350 communicate with air vent section 100J. Extending portion 44 of board section 40J is inserted into and disposed in window portion 350. Accordingly, window portions 350 can secure a routing path by a plate thickness of magnetic core body 32J by disposing extending portion 44 not to interfere with core-side connecting portions 642.

In vibration actuator 10J, core section 30J, which is the second planar body, is configured as the fixed part, and magnetic body 70J, which is the first planar body, is configured as the movable part, and coil 50 and board section 40J are provided in core section 30J.

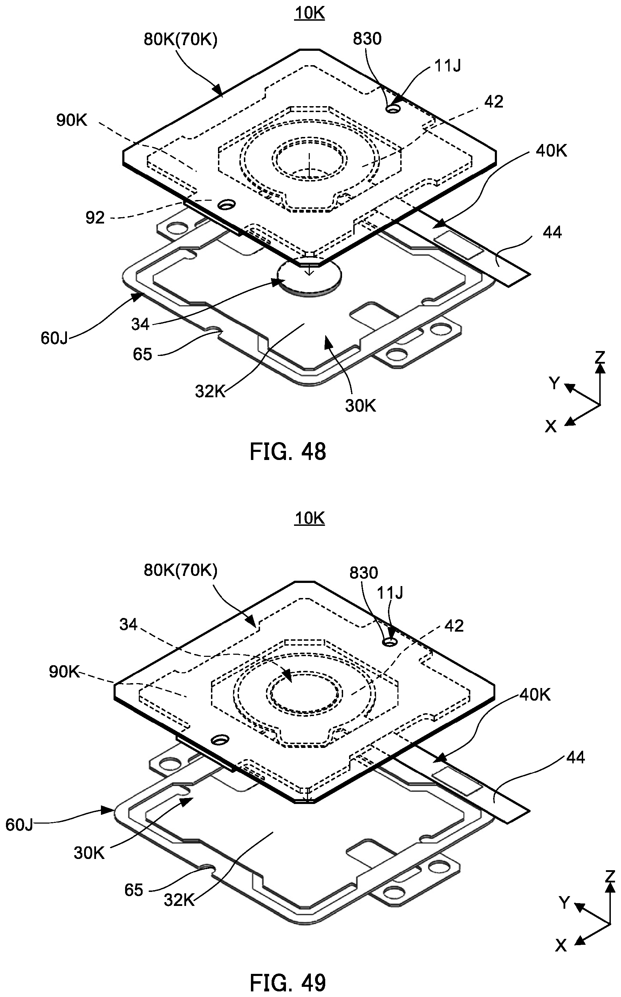

Here, in order to increase the weight of the movable part, a part of core section 30J and board section 40J, or core section 30J itself and board section 40J may be provided in the first planar body, that is, magnetic body 70J. An example of these configurations will be described with reference to FIGS. 48 and 49.

FIG. 48 is an external perspective view of Variation 1 of the vibration actuator according to Embodiment 9 of the present invention, and FIG. 49 is an external perspective view of Variation 2 of the vibration actuator according to Embodiment 9 of the present invention. Note that FIGS. 48 and 49 show magnetic yoke 80K in each figure in a transparent state for convenience. In addition, in FIGS. 48 and 49, coil 50 is provided on the back surface of board body 42 of board section 40K to face magnetic core body 32K of core section 30K.

For example, as shown in vibration actuator 10K in FIG. 48, the configuration of vibration actuator 10J may be modified such that board section 40K configured in the same manner as board section 40J and coil 50 (not shown) may be fixed to magnetic body 70K side, that is, magnetic yoke 80K.

In vibration actuator 10K, board section 40K and coil (not shown) are fixed to the back surface of magnetic yoke 80K to be located inside spacer 90K. Magnetic pole portion 34 is configured to be attached to magnetic core body 32K to be located inside the coil (not shown).

In addition, as shown in vibration actuator 10K in FIG. 49, the configuration of vibration actuator 10J may be modified such that board section 40K configured in the same manner as board section 40J and core section (not shown) may be fixed to magnetic body 70K side, that is, magnetic yoke 80K. Specifically, in vibration actuator 10K, board section 40K, the coil (not shown), and magnetic pole portion 34 are fixed to the back surface of magnetic yoke 80K to be located inside spacer 90K. As described above, in vibration actuator 10K, the weight of magnetic yoke 80K, which is magnetic body 70K as the movable part, can be increased by the weight of board section 40K and the core section (coil, magnetic pole portion 34).

### (Embodiment 10)

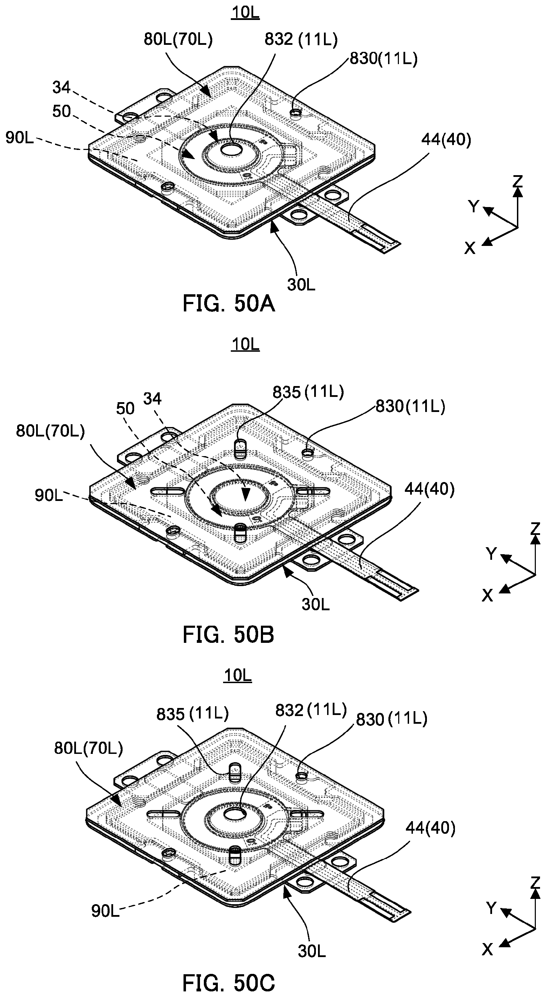

FIG. 50A is an external perspective view of Variation 1 of the vibration actuator according to Embodiment 10 of the present invention, and FIG. 50B is an external perspective view of Variation 2 of the vibration actuator according to Embodiment 10 of the present invention. In addition, FIG. 50C is an external perspective view of Variation 3 of the vibration actuator according to Embodiment 10 of the present invention.

As shown in vibration actuator 10L in FIGS. 50A to 50C, in vibration actuator 10J, a communication hole (communication hole 11L) in magnetic yoke 80L configured in the same manner as magnetic yoke 80J may be provided in any manner.

In vibration actuator 10L shown in FIG. 50A, as communication hole 11J provided in the first planar body (magnetic body 70L), central through-hole 832 is provided in the central portion in addition to through-holes 830 formed along a pair of opposite side portions of the first planar body (magnetic body 70L).

Central through-hole 832 is disposed above magnetic pole portion 34 at a position facing magnetic pole portion 34 and communicates with the internal passage. Note that, as in vibration actuators 10, 10F, 10G, and 10H of other embodiments, the internal passage is formed between, on one hand, the upper surface of coil 50 and the upper surface of magnetic pole portion 34 and, on the other hand, magnetic yoke 80. In addition, since vibration actuator 10L has central through-hole 832, vibration actuator 10L has the same operational effects as those of vibration actuator 10J having through-hole 830, in addition to the same operational effects as those of vibration actuator 10F shown in FIGS. 28 to 31.

In addition, in vibration actuator 10L shown in FIG. 50B, in the first planar body (magnetic body 70L), communication holes 11L including through-holes 830 include a plurality of slits 835 extending radially (here, diagonally) from the center. Slits 835 are disposed above core section 30L (magnetic core body, magnetic pole portion 34), which is the second planar body, and coil 50 at positions facing the core section and the coil, and function as a part of the air vent section provided in vibration actuator 10L.

In addition, in vibration actuator 10L shown in FIG. 50C, the first planar body (magnetic body 70L) is provided with communication holes 11L having through-holes 830, a plurality of slits 835 disposed radially (here, diagonally), and central through-hole 832.

Through-holes 830, central through-hole 832, and slits 835 constitute communication holes 11L, and are each disposed above core section 30L, which is the second planar body, coil 50, and magnetic pole portion 34 at positions facing the core section, coil, and magnetic pole portion. Through-holes 830, central through-hole 832, and slits 835 communicate with the air vent section.

As described above, one or more through-holes, such as through-holes 830, central through-hole 832, and slits 835, constituting communication holes 11L are provided in the first planar body (magnetic body 70L), and communicate with the air vent section to function as a part of the air vent section. By adjusting the opening dimensions, the number, the positions, and the like of these communication holes, the internal air damping amount during the movement of vibration actuator 10L can be adjusted.

In addition, communication holes (through-holes 830, central through-hole 832, slits 835) 11L form an airflow path through the through-holes, and thus the movable part (for example, magnetic body 70L) can be accurately moved in the surface normal direction with respect to the fixed part(for example, core section 30L).

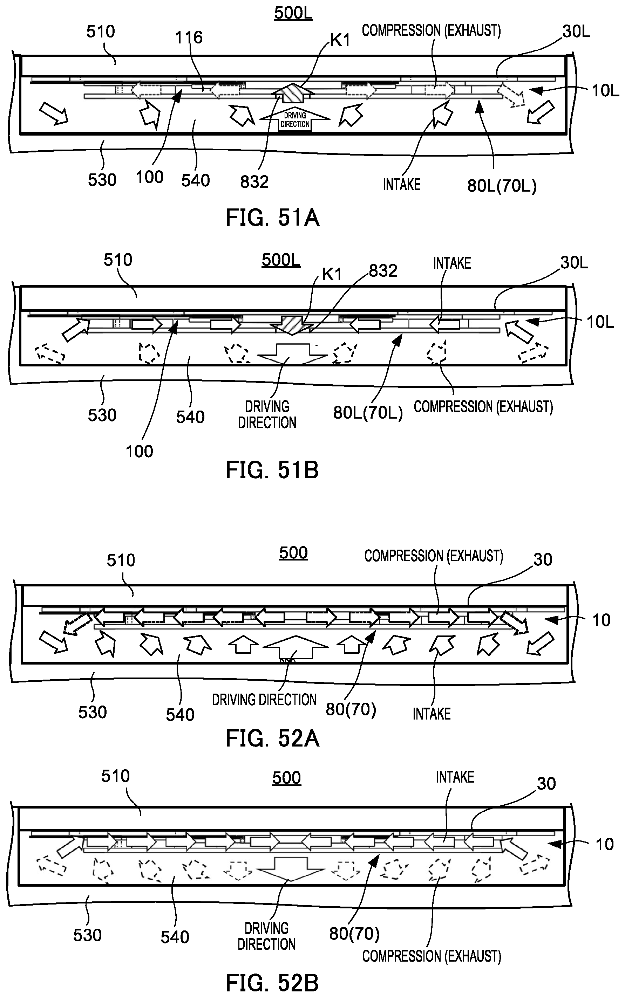

FIGS. 51A and 51B are schematic diagrams showing the flow of internal air during driving by repulsion of the elastic supporting part during attraction and attraction release (de-energization) of the vibration actuator according to Embodiment 10 of the present invention. In addition, FIGS. 52A and 52B are schematic diagrams showing the flow of internal air during driving by repulsion of the elastic supporting part during attraction and attraction release (de-energization) in a configuration without an air hole in the vibration actuator. In FIGS. 51A, 51B, 52A, and 52B, the flow of compressed (exhausted) air is shown by a broken line arrow, the flow of intake air is shown by a solid line arrow, and the amount of air is schematically shown by the size and the number of each arrow.

FIGS. 51A and 51B show a state in which vibration actuator 10L is mounted on the trackpad of vibration presentation device 500L. The trackpad is disposed in rectangular opening portion 540 provided in a housing of a laptop computer or the like, as in the trackpad shown in FIG. 40.

In opening portion 540, plate-shaped pad body 510 is disposed to be movable in the up-down direction (approach and separation direction) with respect to bottom portion 530. Vibration actuator 10L is attached to the back surface of pad body 510.

In vibration presentation device 500L of FIG. 51A, vibration actuator 10L shown in FIG. 50A is mounted on the trackpad in a so-called suspension mounting method in which magnetic yoke 80L, that is, the movable-part side is directed downward and core section 30 is fixed to pad body 510.

In vibration actuator 10L shown in FIG. 51A, central through-hole 832 is provided in magnetic yoke 80L, so that, during driving (during energization), magnetic yoke 80L is attracted upward and moves to perform intake and exhaust shown in FIG. 51A. Inside, an air flow through central through-hole 832 is generated. For example, in central through-hole 832, air flow K1 in opening portion 540 is generated, the air in the space between magnetic yoke 80L and core section 30L is exhausted, and the air in the space between them is compressed.

In addition, when the energization is turned off, as shown in FIG. 51B, magnetic yoke 80L moves downward due to the repulsive force of the elastic supporting part (not shown). In this case, air flow K1 in opening portion 540 is generated in each communication hole including central communication hole 832, and air is taken in from the gap in the horizontal direction while being exhausted to the outside through central through-hole 832.

As described above, in vibration actuator 10L (air vent section 100), the compression/intake amount is reduced, and the exhaust position is stabilized by the air passing through through-hole 832. Note that, by adjusting the position, shape, and size of the communication hole (through-hole 832) that communicates between the inside and the outside of vibration actuator 10L, the air can be rectified to correct the movement straightly with respect to the driving in the surface normal direction.

On the other hand, in a configuration in which there is no communication hole (central through-hole 832), the compression/intake is maximally exhibited during the movement shown in FIGS. 52A and 52B, but the attenuation also acts on the surface of bottom portion 530 in opening portion 540. In addition, since the vibration actuator is disposed in a wide space in opening portion 540 due to the structure, the exhaust position may not be stable due to variations in attenuation during compression/intake. Due to these factors, the tactile sensation may be reduced in a state where the attenuation effect is high, as compared with a configuration having a communication hole (through-hole).

Note that a configuration may be adopted in which these communication holes 11L (including communication holes other than those of the present embodiment) are provided with a valve portion having a valve function for adjusting the communication holes, as a separate member or by insert molding or the like.

By providing a valve portion having an openable and closable valve in communication holes (11J, 11L), the valve portion can be caused to operate during the compression of air (during magnetic attraction) or the intake (during repulsion of elastic supporting part 60L after power is turned off), thereby allowing the behavior of the air compression and the exhaust to be controlled. For example, when vibration actuator 10L is used as a pump, the pump function can be exhibited by performing an operation such as opening the valve during magnetic attraction and pushing up the air when elastic supporting part 60 repels.

### (Embodiment 11)

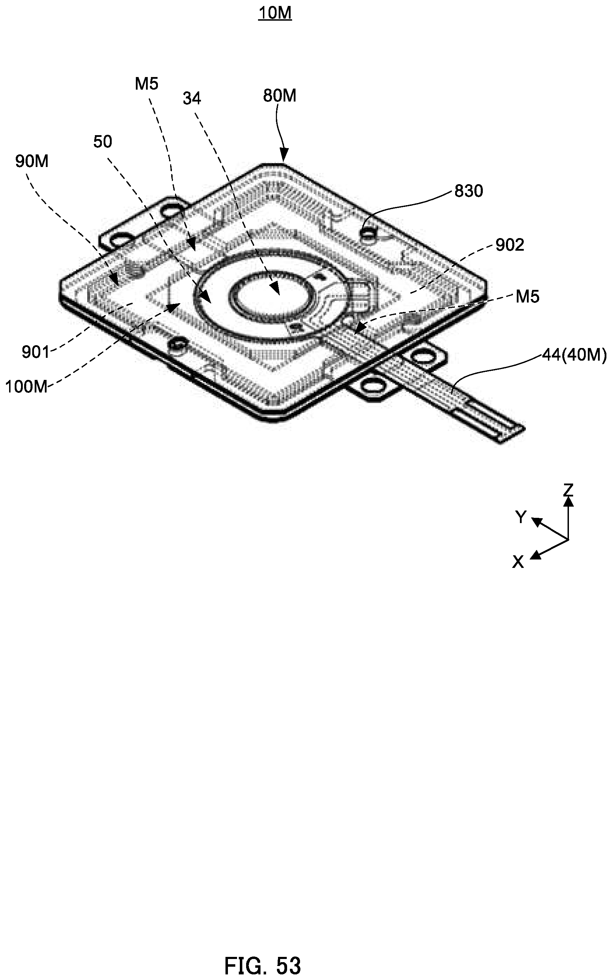

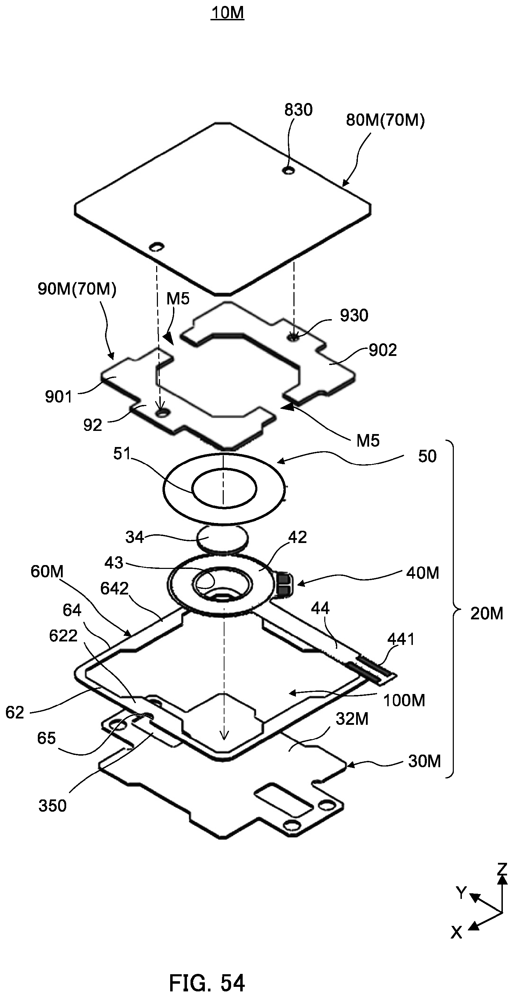

FIG. 53 is an external perspective view of a vibration actuator according to Embodiment 11 of the present invention, and FIG. 54 is an exploded perspective view of the vibration actuator.

In vibration actuators 10F to 10G and 10J to 10L, the communication holes are provided in at least one of the first planar body (magnetic body such as a magnetic yoke) and the second planar body (magnetic core body) to form the airflow path communicating with the internal passage, but the airflow path may be formed by other built-in components.

In vibration actuator 10M shown in FIGS. 53 and 54, an airflow path is formed by modifying spacer 90M in the configuration of vibration actuator 10J of Embodiment 9.

Vibration actuator 10M is different from vibration actuator 10J in the configuration of spacer 90M, and the other configurations are the same. Therefore, the same configurations will be denoted by the same names and reference numerals, and the description thereof will be omitted.

Vibration actuator 10M has spacer 90M divided into two parts, and has airflow paths M5 that communicate with air vent section 100M and function during air compression/intake, in a layer where spacer 90M is disposed. Each of airflow paths M5 constitutes a part of air vent section 100M.

Inside elastic supporting part 60M, spacer 90M composed of two split pieces (901, 902) is disposed above core section 30M of plate-shaped magnetic core body 32M with a gap corresponding to the thickness of elastic supporting part 60M.

The internal passage (air vent 100M) formed by sandwiching spacer 90M between magnetic core body 32M and magnetic yoke 80M in the surface normal direction is surrounded by elastic supporting part 60M on all sides. Airflow path M5 that communicates with a space in which coil 50 is disposed in the horizontal direction is disposed inside elastic supporting part 60M. Accordingly, an air vent section is formed that allows communication between the internal passage and the outside through a space between elastic supporting part 60M and magnetic core body 32M via airflow path M5. The air attenuation effect can be adjusted via this air vent section.

In vibration actuator 10M, airflow path M5 is formed by spacer 90M obtained by dividing the spacer, but the present disclosure is not limited thereto, and airflow path M5 may be formed from the double-sided tape connecting each member or elastic supporting part 60M. In addition, airflow path M5 (corresponding to the through-holes) may be formed by at least one of notches and holes that communicate with the internal passage and are formed at a plurality of locations.

### (Embodiments 12 and 13)

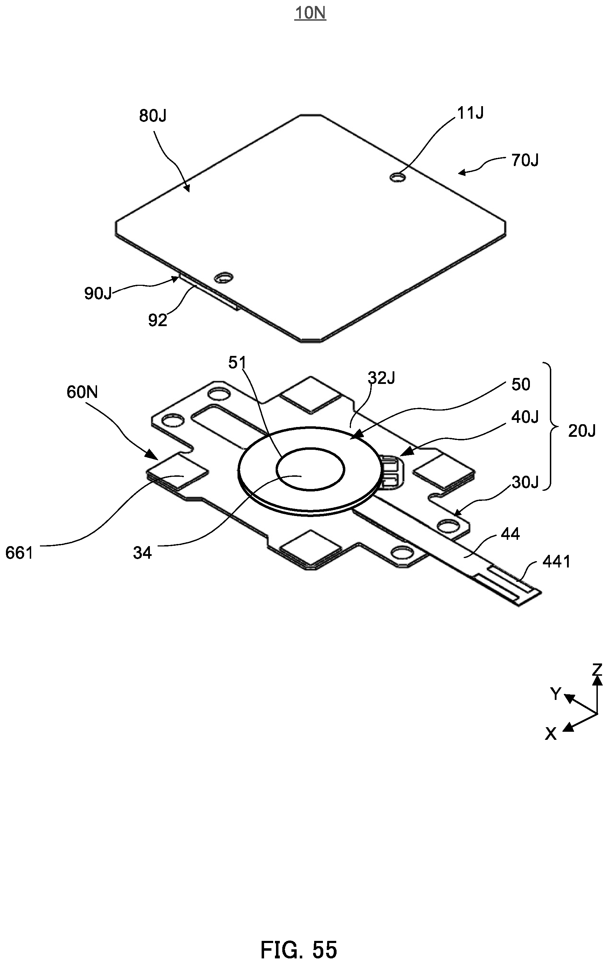

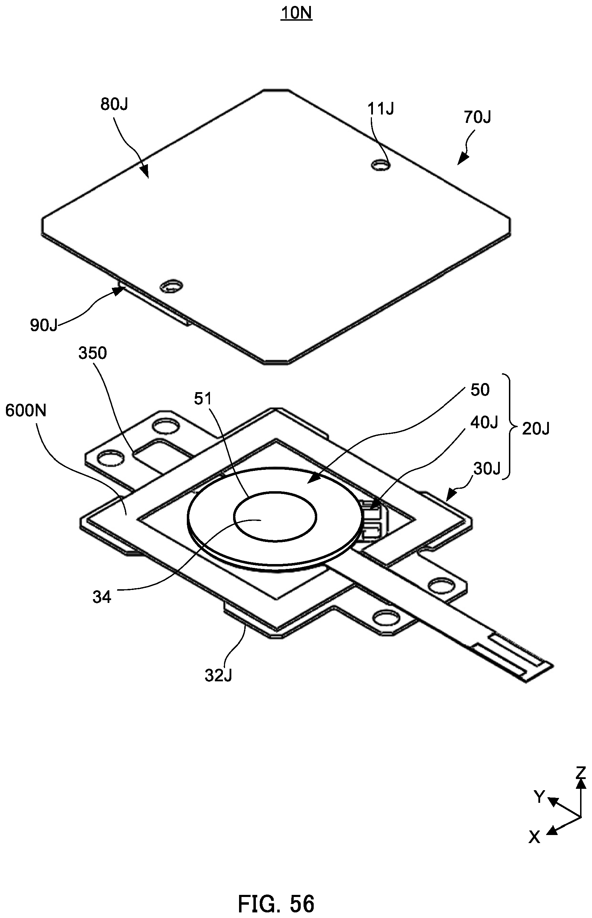

FIG. 55 is an exploded perspective view of a vibration actuator according to Embodiment 12 of the present invention, and FIG. 56 is an exploded perspective view of Variation 1 of the vibration actuator according to Embodiment 12 of the present invention. In vibration actuator 10J and the like, rectangular frame-shaped elastic supporting part 60J is disposed between, on one hand, plate-shaped core section 30J and, on the other hand, plate-shaped magnetic yoke 80J and spacer 90M (which may be a magnetic body), which are disposed to face each other in the surface normal direction.

In vibration actuator 10J, elastic supporting part 60J is a leaf spring that connects core section 30J (second planar body) to magnetic yoke 80J and spacer 90M (magnetic body 70J, which is the first planar body) in the surface normal direction at each of adjacent pairs of opposite sides, but the present disclosure is not limited thereto.

For example, as in vibration actuator 10N shown in FIGS. 55 and 56, elastic supporting parts 60N and 600N may be formed of a member that is capable of contracting and deforming itself as a spring.

In vibration actuator 10N of FIG. 55, a plurality of elastic deformation portions 661 are provided as elastic supporting part 60N, and in vibration actuator 10N of FIG. 56, one elastic supporting part 600N is provided. In vibration actuator 10N, electromagnet section 20J is composed of core section 30J, board section 40J, and coil 50. Magnetic body (planar body) 70J is attached to electromagnet section 20J, that is, to the surface of magnetic core body 32J, to be movable in the surface normal direction via elastic supporting parts 60N and 600N.

In vibration actuator 10N of FIG. 55, a plurality of elastic deformation portions 661 are interposed at the four corners between magnetic body 70J (magnetic yoke 80J and spacer 90J), which is the first planar body, and magnetic core body 32J. In vibration actuator 10N of FIG. 56, rectangular frame-shaped elastic deformation portion 600N disposed along the respective outer peripheries of magnetic body 70J and magnetic core body 32J is interposed between magnetic body 70J, which is the first planar body, and magnetic core body 32J.

Elastic deformation portions 661 and elastic supporting part 600N are each formed of a plate-shaped material that is capable of contracting and deforming in the thickness direction, and for example, an elastomer, specifically, silicone, rubber, a foam, or the like may be used. In addition, the shape of elastic supporting parts 60N (elastic deformation portions 661) and 600N may be a shape that effectively acts on air damping to eliminate the airflow path to the maximum extent.

### (Embodiment 14)

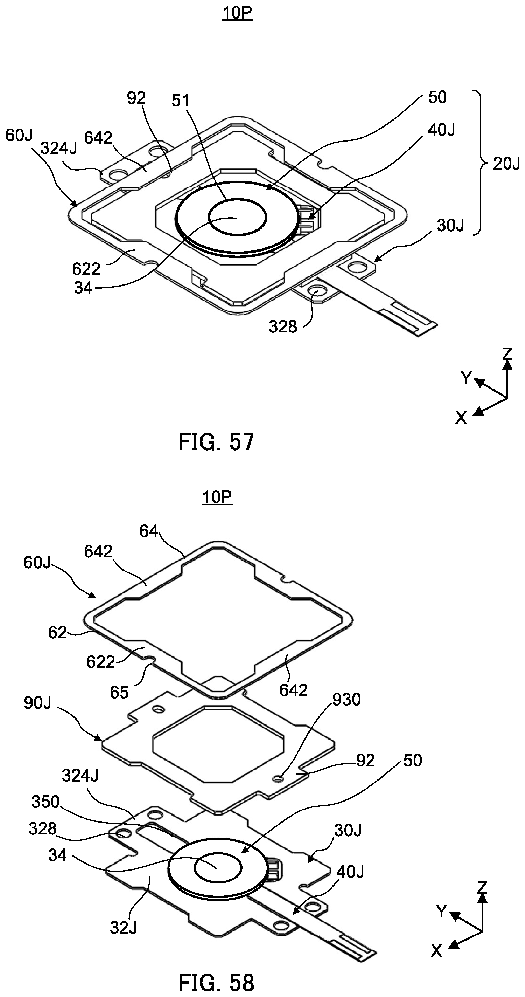

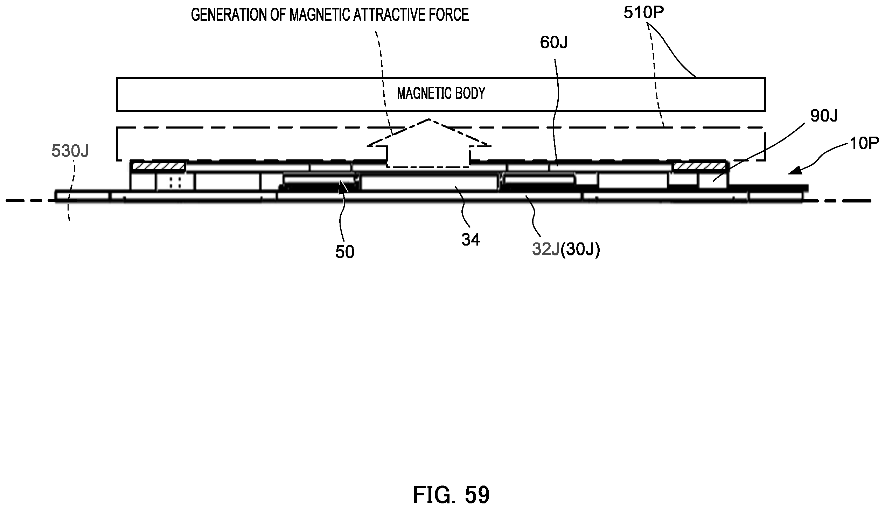

FIG. 57 is an external perspective view of a vibration actuator according to Embodiment 14 of the present invention, and FIG. 58 is an exploded perspective view of the vibration actuator. In addition, FIG. 59 is a side view showing an attachment structure of the vibration actuator.

As in vibration actuator 10P shown in FIGS. 57 and 58, the configuration of vibration actuator 10J may be modified such that magnetic yoke 80J may be removed, and the attachment target of vibration actuator 10P may be configured to include a magnetic body to have a function of magnetic yoke.

Core section 30J of vibration actuator 10P shown in FIGS. 57 and 58 is configured such that spacer 90J is disposed between magnetic core body 32J and elastic supporting part 60J, and the upper surface of coil 50 on board section 40J is at a lower position than the upper surface of elastic supporting part 60J.

Spacer 90J is fixed to base end portions of outer peripheral plate-shaped extending portions 324J on a pair of opposite sides of the outer periphery in magnetic core body 32J at lower surfaces of spacer joint portions 92 on a pair of opposite sides constituting a rectangular outer periphery. In addition, at upper surfaces of spacer joint portions 92, spacer 90J is joined to lower surfaces of core-side connecting portions 642 of a pair of opposite sides (side portions 64) of the outer periphery of elastic supporting part 60J. As a result, elastic supporting part 60J is disposed on the outer side in the XY direction to surround spacer 90J, and is joined only to core-side connecting portions 642 that protrude inward.

That is, vibration actuator 10P includes the electromagnet section including flat annular coil 50 disposed below the magnetic member to face the magnetic member, and the plate surface of plate-shaped magnetic core body 32J on which coil 50 is disposed, the spacer disposed on magnetic core body 32J outside coil 50 to separate magnetic core body 32J from the magnetic member in the up-down direction, and elastic supporting part 60J disposed outside coil 50 and connected to the magnetic member and the spacer.

When vibration actuator 10P is mounted on a product, for example, a trackpad, as shown in FIG. 59, core section 30J is fixed to product body 530J at the back surface of magnetic core body 32J by inserting a fastening member into fixing holes 328 (see FIGS. 57 and 58).

Elastic supporting part 60J is fixed to magnetic body 510P (see FIG. 59), which is an attachment target, at yoke-side connecting portions 622 of the other pair of opposite side portions 62 (see FIGS. 57 and 58). Magnetic body 510P may be, for example, a part of the touchpad body or may be a member integrally attached to the touchpad body.

In FIG. 59, when magnetic body 510P is attracted to coil portion 50 and magnetic pole portion 34 by the magnetic attraction force generated by energization of coil 50, elastic supporting part 60J is deformed, and elastic supporting part 60J is displaced downward at the outer side of spacer 90J in the XY direction. In a case where the energization is stopped, magnetic body 510P is moved upward by the repulsion of elastic supporting part 60J to impart a tactile sensation to magnetic body 510P. In this configuration, when vibration actuator 10P is mounted and the movable target is the magnetic body, the thickness of vibration actuator 10P is reduced, and the arrangement space in the surface normal direction can be reduced.

With this configuration, the number of components can be reduced, and the weight of the movable part can be ensured. Note that spacer 90J may be a magnetic body or a non-magnetic body. The amount of movement can be adjusted by adjusting the shape and thickness of spacer 90J and adjusting the spring constant of elastic supporting part 60J (for example, a frame-shaped leaf spring).

### (Embodiment 15)

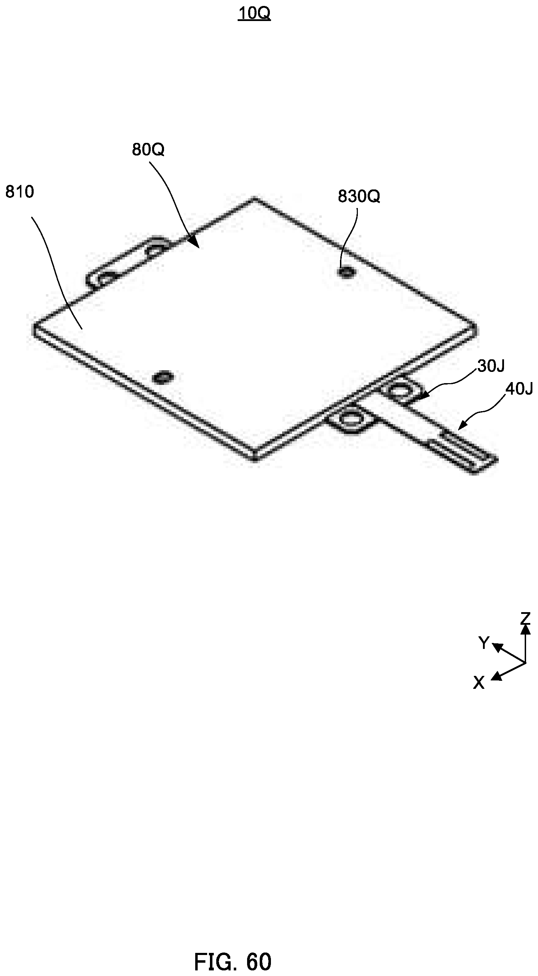

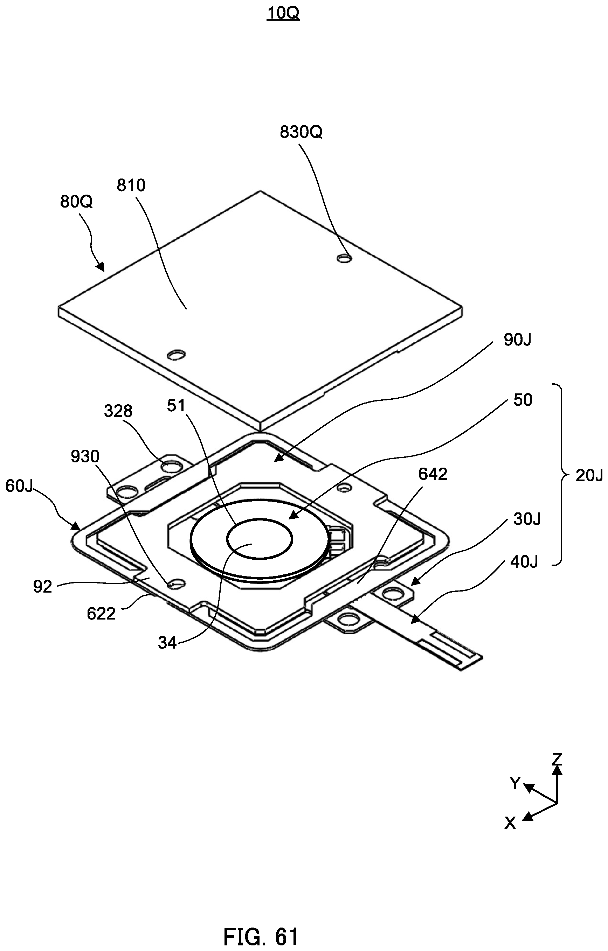

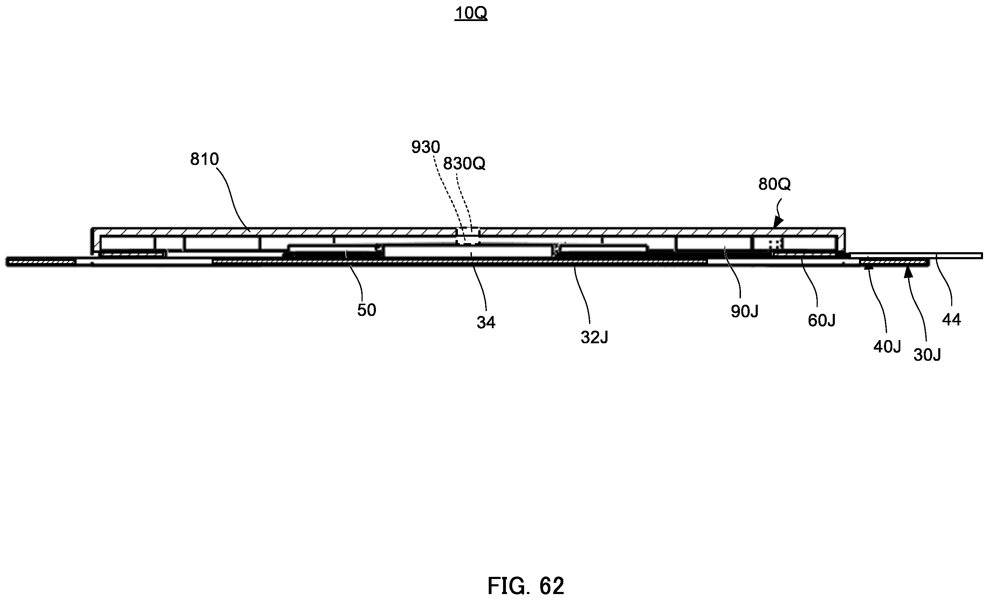

FIG. 60 is an external perspective view of a vibration actuator according to Embodiment 15 of the present invention, and FIG. 61 is an exploded perspective view of the vibration actuator. FIG. 62 is a side sectional view of the vibration actuator.

Vibration actuator 10Q illustrated in FIGS. 60 to 62 is a vibration actuator in which a part of the configuration of vibration actuator 10J is changed, and the magnetic yoke is formed in a box shape in the configuration of vibration actuator 10J.

In vibration actuator 10Q illustrated in FIGS. 60 to 62, box-shaped yoke 80Q that is formed of a magnetic body and has a box shape that is open on the electromagnet section 20J side is provided on electromagnet section 20J. Box-shaped yoke 80Q is disposed to cover coil 50, and spacer joint portions 92 are joined to the back surface of top surface portion 810 of box-shaped yoke 80Q. As a result, box-shaped yoke 80Q is fixed to spacer 90J.

Top surface portion 810 of box-shaped yoke 80Q has the same shape as magnetic yoke 80J, and spacer 90J is fixed in a state of being accommodated inside box-shaped yoke 80Q. The peripheral wall portion of box-shaped yoke 80Q that hangs downward from the outer periphery of top surface portion 810 is disposed on the outer side of elastic supporting part 60J in the XY direction, and enables movement in the surface normal direction (movement downward in FIG. 62).

The outer shape of box-shaped yoke 80Q is larger than the outer periphery of elastic supporting part 60J, and the lower end of the peripheral wall portion of box-shaped yoke 80Q is configured to be located on the outer side of the outer periphery of elastic supporting part 60J and on elastic supporting part 60J, and moves in the Z direction at the outer side of the outer periphery of elastic supporting part 60J.

Box-shaped yoke 80Q may be configured in any manner as long as it covers elastic supporting part 60J, coil 50, and magnetic pole portion 34, and the lower end of the peripheral wall portion of box-shaped yoke 80Q may be configured to be located on the outer side of the outer periphery of elastic supporting part 60J and to be movable in the Z direction. In addition, the outer shape of box-shaped yoke 80Q may be the same as the outer periphery of elastic supporting part 60J. In this configuration, it is desirable that the lower end of the lower end peripheral wall portion of box-shaped yoke 80Q (peripheral wall portion) is disposed at a position spaced apart from elastic supporting part 60J in the Z direction (thickness direction) so as not to abut against elastic supporting part 60J during driving.

In addition, by changing the plate-shaped yoke to box-shaped yoke 80Q, the periphery of coil 50 can be surrounded by the peripheral wall portion, and the air damping can be finely adjusted between the inside of the peripheral wall portion and core section 30J. In addition, it is possible to prevent the intrusion of foreign matter or the like into vibration actuator 10Q. In vibration actuator 10Q, although the configuration in which box-shaped magnetic yoke 80Q covers electromagnet section 20J is adopted, a separate member may be added and fixed around plate-shaped magnetic yoke 80J to form the yoke in a box shape surrounding the coil 50 from all sides in the XY direction. In addition, the separate member may be disposed to surround the periphery of magnetic yoke 80J to have the same function during driving. As a result, the same operational effects as those of box-shaped yoke 80Q can be obtained.

### (Embodiment 16)

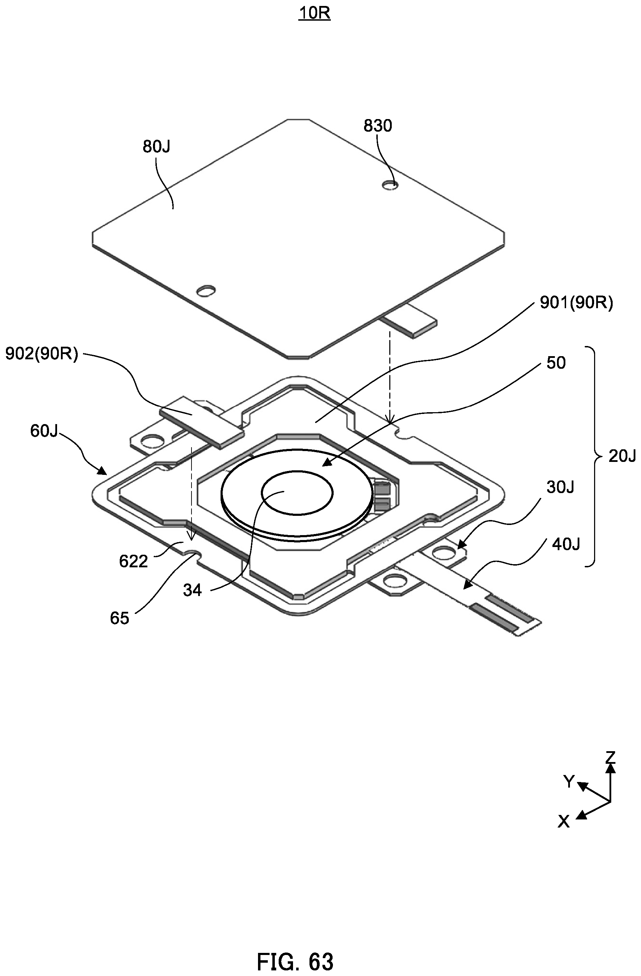

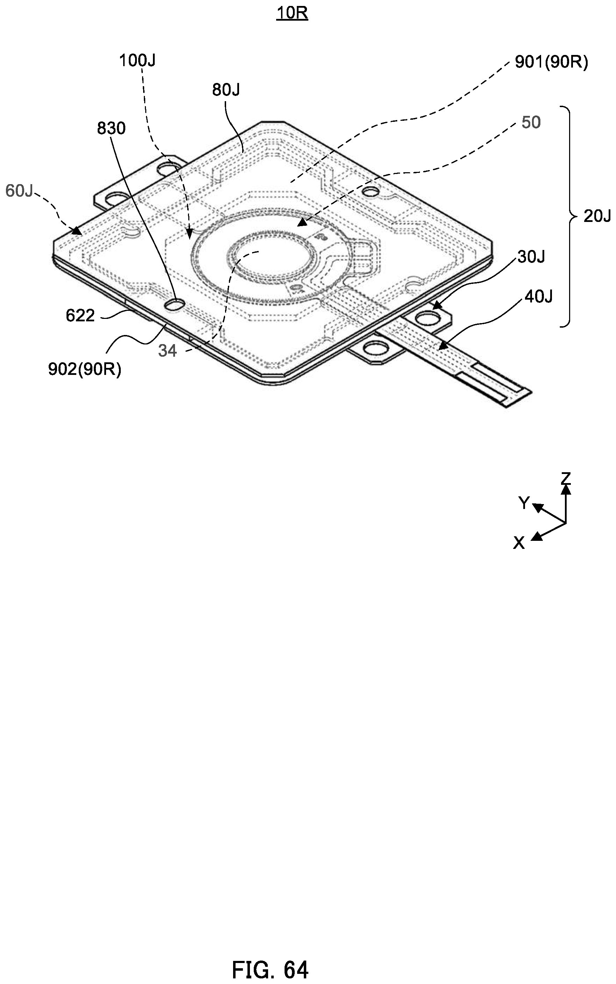

FIG. 63 is an exploded perspective view of a vibration actuator according to Embodiment 16 of the present invention, and FIG. 64 is an external perspective view showing an internal configuration of the vibration actuator.

Vibration actuator 10R shown in FIGS. 63 and 64 is different from vibration actuator 10J in the configuration of spacer 90R.

Vibration actuator 10R is configured to include spacer 90R composed of first spacer 901 and second spacer 902 by dividing the functions of spacer 90J in vibration actuator 10J.

First spacer 901 is disposed on core section 30J as a magnetic body to surround coil 50, and functions as a part of the magnetic circuit of electromagnet section 20J together with magnetic core body 32J and coil 50. In this case, a gap that is a movable range of magnetic yoke 80J is formed between the upper surface of first spacer 901 and the lower surface of magnetic yoke 80J, which is the first planar body. First spacer 901 and second spacer 902 may be formed of either a magnetic body or a non-magnetic body, and the material is not limited.

In addition, the thicknesses of first spacer 901 and second spacer 902 may be any thickness as long as magnetic yoke 80J and magnetic core 30J of the second planar body are relatively movable. Note that first spacer 901 and second spacer 902 may have the same thickness. In this case, the thickness of elastic supporting part 60J corresponds to the movable range of the movable part, but in order to increase the characteristics, the gap between, on one hand, first spacer 901 and magnetic portion 34 and, on the other hand, magnetic yoke 80J is adjusted in accordance with the change in the thickness of second spacer 902. As an adjustment example, for example, when the displacement amount of the movable part is suppressed, the spring constant of elastic supporting part 60J is increased (note that the thickness is the same and only the shape is adjusted). In addition, in order to increase the magnetic attraction force of magnetic core 30J and to reduce the gap, the thickness of second spacer 902 is reduced (note that the thickness of elastic supporting part 60J is not reduced to ensure the spring constant). As a result, the spring constant is increased, and the volume of second spacer 902 added as the weight of the movable part is reduced, so that the eigenvalue (natural frequency) is increased, and the resonance frequency can be increased. In addition, the eigenvalue can be matched by changing second spacer 902 to a material with a high specific gravity or the like.

Second spacer 902 is interposed between yoke-side connecting portions 622 of elastic supporting part 60J and magnetic yoke 80J, and connects both of them.

As a result, magnetic yoke 80J is disposed on magnetic core body 32J with the gap of the thickness of elastic supporting part 60J + the thickness of second spacer 902. Since the thicknesses of first spacer 901 and second spacer 902 are the same, magnetic yoke 80J is disposed with the gap equal to the thickness of elastic supporting part 60J from the upper surface of first spacer 901 disposed on magnetic core body 32J. Within the range of the thickness of elastic supporting part 60J, elastic supporting part 60J is displaced, and the movable range of magnetic yoke 80J is secured.

In vibration actuator 10R, the function of spacer 90R is decomposed, and second spacer 902 secures the movable range between elastic supporting part 60J and magnetic yoke 80J. On the other hand, first spacer 901 reinforces the magnetic circuit of magnetic core body 32J as a magnetic body.

In addition, when first spacer 901 is a non-magnetic body, first spacer 901 is attached to magnetic core body 32J, and the rigidity of magnetic core body 32J and the core section can be secured. In vibration actuator 10R, since magnetic yoke 80J is used as the movable part, the weight of the movable part is reduced. In this case, the tactile sensation to be applied by driving vibration actuator 10R can be adjusted by using a connection target on the magnetic yoke 80J side as the weight of the movable part or adjusting the spring constant.

### (Embodiment 17)

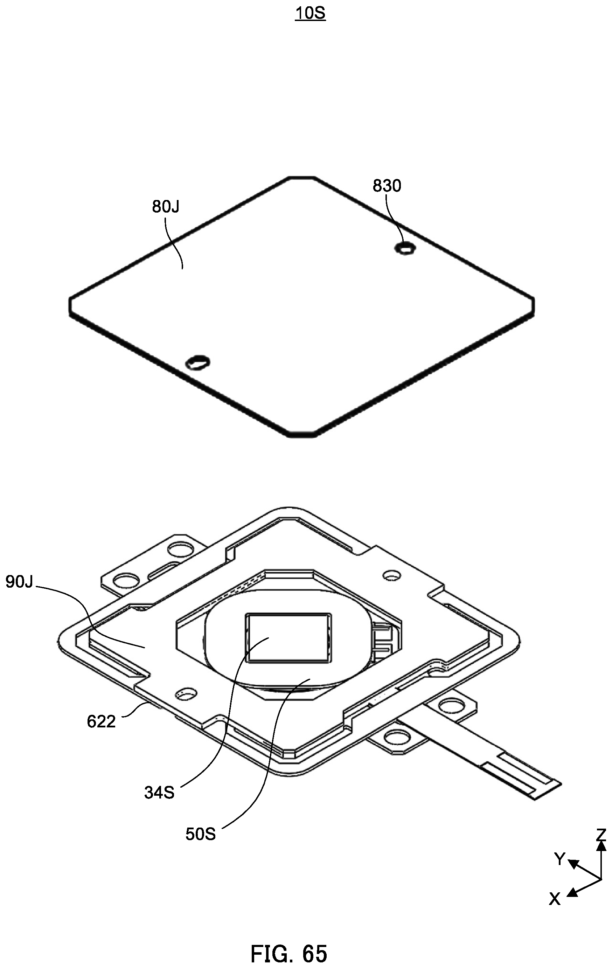

FIG. 65 is an external perspective view of a vibration actuator according to Embodiment 17 of the present invention. In the vibration actuator, the shape of the coil and the magnetic pole core may be any shape in the configuration of vibration actuator 10J. Vibration actuator 10S shown in FIG. 65 is different from vibration actuator 10J in the shapes of magnetic pole core 34S and coil 50S.

Vibration actuator 10S includes a plate-shaped magnetic core (also referred to as core section 30J and as the second planar body, and including magnetic core body 32J), an elastic supporting part that connects the magnetic core and a magnetic member, and the magnetic member (the first planar body, magnetic yoke) having a lower surface facing the core from above.

As shown in vibration actuator 10S, the shapes of magnetic pole core 34S and coil 50S are rectangular. Since magnetic pole core 34S and coil 50S are rectangular, positioning is easier and assembly is easier by using corners compared to a circle, and thus the assemblability can be improved. In addition, since coil 50S is rectangular, an area facing the magnetic member (magnetic yoke) or the magnetic core that is a target to attract can be widened, and a more suitable magnetic circuit can be realized. Note that coil 50S (the same applies to the coil in all embodiments) may be a round wire or a flat rectangular wire.

### (Variation of Electromagnet Section)

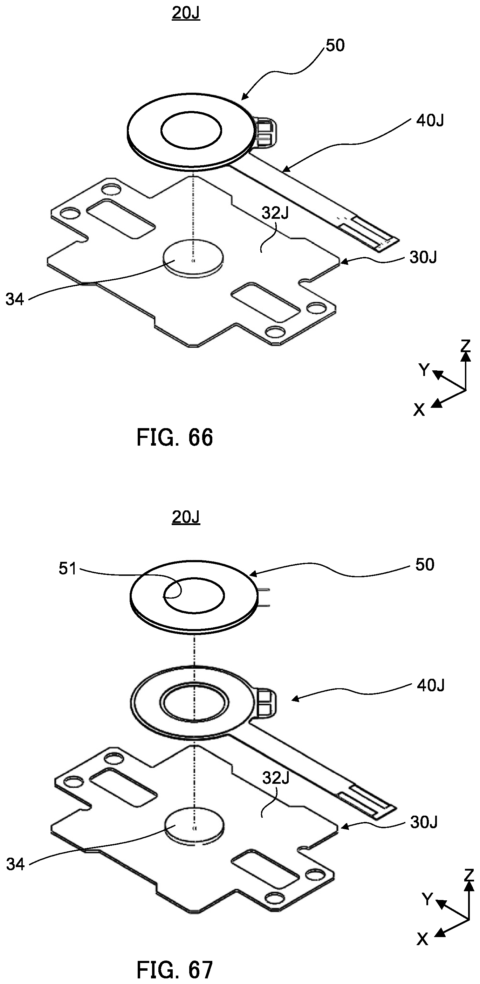

In electromagnet section 20J of vibration actuator 10J and the like, as shown in FIG. 66, electromagnet section 20J is formed by attaching magnetic pole portion 34 to magnetic core body 32J and then attaching coil 50 to magnetic core body 32J in a state of being attached to board section 40J, which is an FPC. At this time, board section 40J is attached to magnetic core body 32J such that coil 50 is located around magnetic pole portion 34.

In addition, as shown in FIG. 67, magnetic pole portion 34 may be attached to magnetic core body 32J, board section 40J may be attached to magnetic core body 32J, and then coil 50 may be attached to board body 42 of board section 40J. Note that magnetic pole portion 34 may be attached to magnetic core body 32J after board section 40J is attached to magnetic core body 32J.

The height of coil 50 when assembled in this way may be either recessed or protruding with respect to the upper surface of magnetic pole portion 34. The height of coil 50 is set depending on a contact portion of the opposed magnetic yoke (for example, magnetic yoke 80J) during driving of the movable part or during a reliability test such as a shock durability test. Examples of combination of the contact possible locations include: 1) the upper surface of magnetic pole portion 34 and the lower surface of magnetic yoke 80J, 2) the opposing surfaces of coil 50 and the magnetic yoke, and 3) the opposing surfaces of the spacer or the weight and the magnetic core body. In addition, when the gap is equal to or larger than the required movable range in 1) to 3), the examples of combination include 4) the opposing surfaces of the elastic supporting part and the magnetic yoke, and 5) the opposing surfaces of the elastic supporting part and the fixed part.

### (Board Section 40J)

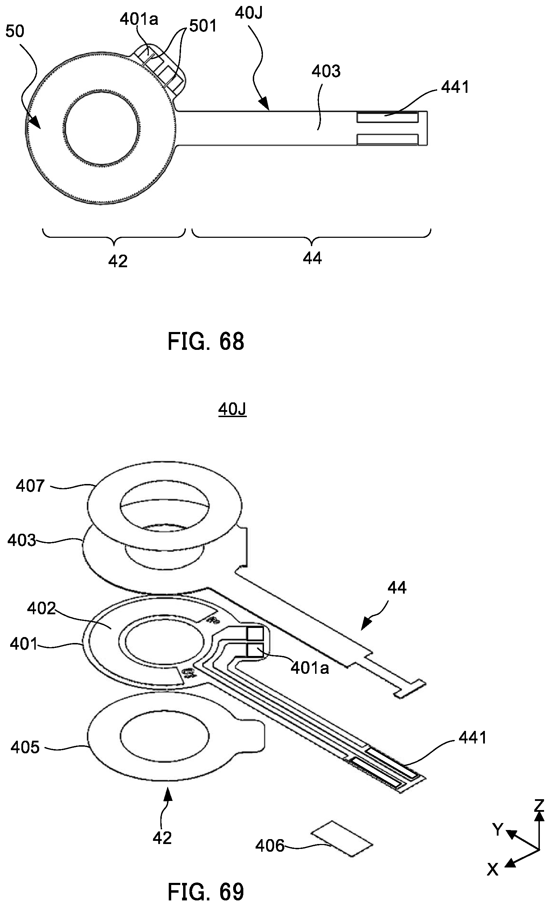

FIG. 68 is a plan view of a board section to which coil 50 is attached, and FIG. 69 is a diagram showing an example of the configuration of the board section shown in FIG. 68.

The board section (particularly, board section 40J) in the vibration actuator of the present embodiment has a coil protection function and a coil interconnection function with respect to coil 50 to be attached, as shown in FIG. 68.

Board section 40J includes a plurality of layers 401 to 404 to be stacked, as shown in FIG. 69. Circular board body 42 and extending portion 44 extending from board body 42 are formed by layers 401 to 404.

Board section 40J is formed by providing insulating layer 403 to be superimposed on interconnection layer 401, and attaching adhesive layers 405 and 407 to the front and back surfaces of the annular board body 42 portion in the superimposed layers, respectively. Adhesive layers 405 and 407 are formed to correspond to board body 42 and have an annular shape. Adhesive layers 405 and 407 are formed of, for example, a layer formed of a double-sided tape or an adhesive, and thinning is thus achieved. In addition, adhesive layer 406 is used to fix extending portion 44 to the magnetic core body, magnetic yoke, or the like.

Interconnection layer 401 includes an interconnection section formed by plating on a flexible sheet. In the interconnection section of interconnection layer 401, plate-shaped connection portion 401a having conductivity, such as a copper foil, connected to terminal 501 of coil 50, and land 441 connected to a connection target are mounted.

In interconnection layer 401, planar heat dissipation section 402 is provided to be located on the back surface of coil 50 attached via insulating layer 403. Heat dissipation section 402 is formed of a material having a high thermal conductivity, and is formed of, for example, a copper foil.

Heat dissipation section 402 is formed to correspond to the coil shape, and is formed in, for example, an arc shape. Since heat dissipation section 402 is formed to correspond to the coil shape, the rigidity of interconnection layer 401 and the rigidity of board section 40J itself can be reinforced. In addition, heat dissipation section 402 is provided on the back surface side of the interconnection layer and is provided to be exposed on the magnetic core body 32 side. Thus, heat dissipation section 402 can come into contact with magnetic core body 32J and can more effectively dissipate heat.

### (Variation)

For example, when one of the magnetic core body and the magnetic yoke is used as the movable part, the movable region may be appropriately provided between the magnetic core body and the magnetic yoke via another member such as the spacer, thereby widening the internal passage, which is the air vent section.

The embodiments of the present invention have been described above. The above description is an example of a suitable embodiment of the present invention, and the scope of the present invention is not limited thereto. That is, the configuration of the device and the shape of each part are merely an example, and it is obvious that various modifications and additions to these examples are possible within the scope of the present invention.

The disclosures of Japanese Patent Application No. 2023-184892 filed on October 27, 2023, and Japanese Patent Application No. 2024-096915 filed on June 14, 2024, including the specifications, drawings, and abstracts, are incorporated herein by reference in their entirety.

### Industrial Applicability

The vibration actuator and the contact-type input device according to the present invention have effects of being easy to assemble and being able to be disposed in a space-saving manner while being suitably vibrated, and are useful for use in, for example, a PCB, a trackpad, an operation panel, and the like.

### Reference Signs List

10, 10A, 10B, 10C, 10D, 10E, 10F, 10G, 10H, 10J, 10K, 10L, 10M, 10N, 10P, 10Q, 10R, 10S Vibration actuator
11J, 11L Communication hole
14 Strain detection section (strain detection sensor)
16 Capacitance detection section (detection section, proximity sensor)
20, 20A, 20B, 20C, 20D, 20G, 20H, 20J Electromagnet section
30, 30A, 30C, 30D, 30G, 30H, 30J, 30M Core section (magnetic core)
32, 32A, 32C, 32D, 32G, 32H, 32J, 32M Magnetic core body
34, 34A, 34C, 34G, 34H Magnetic pole portion (magnetic protruding portion)
34S Magnetic pole core
36 Outer magnetic pole portion (annular protruding portion)
38 External weight (weight)
39, 83 Communication hole
40, 40A, 40C, 40D, 40J, 40K Board section
42, 42A, 42C, 42D Board body (insulation section)
43, 43C Opening portion
44, 44A, 44C, 44D Extending portion
50, 50A, 50C, 50D, 50S Coil
51, 61 Opening portion
60, 60B, 60D, 60J, 60L, 60M, 60N, 600, 600N Elastic supporting part
62, 64 Side portion
65 Positioning portion
66, 68 Elastic arm portion
70, 70B, 70D, 70F, 70G, 70H, 70J, 70K, 70L Magnetic body
80, 80D, 80F, 80H, 80J, 80K, 80L, 80M, 80Q Magnetic yoke (magnetic member)
82 Lower surface
84 Yoke connecting portion
86 Yoke main body
90, 90B, 90D, 90H, 90J, 90K, 90M, 90R Spacer
91 Frame-shaped main body
92, 92D, 92J Spacer joint portion
96, 98 Spacer piece
100, 100F, 100G, 100H, 100J, 100M Air vent section
110, 110G, 110H Venting adjustment portion
112, 112H Vent portion
114, 114H Airflow bending portion
116, 116H Internal passage
320, 342 Through-hole
322, 322D Cutout portion
324, 324A, 324D, 324J Connection fixing portion
326 Slit
328 Fixing hole
350 Window portion
401 Interconnection layer
402 Heat dissipation section
403 Insulating layer
441 Land
500, 500L Vibration presentation device (contact-type input device)
510, 510P Pad body
520 Frame portion
530, 530J Bottom portion
540 Opening portion
602 Central portion
604 Both end portions
622, 622D Yoke-side connecting portion
642, 642D Core-side connecting portion
661 Elastic deformation portion
810 Top surface portion
830, 930 Through-hole
832 Central through-hole
901 First spacer
902 Second spacer

## Claims

1. A vibration actuator, comprising:
an electromagnet including a flat annular coil stacked on a plate surface of a plate-shaped magnetic core;
a magnetic member having a lower surface facing the flat annular coil from above;
a spacer disposed on the lower surface outside the flat annular coil, and configured to separate the magnetic member from the electromagnet in an up-down direction; and
an elastic supporting part disposed outside the flat annular coil and configured to connect the plate-shaped magnetic core to the spacer, wherein
one of the magnetic member or the electromagnet is displaced to vibrate so as to approach the other by a magnetic force generated by energization of the flat annular coil.

2. The vibration actuator according to claim 1, wherein
the plate-shaped magnetic core includes a magnetic protruding portion surrounded by the flat annular coil.

3. The vibration actuator according to claim 1, wherein
the plate-shaped magnetic core includes a magnetic annular protruding portion surrounding the flat annular coil at an outer peripheral side of the flat annular coil.

4. The vibration actuator according to claim 1, wherein
the elastic supporting part is a frame-shaped body surrounding the plate-shaped magnetic core, is connected to the plate-shaped magnetic core by a plurality of core-side connecting portions protruding inward from portions of the frame-shaped body spaced apart from each other at equal intervals, and is connected to the spacer at other portions spaced apart from the plurality of core-side connecting portions at equal intervals.

5. The vibration actuator according to claim 4, wherein
the elastic supporting part is a rectangular frame-shaped body, includes the plurality of core-side connecting portions provided on one pair of opposite sides, and is connected to the spacer at the other pair of opposite sides.

6. The vibration actuator according to claim 1, wherein
the electromagnet, the magnetic member, the spacer, and the elastic supporting part are flat plate-shaped.

7. The vibration actuator according to claim 1, wherein
the plate-shaped magnetic core, the elastic supporting part, the spacer, and the magnetic member are disposed in a stacked manner and are each formed in a rectangular shape.

8. The vibration actuator according to claim 1, wherein
the spacer is formed of a high specific gravity material.

9. The vibration actuator according to claim 1, wherein
one or both of the elastic supporting part and the spacer are composed of a plurality of divided bodies.

10. The vibration actuator according to claim 1, wherein
a film-shaped insulation section is provided between the flat annular coil and the plate-shaped magnetic core.

11. The vibration actuator according to claim 10, wherein
the film-shaped insulation section includes an interconnection section connected to the flat annular coil.

12. The vibration actuator according to claim 1, wherein
the plate-shaped magnetic core includes a weight at an outer peripheral side of the flat annular coil.

13. The vibration actuator according to claim 1, wherein
a detection section configured to detect a length between the plate-shaped magnetic core and the magnetic member or the spacer is provided between the plate-shaped magnetic core and the magnetic member or the spacer.

14. The vibration actuator according to claim 1, wherein
the elastic supporting part is a leaf spring, and includes a strain detection section configured to detect a strain of a spring.

15. The vibration actuator according to claim 1, wherein
the magnetic member and the electromagnet close a space between the magnetic member and the electromagnet in the up-down direction and include an air vent section that forms an airflow in a direction along the plate surface in the space when the magnetic member and the electromagnet approach each other.

16. The vibration actuator according to claim 15, wherein
the air vent section causes the airflow to flow from an outer peripheral portion of the magnetic member and the electromagnet to an outside.

17. The vibration actuator according to claim 15, wherein
a communication hole that communicates with the outside is provided in any of central portions of the magnetic member and the flat annular coil.

18. The vibration actuator according to claim 15, wherein
the air vent section includes a venting adjustment portion configured to adjust the airflow by a gap between the spacer and an outer peripheral portion of the plate-shaped magnetic core approaching the spacer in the up-down direction.

19. The vibration actuator according to claim 15, wherein
the spacer is provided to protrude from the lower surface of the magnetic member and to have a predetermined width in a direction orthogonal to the approaching direction.

20. The vibration actuator according to claim 18, wherein
the spacer is disposed to surround the flat annular coil over an entire circumference at an outer periphery of the flat annular coil and constitutes the venting adjustment portion together with the outer peripheral portion.

21. The vibration actuator according to claim 15, wherein
the air vent section is shaped to bend, in the up-down direction, the airflow flowing along the plate surface partway.

22. The vibration actuator according to claim 21, wherein
a side surface of the spacer and a side surface of the flat annular coil constitute an airflow bending portion that bends the airflow in the air vent section.

23. The vibration actuator according to claim 18, wherein
a gap dimension between the spacer and the plate-shaped magnetic core in the venting adjustment portion is smaller than a gap dimension between the plate-shaped magnetic core and the magnetic member.

24. A contact-type input device, comprising:
the vibration actuator according to any one of claims 1 to 23 that is disposed on a back surface of an operation surface and is driven in response to an operation on the operation surface.

25. The contact-type input device according to claim 24, wherein
in the vibration actuator, any one of the plate-shaped magnetic core or the magnetic member is disposed on the back surface of the operation surface.
